(19) Europäisches Patentamt
European Patent Office
Office européen des brevets

(11) EP 4 703 397 A1

(12) **EUROPEAN PATENT APPLICATION**
published in accordance with Art. 153(4) EPC

(43) Date of publication:
**04.03.2026 Bulletin 2026/10**

(21) Application number: **24797195.5**

(22) Date of filing: **26.04.2024**

(51) International Patent Classification (IPC):
***C08F 236/10*** *(2006.01)*

(52) Cooperative Patent Classification (CPC):
**C08F 236/10**

(86) International application number:
**PCT/JP2024/016507**

(87) International publication number:
**WO 2024/225452 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.04.2023 JP 2023072878**

(71) Applicant: **ASAHI KASEI KABUSHIKI KAISHA**
**Tokyo 100-0006 (JP)**

(72) Inventors:
- **HASHIZUME, Yuta**
**Tokyo 100-0006 (JP)**
- **USHIO, Takaaki**
**Tokyo 100-0006 (JP)**
- **DALL'ABACO, Davide**
**20126 Milan (IT)**
- **RUBINO, Lucia Rita**
**20126 Milan (IT)**

(74) Representative: **Strehl & Partner mbB**
**Maximilianstrasse 54**
**80538 München (DE)**

# (54) CONJUGATED DIENE POLYMER AND METHOD FOR PRODUCING CONJUGATED DIENE POLYMER

(57) The present invention provides a conjugated diene-based polymer containing two or more polymer segments, wherein an absolute value of a difference ($|X_1 - X_2|$) between an amount of bound aromatic vinyl monomer unit $X_1$ (% by mass) in a first polymer segment and an amount of bound aromatic vinyl monomer unit $X_2$ (% by mass) in a second polymer segment is 5% by mass or less, a difference ($Y_2 - Y_1$) between the amount of vinyl bond $Y_1$ (mol%) in bound conjugated diene of the first polymer segment and the amount of vinyl bond $Y_2$ (mol%) in bound conjugated diene of the second polymer segment is 15 mol% or more and 50 mol% or less, and an estimated glass transition temperature (estimated Tg) of the conjugated diene-based polymer is -72°C or more and -40°C or less.

EP 4 703 397 A1

## Description

### Technical Field

The present invention relates to a conjugated diene-based polymer, and a method for producing a conjugated diene-based polymer.

### Background Art

One of basic functions required of a tire tread of a vehicle is a braking property on a road. Owing to the climate change in these years, the road surface may get wet due to a sudden rainfall, or the road surface may be changed to an ice and snow surface due to a sudden snowfall. Under these environments, there is a demand for a tire having an excellent braking property not only on a dry road surface but also on an ice and snow road surface or wet road surface. Since a tire satisfying such a requirement need not be exchanged according to the seasons, consumer needs have been further increasing.

A wet grip performance that is a property required of a tread rubber for exhibiting a braking property on a wet road surface in general, and a winter performance that is a property required of a rubber for exhibiting a braking property on an ice and snow road surface are properties contradictory to each other. Specifically, improvement of one of these properties tends to cause deterioration of the other property. Therefore, a tire tread rubber is required to solve the contradiction of these properties.

Besides, in accordance with the increasing demands for fuel efficiency regulations for vehicles, there are increasing demands for use of resins in vehicle members and thickness reduction of tires for the purpose of reducing the vehicle weight. For reducing the thickness of a tire, it is necessary to reduce the thickness of a tread portion that occupies a high ratio in the entire tire, and comes into contact with the road surface, and therefore, there is a demand for a rubber material further excellent in abrasion resistance than ever.

On the other hand, from the viewpoint of the durability of a tire, a rubber material is required also to have a tensile property. When a plurality of types of rubbers is used for improving both the wet grip performance and the winter performance as described above, if the affinity among the plural types of rubbers is low, the mechanical strength of the resultant rubber material tends to be deteriorated, and therefore, there is a demand for a rubber material capable of satisfying these properties.

As a rubber material that meets the above-described requirements for improving various properties, for example, a rubber composition containing a rubber-like polymer, and a reinforcing filler such as carbon black or silica is known.

In such a rubber composition, attempts have been made for improving the various properties such as the abrasion resistance by improving the dispersibility of the filler in the rubber composition through introduction, to a molecular end portion of a rubber-like polymer with high motility, of a functional group having affinity or reactivity with the filler.

For example, Patent Documents 1 to 3 disclose rubber compositions each containing a modified conjugated diene-based polymer, which is obtained by reacting an alkoxysilane having an amino group with an active end of a conjugated diene-based polymer, and silica. Patent Document 4 discloses a rubber composition containing a low-vinyl modified conjugated diene-based polymer. Patent Document 5 discloses a rubber composition containing a conjugated diene-based polymer composition containing a plurality of types of modified conjugated diene-based polymers.

### List of Prior Art Documents

### Patent Document

Patent Document 1: Japanese Patent Laid-Open No. 2005-290355

Patent Document 2: Japanese Patent Laid-Open No. 11-189616

Patent Document 3: Japanese Patent Laid-Open No. 2003-171418

Patent Document 4: Japanese Patent No. 6512240

Patent Document 5: Japanese Patent Laid-Open No. 2021-143324

## Summary of Invention

### Problems to be Solved by Invention

Conventionally known rubber compositions including the rubber compositions disclosed in Patent Documents 1 to 4 have, however, a problem that there still is a room of improvement in the physical properties. For example, a rubber composition containing a conventional conjugated diene-based polymer has a problem that when the wet grip performance is improved, the winter performance is deteriorated to deteriorate the performance on an ice and snow road surface, and thus it is difficult to be excellent in both of these performances. Besides, when such a rubber composition is vulcanized particularly to obtain a vulcanizate containing an inorganic filler such as silica, there arise problems that the dispersibility of the silica is reduced, flexibility is reduced, the performance on an ice and snow road surface is deteriorated, and in addition, the abrasion resistance is insufficient.

Besides, as a result of detailed study of the rubber composition described in Patent Document 5, it was found to be suitable for design of a tire requiring the wet grip performance, such as a summer tire, but was found to have a problem that there still is a room of improvement in the winter performance for use in a lowertemperature environment such as all-season use.

Therefore, an object of the present invention is to provide a conjugate diene-based polymer from which a rubber composition excellent in a wet grip performance, a winter performance, abrasion resistance, and a tensile property can be obtained, and a method for producing a conjugated diene-based polymer.

### Means for Solving Problems

As a result of earnest studies made by the present inventors for solving the above-described problems, the following has been found: When an absolute value of a difference in the amount of bound aromatic vinyl monomer units, and a difference in the amount of vinyl bond among a plurality of polymer segments contained in a conjugated diene-based polymer are within prescribed numerical ranges, and a glass transition temperature estimated based on a microstructure of the conjugated diene-based polymer (estimated Tg) is within a prescribed numerical range, a rubber composition that is excellent in both the wet grip performance and the winter performance, and is also excellent in abrasion resistance and a tensile property can be obtained. Thus, the present invention has been accomplished.

Specifically, the present invention provides the following.

[1] A conjugated diene-based polymer containing two or more polymer segments, wherein an absolute value of a difference ($|X_1 - X_2|$) between an amount of bound aromatic vinyl monomer unit $X_1$ (% by mass) in a first polymer segment and an amount of bound aromatic vinyl monomer unit $X_2$ (% by mass) in a second polymer segment is 5% by mass or less, a difference ($Y_2 - Y_1$) between an amount of vinyl bond $Y_1$ (mol%) in bound conjugated diene of the first polymer segment and an amount of vinyl bond $Y_2$ (mol%) in bound conjugated diene of the second polymer segment is 15 mol% or more and 50 mol% or less, and an estimated glass transition temperature (estimated Tg) of the conjugated diene-based polymer is -72°C or more and -40°C or less.

[2] The conjugated diene-based polymer according to [1], wherein a ratio Mw/Mn between a weight average molecular weight Mw and a number average molecular weight Mn is 1.7 or more.

[3] The conjugated diene-based polymer according to [1] or [2], wherein a ratio ($R = r_1/r_2$) of a mass ratio ($r_1$) of the first polymer segment to a mass ratio ($r_2$) of the second polymer segment is 0.25 to 4.

[4] The conjugated diene-based polymer according to any one of [1] to [3], having a weight average molecular weight Mw of 350,000 or more and 1,350,000 or less.

[5] The conjugated diene-based polymer according to any one of [1] to [4], having a modifying group containing nitrogen, and having a modification ratio of 60% or more.

[6] A method for producing the conjugated diene-based polymer according to any one of [1] to [5], including: a polymerization step (P1) of forming the first polymer segment with two or more continuous reactors; and a polymerization step (P2) of forming the second polymer segment at an end of the first polymer segment obtained in the step (P1), wherein a polar material is additionally added in the polymerization step (P2).

[7] The method for producing the conjugated diene-based polymer according to [6], wherein a conjugated diene compound is additionally added in the polymerization step (P2).

[8] The method for producing the conjugated diene-based polymer according to [6] or [7], including, after the polymerization step (P2), a coupling step of reacting the conjugated diene-based polymer with a coupling agent having a nitrogen atom-containing group.

[9] The method for producing the conjugated diene-based polymer according to [7] or [8], wherein an amount of the conjugated diene compound additionally added in the polymerization step (P2) is 15% by mass or more with respect to a total amount of the conjugated diene compound added.

## Advantages of Invention

The present invention can provide a conjugated diene-based polymer from which a rubber composition exhibiting excellent abrasion resistance and tensile property, and exhibiting excellent wet grip performance and winter performance can be obtained.

## Mode for Carrying Out Invention

Now, an embodiment for practicing the present invention (hereinafter referred to as the "present embodiment") will be described in detail.
It is noted that the following present embodiment is merely an example for describing the present invention, and does not intend to limit the present invention to the following contents. The present invention can be practiced with various modifications appropriately made within the scope thereof.

[Conjugated Diene-based Polymer]

A conjugated diene-based polymer of the present embodiment contains a conjugated diene monomer unit, and preferably contains a conjugated diene monomer unit and an aromatic vinyl monomer unit.
The conjugated diene-based polymer of the present embodiment is a conjugated diene-based polymer having two or more polymer segments, and an absolute value of a difference ($|X_1 - X_2|$) between the amount of bound aromatic vinyl monomer unit $X_1$ (% by mass) in a first polymer segment and the amount of bound aromatic vinyl monomer unit $X_2$ (% by mass) in a second polymer segment is 5% by mass or less.
Besides, a difference ($Y_2 - Y_1$) between the amount of vinyl bond $Y_1$ (mol%) in bound conjugated diene of the first polymer segment and the amount of vinyl bond $Y_2$ (mol%) in bound conjugated diene of the second polymer segment is 15 mol% or more and 50 mol% or less.
In addition, it is a conjugated diene-based polymer having an estimated glass transition temperature (estimated Tg) calculated based on a microstructure of the conjugated diene-based polymer of -72°C or more and -40°C or less.
The above-described configurations provide a conjugated diene-based polymer from which a rubber composition exhibiting excellent abrasion resistance and tensile property, and exhibiting excellent wet grip performance and winter performance can be obtained.

(Conjugated Diene Compound)

Examples of a conjugated diene compound forming the conjugated diene monomer unit include, but are not limited to, 1,3-butadiene, isoprene, 2,3-dimethyl-1,3-butadiene, 1,3-pentadiene, 3-methyl-1,3-pentadiene, 1,3-hexadiene, and 1,3-heptadiene. Among these, 1,3-butadiene, and isoprene are preferred from the viewpoint of industrial availability. One of these may be singly used, or two or more of these may be used together.
The conjugated diene compound is preferably 1,3-butadiene or isoprene, and more preferably 1,3-butadiene from the viewpoints of availability, and structure controllability in polymer synthesis.

(Aromatic Vinyl Compound)

Examples of an aromatic vinyl compound forming the aromatic vinyl monomer unit include, but are not limited to, styrene, p-methylstyrene, α-methylstyrene, vinylethylbenzene, vinylxylene, vinylnaphthalene, and diphenylethylene. Among these, styrene is preferred from the viewpoint of industrial availability. One of these may be singly used, or two or more of these may be used together.
The aromatic vinyl compound is preferably styrene from the viewpoints of availability, and structure controllability in polymer synthesis.

(Amount of Bound Aromatic Vinyl Monomer Unit X)

The amount of bound aromatic vinyl monomer unit X (% by mass) herein refers to a value of a mass fraction (% by mass) of a bound aromatic vinyl monomer unit in the total mass of the conjugated diene-based polymer or a polymer segment described below.

Here, the amount of bound aromatic vinyl monomer unit can be calculated by measuring ultraviolet absorption of a phenyl group contained in a portion derived from an aromatic vinyl compound of the conjugated diene-based polymer (hereinafter, referred to as the "bound aromatic vinyl monomer unit"). When the conjugated diene-based polymer contains the bound aromatic vinyl monomer unit, and a bound conjugated diene monomer unit, the amount of the bound conjugated diene monomer unit can be also obtained based on the amount of the bound aromatic vinyl monomer unit obtained as described above. Specifically, the amount can be measured by a method described in examples below.

(Amount of Vinyl Bond Y in Bound Conjugated Diene)

The amount of vinyl bond Y (mol%) in bound conjugated diene herein refers to a value of a mole fraction (mol%) of a 1,2-bond unit in a conjugated diene-derived polymer unit contained in the conjugated diene-based polymer or the polymer segment described below.

When the conjugated diene-based polymer of the present embodiment is a copolymer of butadiene and styrene, the amount of vinyl bond in bound conjugated diene can be obtained by obtaining the amount of vinyl bond (amount of 1,2-bond) in bound butadiene by Hampton method (R. R. Hampton, Analytical Chemistry, 21, 923 (1949)). Specifically, the amount can be measured by a method described in the examples below.

(Microstructure)

The microstructure herein refers to a composition of a polymer, including the type of isomer, in the conjugated diene-based polymer containing the aromatic vinyl compound and the conjugated diene compound, or in the polymer segment described below.

In the conjugated diene-based polymer of the present embodiment, the mass of a copolymer consisting of styrene and butadiene is preferably 70% by mass or more, more preferably 80% by mass or more, and further preferably 90% by mass or more based on the mass of the entire conjugated diene-based polymer.

(Content of Bound Aromatic Vinyl Monomer Unit Block)

The conjugated diene-based polymer of the present embodiment preferably contains a few or no blocks in which 4 or more bound aromatic vinyl monomer units are chained (hereinafter sometimes referred to as the bound aromatic vinyl monomer unit block).

The conjugated diene-based polymer of the present embodiment contains a few or no bound aromatic vinyl monomer unit blocks, and hence tends to be unlikely to have two or more glass transition temperatures (Tg).

A content of the bound aromatic vinyl monomer unit block in the conjugated diene-based polymer can be measured, when the conjugated diene-based polymer is a butadiene-styrene copolymer, by employing a known method in which the conjugated diene-based polymer is decomposed by Kolthoff method (a method described by I. M. KOLTHOFF, et al., J. Polym. Sci. 1, 429 (1946)) to analyze the amount of polystyrene insoluble in methanol. The content of the bound aromatic vinyl monomer unit block measured by such a method is preferably 1.0 % by mass or less, more preferably 0.1% by mass or less, and further preferably 0% by mass based on the total amount of the conjugated diene-based polymer. When the bound aromatic vinyl monomer unit block is not contained in a conjugated diene copolymer, and in the polymer segment described below, the conjugated diene-based polymer tends to exhibit a consecutive property against temperature change. As a result, a vulcanizate using the conjugated diene-based polymer consecutively changes in a wide temperature range, and tends to be excellent in tensile strength.

(Method for Estimating Glass Transition Temperature of Polymer): Estimated Glass Transition Temperature (Estimated Tg)

The glass transition temperature of the conjugated diene-based polymer of the present embodiment can be estimated by using Gordon Taylor formula expanded to two or more component series of the following expression (1) (Gordon, M., Taylor, J. S. J., Appl. Chem. 1952, 2, 493). This value is referred to as the estimated glass transition temperature.

$$\text{Estimated } Tg = \frac{\sum_i \left( \frac{\Delta\alpha_i w_i Tg_i}{\rho_i} \right)}{\sum_i \left( \frac{\Delta\alpha_i w_i}{\rho_i} \right)} \quad \cdots (1)$$

In the expression (1), a subscript i of each variable indicates each component of the microstructure contained in the conjugated diene-based polymer, $\Delta\alpha_i$ denotes a difference in the thermal expansion coefficient of a homopolymer of the component i caused through glass transition, $w_i$ denotes a mass ratio of the component i in the conjugated diene-based polymer, $Tg_i$ denotes the glass transition temperature of the homopolymer of the component i, and $\rho_i$ denotes the density of the homopolymer of the component i. As these values, a literature value or a measured value can be used. For example, when the conjugated diene-based polymer contains styrene, and one of the components i is a styrene component, $\Delta\alpha_i$ can be $3.6 \times 10^{-4}$ $K^{-1}$ based on the thermal expansion coefficient of polystyrene (J. BRANDRUP et al., Polymer Handbook, 3rd edition, (U.S.A.), John Wiley & Sons, Inc., 1966, VI-75), $Tg_i$ can be 105.3°C based on the measured value of the glass transition temperature, and $\rho_i$ can be 1.02 g/cm$^3$ based on the measured value of the density.

For example, when the conjugated diene-based polymer is a butadiene-styrene copolymer, the estimated glass transition temperature (estimated Tg) can be calculated in accordance with the following expression (i) by using the amount of bound aromatic vinyl monomer unit $X_{all}$ (% by mass), the amount of vinyl bond $Y_{all}$ (mol%) in bound conjugated diene, and the thermal expansion coefficient ($\Delta a_i$), the glass transition temperature ($Tg_i$), and the density ($\rho_i$) of each of polystyrene (PS), poly-1,2-butadiene (1,2-PBd), and poly-1,4-butadiene (1,4-PBd):

$$Tg = \frac{\frac{\Delta a_{st} \times \frac{X_{all}}{100} \times Tg_{(PS)}}{\rho_{(PS)}} + \frac{\Delta a_{(1,4\,PBd)} \times \left(1-\frac{X_{all}}{100}\right) \times \left(1-\frac{Y_{all}}{100}\right) \times Tg_{(1,4PBd)} + \Delta a_{(1,2\,PBd)} \times \left(1-\frac{X_{all}}{100}\right) \times \left(\frac{Y_{all}}{100}\right) \times Tg_{(1,2PBd)}}{\rho_{(PBd)}}}{\frac{\Delta a_{st} \times \frac{X_{all}}{100}}{\rho_{(PS)}} + \frac{\Delta a_{(1,4\,PBd)} \times \left(1-\frac{X_{all}}{100}\right) \times \left(1-\frac{Y_{all}}{100}\right) + \Delta a_{(1,2\,PBd)} \times \left(1-\frac{X_{all}}{100}\right) \times \left(\frac{Y_{all}}{100}\right)}{\rho_{(PBd)}}}$$

$$= \frac{\frac{X_{all}}{100} \times 37{,}2 + \left(1-\frac{X_{all}}{100}\right) \times \left\{\left(1-\frac{Y_{all}}{100}\right) \times (-57.5) + \left(\frac{Y_{all}}{100}\right) \times (-5.38)\right\}}{\frac{X_{all}}{100} \times 0.36 + \left(1-\frac{X_{all}}{100}\right) \times \left\{\left(1-\frac{Y_{all}}{100}\right) \times (0.56) + \left(\frac{Y_{all}}{100}\right) \times (0.46)\right\}}$$

$$= \frac{-5750 + 94.7 \times X_{all} + 52.12 \times Y_{all} - 0.5212 \times X_{all} \times Y_{all}}{56 - 0.2 \times X_{all} - 0.1 \times Y_{all} + 0.001 \times X_{all} \times Y_{all}} \quad \cdots (i)$$

The influence, on the denominator of the expression (i), of a product of the amount of bound aromatic vinyl monomer unit $X_{all}$ (% by mass) and the amount of vinyl bond $Y_{all}$ (mol%) in bound conjugated diene is very small, and hence the expression can be approximated to the following expression (ii). Besides, the expression (ii) can be approximated to the following expression (iii).

$$Tg \fallingdotseq \frac{-5750 + 94.7 \times X_{all} + 52.12 \times Y_{all} - 0.5212 \times X_{all} \times Y_{all}}{56 - 0.2 \times X_{all} - 0.1 \times Y_{all}} \quad \cdots (ii)$$

$$Tg \fallingdotseq \frac{-5750 + 95 \times X_{all} + 52 \times Y_{all} - 0.52 \times X_{all} \times Y_{all}}{56 - 0.2 \times X_{all} - 0.1 \times Y_{all}} \quad \cdots (iii)$$

Specifically, when the conjugated diene-based polymer is a butadiene homopolymer, or a butadiene-styrene-based copolymer, the glass transition temperature (estimated Tg) of the conjugated diene-based polymer can be estimated in accordance with the expression (iii) based on values usually used in design.

As described above, a mass ratio among microstructure components can be obtained based on the microstructure such as the amount of bound aromatic vinyl monomer unit $X_{all}$ (% by mass) and the amount of vinyl bond $Y_{all}$ (mol%) in bound conjugated diene in the conjugated diene-based polymer of the present embodiment, and the glass transition temperature (estimated Tg) of the conjugated diene-based polymer can be calculated in accordance with the expression (1). In other words, the expression (1) is a standard indicating the change of the glass transition temperature of the conjugated diene-based polymer against the change of the amount of bound aromatic vinyl monomer unit $X_{all}$ (% by mass) and the amount of vinyl bond $Y_{all}$ (mol%) in bound conjugated diene.

When the value of the expression (1) is small, the grass transition temperature (Tg) of the conjugated diene-based polymer of the present embodiment is low, and when the value is large, the glass transition temperature (Tg) is high.
For example, when the expression (1) is -70, the glass transition temperature of the conjugated diene-based polymer is estimated as -70°C, and when it is -40, the glass transition temperature is estimated as -40°C.
In this manner, the value of the expression (1) obtained based on the microstructure of the polymer is an index of the glass transition temperature of the conjugated diene-based polymer in general. The present inventors have, however, found that when the relaxation of a conjugated diene-based polymer in the vicinity of a measured glass transition temperature occurs in a wide range of temperature, actual viscoelasticity of a vulcanizate thereof does not always accord with the viscoelasticity calculated based on the estimated glass transition temperature (estimated Tg) calculated by the expression (1) based on the microstructure. Specifically, when a difference in the value of the expression (1) between polymer segments described below is 33 or more, or the mass ratio of a polymer segment described below is within a numerical range of 0.67 to 1.5, discrepancy between the glass transition temperature estimated based on the expression (1) (estimated Tg) and a measured glass transition temperature (Tg) tends to be conspicuous. Therefore, it has been discovered that, from the viewpoint of controlling the performance of a vulcanizate affected by the glass transition temperature, it is more effective to adjust the estimated glass transition temperature (estimated Tg) calculated by the expression (1) based on the microstructure than to adjust the measured glass transition temperature of the conjugated diene-based polymer to a specific value. This seems to be because small energy change is picked up in DSC (differential scanning calorimetry), and hence the entire glass transition temperature is affected by the start of the relaxation of a low Tg portion of the conjugated diene-based polymer, resulting in decreasing the measured glass transition temperature to be lower than the estimated glass transition temperature. For example, it has been experimentally confirmed that in conjugated diene-based polymers having the same microstructure as a whole, the glass transition temperature measured by DSC may be different by about 2 to 5°C depending on a difference in the microstructure of each polymer segment.
When the glass transition temperature of the conjugated diene-based polymer of the present embodiment estimated in accordance with the expression (1) (estimated Tg) is set to satisfy the numerical range of -72°C or more and -40°C or less, the glass transition temperature obtained in the form of a vulcanizate tends to be optimal, and balance among the wet grip performance, the winter performance, and the abrasion resistance tends to be excellent.
In the conjugated diene-based polymer of the present embodiment, the lower limit of the expression (1) is -72 or more, preferably -70 or more, and more preferably -68 or more.
When the lower limit of the expression (1) is within this range, a vulcanizate of the conjugated diene-based polymer of the present embodiment can be improved in the wet grip performance.
The upper limit of the expression (1) is -40 or less, preferably -44 or less, and more preferably -50 or less.
When the upper limit of the expression (1) is within this range, a vulcanizate of the conjugated diene-based polymer of the present embodiment can be improved in the winter performance and abrasion resistance.
The expression (1) can be controlled to fall in the above-described numerical range by adjusting the microstructure of the conjugated diene-based polymer. For example, when the conjugated diene-based polymer of the present embodiment is a butadiene-styrene-based polymer, the estimated Tg can be controlled to fall in the above-described numerical range by adjusting the amount of bound styrene $X_{all}$ (% by mass) of the conjugated diene-based polymer, and the amount of vinyl bond $Y_{all}$ (mol%) in butadiene in accordance with the expression (iii).

(Polymer Segment)

The conjugated diene-based polymer of the present embodiment has two or more polymer segments.
The polymer segment refers to a part of the conjugated diene-based polymer containing a conjugated diene monomer unit and an aromatic vinyl monomer unit, or containing a conjugated diene monomer unit. The polymer segment preferably contains a conjugated diene monomer unit and an aromatic vinyl monomer unit.
Besides, in the conjugated diene-based polymer of the present embodiment, the polymer segment preferably contains a few or no blocks in which 4 or more bound aromatic vinyl monomer units are chained.
The plurality of polymer segments contained in the conjugated diene-based polymer of the present embodiment have mutually different microstructures. In the respective polymer segments, for example, the amount of the bound aromatic vinyl monomer unit, and the amount of vinyl bond in bound conjugated diene may be different, and the respective polymer segments can be distinguished by a method described in the examples below.
The conjugated diene-based polymer of the present embodiment has two or more polymer segments. Since the polymer has two or more polymer segments, glass transition is caused in a plurality of temperature regions of one conjugated diene-based polymer. When the microstructure of the conjugated diene-based polymer of the present embodiment is set to an appropriate range, and the difference, between the respective polymer segments, in the estimated glass transition temperature calculated by assigning, to the expression (1), the amounts of bound aromatic vinyl monomer unit of the respective polymer segments ($X_1$ and $X_2$) and the amounts of vinyl bond ($Y_1$ and $Y_2$) is controlled to fall in a prescribed range, a vulcanizate thereof tends to exhibit excellent wet grip performance and winter performance.

Out of the two or more polymer segments contained in the conjugated diene-based polymer of the present embodiment, a polymer segment having an estimated glass transition temperature calculated in accordance with the expression (1) lower by 5°C or more than an average estimated glass transition temperature of the conjugated diene-based polymer of the present embodiment is defined as a "first polymer segment", and a polymer segment having the estimated glass transition temperature higher by 5°C or more is defined as a "second polymer segment".

Each of the first polymer segment and the second polymer segment may contain a plurality of polymer segments, and from the viewpoint of manufacturability, preferably contains one polymer segment. A ratio of a total mass of the first polymer segment and the second polymer segment to the mass of the entire conjugated diene-based polymer is preferably 70% or more, more preferably 80% or more, and further preferably 90% or more from the viewpoint of the balance between the wet grip performance and the winter performance of a vulcanizate obtained using the conjugated diene-based polymer of the present embodiment.

A conventionally known continuously polymerized conjugated diene-based polymer contains one polymer segment having a uniform microstructure, and exhibits a sharp glass transition behavior in a narrow temperature range. In general, when the winter performance is regarded more significant, a conjugated diene-based polymer having a low glass transition temperature is used for obtaining sufficiently high flexibility in the vicinity of -30 to -10°C, but the glass transition does not occur and little energy absorption occurs in the vicinity of 0°C, and hence the wet grip performance tends to be inferior.

On the other hand, in the conjugated diene-based polymer of the present embodiment, the plural polymer segments respectively have different glass transition temperatures, and hence the glass transition behavior is gentle. Therefore, this polymer is sufficiently softened up to -30 to -10°C, and hence with exhibiting good winter performance, energy absorption in the vicinity of 0°C can be increased, and the polymer tends to be excellent also in the wet grip performance.

In the two polymer segments contained in the conjugated diene-based polymer of the present embodiment, as the difference in the glass transition temperature between the two polymer segments is larger, the glass transition behavior is gentler, and the above-described tendency becomes more conspicuous, and thus, both the winter performance and the wet grip performance tend to be excellent.

In the conjugated diene-based polymer of the present embodiment, in order to increase the difference in the glass transition temperature between the polymer segments, it is preferable to increase a difference in the amount of aromatic vinyl monomer unit and a difference in the amount of vinyl bond in bound conjugated diene between the first polymer segment and the second polymer segment.

On the other hand, when the difference in the amount of aromatic vinyl monomer unit between the two polymer segments is large, compatibility between the two polymer segments is deteriorated, and tensile strength obtained in the form of a vulcanizate tends to be deteriorated. From this point of view, in order to obtain a vulcanizate also excellent in tensile strength, it is effective to set the difference in the amount of aromatic vinyl monomer unit between the two polymer segments to an appropriate range, and to increase the difference in the amount of vinyl bond in bound conjugated diene.

The lower limit of each of the amount of aromatic vinyl monomer unit $X_1$ (% by mass) of the first polymer segment, and the amount of aromatic vinyl monomer unit $X_2$ (% by mass) of the second polymer segment is preferably 5% by mass or more, more preferably 7% by mass or more, and further preferably 9% by mass or more in each of the polymer segments. The upper limit is preferably 30% by mass or less, more preferably 25% by mass or less, and further preferably 23% by mass or less in each of the polymer segments.

The lower limit of the amount of vinyl bond $Y_1$ (mol%) in bound conjugated diene of the first polymer segment is preferably 14 mol% or more, more preferably 16 mol% or more, and further preferably 17 mol% or more. The upper limit is preferably 40 mol% or less, more preferably 35 mol% or less, further preferably 30 mol% or less, and still further preferably 23 mol% or less.

On the other hand, the lower limit of the amount of vinyl bond $Y_2$ (mol%) in bound conjugated diene of the second polymer segment is preferably 40 mol% or more, more preferably 45 mol% or more, further preferably 50 mol% or more, and still further preferably 55 mol% or more. The upper limit is preferably 65 mol% or less, more preferably 62 mol% or less, and further preferably 61 mol% or less.

Each of the amounts of vinyl bond $Y_1$ and $Y_2$ in bound conjugated diene of the polymer segments may fall in a range obtained by arbitrarily combining any of the upper limits and any of the lower limits described above.

In the conjugated diene-based polymer of the present embodiment, a difference ($Y_2 - Y_1$) between the amount of vinyl bond $Y_1$ (mol%) in bound conjugated diene of the first polymer segment and the amount of vinyl bond $Y_2$ (mol%) in bound conjugated diene of the second polymer segment is 15 mol% or more and 50 mol% or less, preferably 20 mol% or more and 45 mol% or less, and more preferably 25 mol% or more and 45 mol% or less.

When the ($Y_2 - Y_1$) is 15 mol% or more, a vulcanizate thereof tends to be excellent in the balance between the wet grip performance and the winter performance. On the other hand, when the ($Y_2 - Y_1$) is 50 mol% or less, phase separation of the conjugated diene-based polymer is suppressed, and a vulcanizate thereof tends to be excellent in tensile strength.

The value of the ($Y_2 - Y_1$) can be measured by a method described in the examples below, and can be controlled to

fall in the above-described numerical range by adjusting the amount of a polar material to be added in polymerization steps (P1 and P2) described below.

The absolute value of a difference ($|X_1 - X_2|$) between the amount of bound aromatic vinyl monomer unit $X_1$ (% by mass) in the first polymer segment and the amount of bound aromatic vinyl monomer unit $X_2$ (% by mass) in the second polymer segment of the conjugated diene-based polymer of the present embodiment is 5% by mass or less, preferably 3% by mass or less, and more preferably 2% by mass or less.

When the ($|X_1 - X_2|$) is 5% by mass or less, the distribution of the aromatic vinyl monomer unit becomes uniform, microphase separation of the conjugated diene-based polymer is suppressed, and a vulcanizate thereof tends to be more excellent in the tensile property.

The absolute value of the difference in the amount of bound aromatic vinyl monomer between the polymer segments can be measured by a method described in the examples below, and can be controlled to fall in the above-described numerical range by adjusting the amount of an aromatic vinyl monomer to be added in the polymerization steps for the respective polymer segments.

In the conjugated diene-based polymer of the present embodiment, in order that the second polymer segment has an estimated glass transition temperature higher by 5°C or more than an average estimated glass transition temperature of the conjugated diene-based polymer, it is basic design concept that the amount of vinyl bond $Y_2$ (mol%) of the second polymer segment is set to be higher than the amount of vinyl bond $Y_1$ (mol%) of the first polymer segment, and that there is no difference in the amount of bound aromatic vinyl monomer between the polymer segments.

In the present embodiment, the absolute value of the difference in the amount of bound aromatic vinyl monomer between the segments is 5% by mass or less with the intention of allowing a manufacturing error. Since the content of the aromatic vinyl monomer unit is also a factor affecting the estimated glass transition temperature, the polymer segments may be designed to have a difference in the amount of bound aromatic vinyl monomer unit, but when the difference in the bound aromatic vinyl monomer unit between the polymer segments is reduced, the distribution of the aromatic vinyl monomer unit can be made uniform as described above, and thus, a merit of suppressing the microphase separation can be expected.

The estimated glass transition temperature of each polymer segment can be calculated by using the expression (1) in the same manner as that of the conjugated diene-based polymer.

To the conjugated diene-based polymer of the present embodiment, a conjugated diene monomer unit may be added, before a coupling step, for increasing reactivity between the conjugated diene-based polymer and a coupling agent.

In the conjugated diene-based polymer of the present embodiment, the polymer segments may be mutually directly coupled, or may be coupled via a coupling agent.

(Ratio R of Mass Ratio of First Polymer Segment to Mass Ratio of Second Polymer Segment)

In the conjugated diene-based polymer of the present embodiment, the first and second polymer segments preferably have a prescribed mass ratio.

A mass ratio of each polymer segment refers to a mass ratio (r) of the polymer segment to the entire conjugated diene-based polymer.

The mass ratio of each of the first and second polymer segments of the conjugated diene-based polymer of the present embodiment is defined as a mass ratio, to the total mass of the conjugated diene-based polymer, of a polymer segment obtained in each of polymerization steps P1 and P2 that are polymerization steps for these polymer segments.

A ratio ($R = r_1/r_2$) between a first polymer segment mass ratio ($r_1$) and a second polymer segment mass ratio ($r_2$) is preferably 0.25 to 4, more preferably 0.33 to 3, and further preferably 0.4 to 2.4. When the lower limit of the R is 0.25 or more, low fuel consumption performance obtained in vulcanization tends to be excellent. When the upper limit of the R is 4 or less, processability obtained in the form of a vulcanizate tends to be excellent.

The R can be measured by a method described in the examples below, and can be controlled to fall in the above-described numerical range by adjusting, in production process of the conjugated diene-based polymer of the present embodiment, conditions such as a polymerization time, a polymerization temperature, the amount of a monomer to be added, and the amount of vinyl bond in the polymerization steps for the respective polymer segments.

A method for introducing a plurality of polymer segments into a molecule of the conjugated diene-based polymer can be performed by adding, by employing a continuous solution polymerization method using a plurality of reactors arranged in series, a conjugated diene compound, an aromatic vinyl compound, a polar material, and a solvent successively to the respective reactors as described below. The substances to be successively added may be the same and different among the reactors.

(Glass Transition Temperature)

The glass transition temperature (Tg) of the conjugated diene-based polymer of the present embodiment is preferably -72°C or more, and more preferably -67°C or more. The glass transition temperature of the conjugated diene-based polymer of the present embodiment is -40°C or less, and more preferably -45°C or less. When the glass transition temperature is within this range, the low fuel consumption performance of a vulcanizate of the conjugated diene-based polymer of the present embodiment tends to be further excellent.

Besides, the conjugated diene-based polymer of the present embodiment having the estimated Tg of the expression (1) satisfying the numerical range of -72°C or more and -40°C or less basically has a measured glass transition temperature (Tg) falling in this range.

The glass transition temperature (Tg) may fall in a range obtained by arbitrarily combining any of the upper limits and any of the lower limits described above. The glass transition temperature of the conjugated diene-based polymer can be measured in accordance with ISO 22768:2006. More specifically, a differential scanning calorimetry (DSC) curve is recorded by measuring DSC with a temperature increased within a prescribed temperature range, and an inflection point of the DSC curve is defined as the glass transition temperature. Specifically, it may be measured by a method described in the examples below.

The conjugated diene-based polymer of the present embodiment may contain a plastic component such as a resin or a process oil described below, and it is necessary to exclude such a component in the DSC measurement for obtaining the glass transition temperature of the conjugated diene copolymer of the present embodiment.

The glass transition temperature of the conjugated diene-based polymer varies depending on the amount of bound aromatic vinyl monomer unit of the conjugated diene-based polymer, and the amount of vinyl bond in bound conjugated diene. Specifically, the glass transition temperature is increased by increasing the amount of bound aromatic vinyl monomer unit and the amount of vinyl bond in bound conjugated diene, and the glass transition temperature is decreased by decreasing the amount of bound aromatic vinyl monomer unit, and the amount of vinyl bond in bound conjugated diene.

In the conjugated diene-based polymer of the present embodiment, the measured glass transition temperature can be set to a preferable range by setting the estimated Tg calculated by the expression (1) to -72°C or more and -40°C or less.

(Weight Average Molecular Weight)

A weight average molecular weight (Mw) of the conjugated diene-based polymer of the present embodiment measured by a GPC measurement method is preferably $35 \times 10^4$ or more, more preferably $40 \times 10^4$ or more, and further preferably $45 \times 10^4$ or more. When the lower limit of the weight average molecular weight measured by the GPC measurement method satisfies the above-described range, a vulcanizate thereof tends to be excellent in abrasion resistance. The weight average molecular weight is preferably $135 \times 10^4$ or less, more preferably $95 \times 10^4$ or less, and further preferably $75 \times 10^4$ or less. When the upper limit of the weight average molecular weight falls in the above-described range, a vulcanizate thereof **tends to** be further excellent in the dispersibility of a filler, and excellent in the processability.

The weight average molecular weight may fall in a range obtained by arbitrarily combining any of the upper limits and any of the lower limits described above.

The weight average molecular weight of the conjugated diene-based polymer can be measured by a GPC measurement method, and specifically can be measured by a method described in the examples below.

(Number Average Molecular Weight)

A number average molecular weight of the conjugated diene-based polymer of the present embodiment measured by a GPC measurement method is preferably $10 \times 10^4$ or more, more preferably $15 \times 10^4$ or more, and further preferably $20 \times 10^4$ or more. When the lower limit of the number average molecular weight measured by the GPC measurement method satisfies the above-described range, a vulcanizate thereof tends to be excellent in abrasion resistance. The number average molecular weight is preferably $100 \times 10^4$ or less, more preferably $70 \times 10^4$ or less, and further preferably $50 \times 10^4$ or less. When the upper limit of the number average molecular weight satisfies the above-described range, the vulcanizate thereof tends to be more excellent in dispersibility of a filler therein and excellent in processability. The number average molecular weight may fall in a range obtained by arbitrarily combining any of the upper limits and any of the lower limits described above. The number average molecular weight of the conjugated diene-based polymer can be measured by a GPC measurement method, and can be measured by a method described in the examples below.

The weight average molecular weight and the number average molecular weight of the conjugated diene-based

polymer can be controlled to fall in the above-described ranges by adjusting a ratio between the amount of a polymerization initiator to be used and the amount of the monomer to be used, and the type and the amount to be used of a coupling agent.

(Molecular Weight Distribution)

A molecular weight distribution of the conjugated diene-based polymer of the present embodiment is represented by a ratio of the weight average molecular weight (Mw) to the number average molecular weight (Mn). The molecular weight distribution of the conjugated diene-based polymer of the present embodiment is preferably 1.7 or more. A conjugated diene-based polymer having a molecular weight distribution falling in this range tends to be more excellent in processability in obtaining a vulcanizate therefrom.

The molecular weight distribution of the conjugated diene-based polymer of the present embodiment is more preferably 1.75 or more, and further preferably 1.8 or more. The molecular weight distribution is more preferably 2.4 or less, and further preferably 2.2 or less.

(Modification Ratio)

The conjugated diene-based polymer of the present embodiment preferably has a modifying group having nitrogen.

Herein, the term "modification ratio" refers to, when a mixture of a modified conjugated diene-based polymer and a non-modified conjugated diene-based polymer can be obtained by modifying a conjugated diene-based polymer with a modifier having a nitrogen atom, a mass content, expressed in %, of a modified conjugated diene-based polymer component having, in a polymer molecule, a specific functional group having affinity or binding reactivity with a filler to the total amount of the mixture of the conjugated diene-based polymers. Accordingly, when the specific functional group has a nitrogen atom, the modification ratio indicates a mass ratio (%) of a modified conjugated diene-based polymer containing a nitrogen atom to the total amount of the mixture of the conjugated diene-based polymers.

Herein, the term "modified conjugated diene-based polymer" means a modified conjugated diene-based polymer, and a mixture of a modified conjugated diene-based polymer and a non-modified conjugated diene-based polymer.

For example, when a conjugated diene-based polymer containing a modified conjugated diene-based polymer modified by reacting a terminal end of the conjugated diene-based polymer with a nitrogen atom-containing modifier is obtained, a mass ratio of a modified conjugated diene-based polymer having a nitrogen atom-containing functional group derived from the nitrogen atom-containing modifier to the total amount of the modified conjugated diene-based polymer corresponds to the modification ratio.

The modification ratio can be measured by chromatography capable of separating a functional group-containing modified component and a non-modified component.

An example of the method employing chromatography includes a method in which a column for gel permeation chromatography using, as a filler, a polar material adsorbing a specific functional group, such as silica, is used for performing quantitative determination by using internal standard of a non-adsorbed component for comparison.

More specifically, the modification ratio can be obtained by measuring an amount of adsorption onto a silica column based on a difference between a chromatogram measured on a sample solution containing a sample and low molecular weight internal standard polystyrene using a polystyrene-based gel column and a chromatogram measured using a silica-based column. More specifically, the modification ratio can be measured by a method described in the examples.

In the conjugated diene-based polymer of the present embodiment, the modification ratio can be controlled by adjusting the amount of the modifier to be added, and a reaction method.

For example, when a method in which polymerization is performed by using, as a polymerization initiator, an organic lithium compound having at least one nitrogen atom in a molecule described below, a method in which a monomer having at least one nitrogen atom in a molecule is copolymerized, and a method in which a modifier having a structural formula described below is used are combined, and polymerization conditions are controlled, and thus, a modification ratio described above can be obtained.

In the conjugated diene-based polymer of the present embodiment, from the viewpoint of the low fuel consumption performance of a vulcanizate thereof, the modification ratio is preferably 60% or more, more preferably 65% or more, and further preferably 70% or more.

[Method for Producing Conjugated Diene-based Polymer]

A method for producing a conjugated diene-based polymer of the present embodiment includes:

a polymerization step (P1) of forming the first polymer segment with two or more continuous reactors; and

a polymerization step (P2) of forming the second polymer segment at an end of the first polymer segment obtained in the polymerization step (P1), and

a polar material is additionally added in the polymerization step (P2).

(Polymerization Initiator)

In the polymerization step (P1), a polymerization initiator is preferably used.
In the polymerization step (P2), it is preferable that a polymerization initiator is not used.
As the polymerization initiator, at least an organic monolithium compound can be used.
Examples of the organic monolithium compound include, but are not limited to, organic monolithium compounds of a low molecular weight compound, and a soluble oligomer.
Examples of the organic monolithium compound also include, in terms of binding mode between an organic group and lithium therein, a compound having a carbon-lithium bond, a compound having a nitrogen-lithium bond, and a compound having a tin-lithium bond.
The amount of the organic monolithium compound to be used as the polymerization initiator is preferably determined depending on the molecular weight of a conjugated diene-based polymer or modified conjugated diene-based polymer to be obtained.
The amount of a monomer such as a conjugated diene compound to be used with respect to the amount of the polymerization initiator to be used relates to a degree of polymerization. Specifically, the amount of a monomer to be used with respect to the amount of the polymerization initiator to be used tends to relate to the number average molecular weight and the weight average molecular weight.
Accordingly, in order to increase the molecular weight of a conjugated diene-based polymer, the amount of the polymerization initiator to be used may be adjusted to be decreased, and in order to decrease the molecular weight, the amount of the polymerization initiator to be used may be adjusted to be increased.
When a nitrogen atom is to be introduced into the conjugated diene-based polymer by using the polymerization initiator, the organic monolithium compound is preferably an alkyllithium compound having a substituted amino group, or dialkylamino lithium from the viewpoint that the compound is used in one of methods for introducing a nitrogen atom into a conjugated diene-based polymer.
In this case, a conjugated diene-based polymer having a nitrogen atom of an amino group at the polymerization start end is obtained.
A substituted amino group refers to an amino group having no active hydrogen, or having a structure including protected active hydrogen.
Examples of the alkyllithium compound containing an amino group having no active hydrogen include, but are not limited to, 3-dimethylaminopropyllithium, 3-diethylaminopropyllithium, 4-(methylpropylamino)butyllithium and 4-hexamethyleneiminobutyllithium.
Examples of the alkyllithium compound containing an amino group having the structure including protected active hydrogen include, but are not limited to, 3-bistrimethylsilylaminopropyllithium and 4-trimethylsilylmethylaminobutyllithium.
Examples of the dialkylamino lithium include, but are not limited to, lithium dimethylamide, lithium diethylamide, lithium dipropylamide, lithium dibutylamide, lithium di-n-hexylamide, lithium diheptylamide, lithium diisopropylamide, lithium dioctylamide, lithium-di-2-ethylhexylamide, lithium didecylamide, lithium ethylpropylamide, lithium ethylbutylamide, lithium ethylbenzylamide, lithium methylphenetylamide, lithium hexamethyleneimide, lithium pyrrolidide, lithium piperidide, lithium heptamethyleneimide, lithium morpholide, 1-lithioazacyclooctane, 6-lithio-1,3,3-trimethyl-6-azabicyclo [3.2.1] octane, and 1-lithio-1,2,3,6-tetrahydropyridine.
Such an organic monolithium compound having a substituted amino group can be reacted with a small amount of a polymerizable monomer, such as 1,3-butadiene, isoprene or styrene, to be used also as an organic monolithium compound of a soluble oligomer.
Alternatively, the polymerization initiator may be one produced by reacting an aromatic vinyl compound having a substituted amino group and/or a conjugated diene compound with an organic monolithium compound, and may be one in which a functional group can be introduced into one end of a polymer chain.
The organic monolithium compound is preferably an alkyllithium compound from the viewpoints of industrial availability and polymerization reaction controllability. In this case, a conjugated diene-based polymer having an alkyl group on the polymerization start end is obtained.
Examples of the alkyllithium compound include, but are not limited to, n-butyllithium, sec-butyllithium, tert-butyllithium, n-hexyllithium, benzyllithium, phenyllithium, and stilbene lithium.

As the alkyllithium compound, from the viewpoints of industrial availability and controllability of a polymerization reaction, n-butyllithium and sec-butyllithium are preferred.
One of these organic monolithium compounds may be singly used, or two or more of these may be used together. Alternatively, another organic metal compound may be used together.
Examples of the another organic metal compound include alkaline earth metal compounds, other alkaline metal compounds, and other organic metal compounds.
Examples of the alkaline earth metal compounds include, but are not limited to, organic magnesium compounds, organic calcium compounds and organic strontium compounds. Other examples include compounds of alkoxides, sulfonates, carbonates and amides of alkaline earth metals.
Examples of the organic magnesium compounds include dibutyl magnesium and ethyl butyl magnesium. Examples of the other organic metal compounds include organic aluminum compounds.
In the method for producing a conjugated diene-based polymer of the present embodiment, a coupling step described below may be performed after the polymerization step described above. The weight average molecular weight of the conjugated diene-based polymer before the coupling step is controlled in accordance with the amount of the polymerization initiator used with respect to the conjugated diene compound and the aromatic vinyl compound, and as the amount of the polymerization initiator to be used is reduced, the weight average molecular weight of the conjugated diene-based polymer tends to reduce. The amount of the polymerization initiator to be used is preferably 0.15 mol or more and 1.5 mol or less assuming that the total mass of the conjugated diene compound and the aromatic vinyl compound to be used is 100 kg.

(Polar Material)

In the method for producing a conjugated diene-based polymer of the present embodiment, a polar material is added in the polymerization step (P2) of forming the second polymer segment.
The polar material can make the aromatic vinyl compound randomly copolymerized with the conjugated diene compound, and tends to be usable as a vinylation agent for controlling the microstructure of a conjugated diene portion. Besides, it also tends to have an effect on acceleration of the polymerization reaction or the like.
Examples of the polar material include, but are not limited to, ethers such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, and 2,2-bis(2-oxolanyl)propane; tertiary amine compounds such as tetramethylethylenediamine, dipiperidinoethane, trimethylamine, triethylamine, pyridine, and quinuclidine; alkaline metal alkoxide compounds such as potassium-tert-amylate, potassium-tert-butylate, sodium-tert-butylate, and sodium amylate; and phosphine compounds such as triphenylphosphine.
One of these polar materials may be singly used, or two or more of these may be used together.
The amount of the polar material to be used is not especially limited, and can be selected in accordance with the purpose, and is preferably 0.01 mol or more and 100 mol or less per mole of the polymerization initiator used in the polymerization step.
Such a polar material (vinylation agent) can be used, as an adjuster for the microstructure of the conjugated diene portion of the conjugated diene-based polymer, in an appropriate amount in accordance with a desired amount of vinyl bond. Many polar materials exhibit a randomizing effect effective in copolymerization of a conjugated diene compound and an aromatic vinyl compound simultaneously, and tends to be able to adjust randomness of an aromatic vinyl monomer unit and a conjugated diene monomer unit in each polymer segment.
As a method for randomizing a conjugated diene monomer unit and an aromatic vinyl monomer unit, for example, as described in Japanese Patent Laid-Open No. 59-140211, a method in which a copolymerization reaction is started using the whole amount of styrene and a part of 1,3-butadiene, with the rest of the 1,3-butadiene intermittently added during the copolymerization reaction may be employed. The 1,3-butadiene added here is added for adjusting the randomness, and need not always form a polymer segment.

(Polymerization Step)

In the method for producing a conjugated diene-based polymer of the present embodiment, the polymerization step is performed in a continuous reactor in which two or more reactors are connected in series, and the polymerization step (P1) of obtaining the first polymer segment, and the polymerization step (P2) of obtaining the second polymer segment are performed.
Each of the polymerization steps (P1) and (P2) can be performed using one reactor, or two or more connected reactors. The shape of the reactor may be a tank or tubular reactor equipped with a stirrer, or the like.
It is not essential to assign the polymerization steps (P1) and (P2) to the respective reactors, and for example, the polymerization step (P2) may be set to start on the downstream side of a first reactor. The respective reactors may have a

temperature control function.

(Solid Content)

In the method for producing a conjugated diene-based polymer of the present embodiment, a conjugated diene-based polymer of interest can be collected in a prescribed solid content.

The solid content herein refers to a mass of the conjugated diene-based polymer collected per unit time in a measurement point.

It is noted that the mass of the conjugated diene-based polymer includes the mass of only a polymer formed through a reaction with the polymerization initiator, and does not include the masses of an unreacted conjugated diene compound or aromatic vinyl compound, a solvent, and the like.

(Conversion Rate)

In the method for producing a conjugated diene-based polymer of the present embodiment, the term "conversion rate" is defined as a mass of a conjugated diene-based polymer obtained through completion of the reaction at a measurement time point in the total mass of the conjugated diene compound and the aromatic vinyl compound.

Specifically, the conversion rate can be obtained in accordance with the following expression (2) using the solid content.

$$\text{Conversion rate } [\%] = \frac{\text{solid content [kg/h]}}{\text{amount of conjugated diene compound [kg/h]} + \text{amount of aromatic vinyl compound [kg/h]}} \times 100 \cdots (2)$$

Besides, the conversion rates of the conjugated diene compound and the aromatic vinyl compound can be obtained in accordance with the following expressions (3) and (4) by respectively using the amount of bound conjugated diene monomer unit and the amount of bound aromatic vinyl monomer unit of the solid content obtained by the solid content measurement described above.

$$\text{Conversion rate of conjugated diene} = \frac{\text{solid content [kg/h]} \times \text{amount of bound conjugated diene monomer unit [\%]}}{\text{total amount of conjugated diene compound [kg/h]}} \times 100 \cdots (3)$$

$$\text{Conversion rate of aromatic vinyl} = \frac{\text{solid content [kg/h]} \times \text{amount of bound aromatic vinyl monomer unit [\%]}}{\text{total amount of aromatic vinyl compound [kg/h]}} \times 100 \cdots (4)$$

It is noted that the denominator in the calculation of the conversion rate corresponds to the mass of all the monomers added in the entire polymerization step (P1 and P2). Accordingly, a conversion rate obtained at the completion of P1 is not 100% even if monomers supplied up to that time point have been all reacted.

From the viewpoint of controlling physical properties of the conjugated diene-based polymer of the present embodiment, the conversion rate is preferably 95% or more up to the completion of the polymerization step. Specifically, the conversion rate may be controlled to be 95% or more at the completion of the polymerization step (P2), and may be lower than this in the polymerization step (P1).

When the conversion rate falls in this range, the amount of bound aromatic vinyl monomer unit $X_{all}$ of the conjugated diene-based polymer can be controlled in accordance with a ratio between the total amount of the conjugated diene compound and the total amount of the aromatic vinyl compound added during the polymerization step, and thus, structural control is eased.

In the method for producing a conjugated diene-based polymer of the present embodiment, the first polymer segment is obtained in the polymerization step (P1), and in this polymerization step (P1), the reactor preferably has a raw material supply part for continuously supplying, from one end of the reactor, the conjugated diene compound, the aromatic vinyl compound, the inert solvent, the polymerization initiator, and the polar material, and has, at the other end opposite to the raw material supply part, a discharge part for continuously delivering the polymer solution.

The conjugated diene polymer solution resulting from the polymerization step (P1) continuously flows out of the reactor to be fed to a next step. The destination of feeding is, for example, preferably the polymerization step (P2) for the second polymer segment described below.

In the polymerization step (P2) of obtaining the second polymer segment, one reactor, or two or more connected reactors are used in the same manner as in the polymerization step (P1). At this point, the conjugated diene compound, the aromatic vinyl compound, the inert solvent, the polar material and the like are newly added to a midway of the reactor, or to a pipe connecting the previous step to this step, and thus, a second polymer segment having a larger amount of vinyl bond in bound conjugated diene than one synthesized in the previous polymerization step is introduced to an end portion of the first polymer segment. In this manner, the second polymer segment having a higher Tg than the first polymer segment can be formed.

The second polymer segment has a larger amount of vinyl bond $Y_2$ (mol%) than the first polymer segment, and therefore, in the polymerization step (P2) of forming the second polymer segment, the conditions are set so that the amount of vinyl bond of the polymer can be higher.

In the polymerization step (P2), one, two or more polar materials are additionally added. Since the polar material is added, the amount of vinyl bond in bound conjugated diene of the second polymer segment is higher than that of the first polymer segment, resulting in increasing a difference in the amount of vinyl bond in bound diene between the first polymer segment and the second polymer segment.

The amount of the polar material to be added in the polymerization step is, in terms of a total amount of the polar material to be added in the polymerization step (P1) and the polymerization step (P2), preferably 0.01 mol or more and 100 mol or less per mole of the polymerization initiator. The amount of each polar material to be added can be selected within the above-described range for controlling the difference in the amount of vinyl bond in bound conjugated diene between the first polymer segment and the second polymer segment. The allocation of the polar material to be added to the polymerization steps (P1) and (P2) varies depending on various factors such as the type of polar material, the polymerization temperature, and the shape of the reactor, and hence is not especially limited, and for example, the concentration of the polar material in the polymerization step (P2) is preferably 3 or more times and 20 or less times of that in the polymerization step (P1).

The conjugated diene polymer solution resulting from the polymerization step (P2) continuously flows out of the reactor to be fed to a next step. The destination of feeding is, for example, the coupling step described below.

In the conjugated diene-based polymer of the present embodiment, in order to set, to 5% by mass or less, the absolute value of the difference ($X_1$ - $X_2$) in the amount of bound aromatic vinyl monomer unit between the first polymer segment and the second polymer segment, it is necessary to react the conjugated diene compound and the aromatic vinyl compound added in the polymerization step at close ratios in the polymerization step (P1) and the polymerization step (P2). For realizing this, a difference in the conversion rate between the conjugated diene compound and the aromatic vinyl compound is preferably reduced in the polymerization step (P1). For example, when the conversion rate of the aromatic vinyl compound is lower than the conversion rate of the conjugated diene compound, the amount of bound aromatic vinyl monomer unit of the first polymer segment is reduced, and instead, a large amount of the aromatic vinyl compound flows into the polymerization step (P2), resulting in increasing the difference in the amount of bound aromatic vinyl monomer unit between the first polymer segment and the second polymer segment. On the other hand, when the absolute value of the difference in the conversion rate therebetween is small in the polymerization step (P1), both the first polymer segment and the second polymer segment contain the aromatic vinyl monomer unit at the same ratio, and hence, the difference in the amount of bound aromatic vinyl monomer unit is reduced. The difference in the conversion rate between the conjugated diene compound and the aromatic vinyl compound is preferably less than 10% by mass, more preferably less than 8% by mass, and further preferably less than 6% by mass.

Since an effect of increasing the reaction rate of the aromatic vinyl compound can be expected by adding the polar material, the difference in the conversion rate between the conjugated diene compound and the aromatic vinyl compound can be reduced also by increasing the amount of the polar material added. On the other hand, the polar material also works as a vinylation agent in general, and hence, the amount of vinyl bond in the segment to be formed tends to increase when the amount thereof to be added is increased. Therefore, the amount of the polar material is one variable for controlling the conversion rate, but is difficult to select in design for controlling the amount of vinyl bond. It is more preferable that the amount of the monomers to be supplied to each segment is adjusted with setting the amount of the polar material to be added and the polymerization temperature than that the conversion rate is controlled in accordance with the amount of the polar material to be added.

In order to reduce the difference in the conversion rate between the conjugated diene compound and the aromatic vinyl compound, it is effective to add the conjugated diene compound and the aromatic vinyl compound to be added in the polymerization step dividedly in the polymerization step (P1) and the polymerization step (P2). When the amount to be added of either one of the monomers having a large reaction rate constant is reduced in the polymerization step (P1), reduction of the reaction rate is induced by raw material depletion, and thus, the conversion rates can be adjusted to be substantially equal at the completion of the polymerization step (P1).

Due to the divided addition of the monomers for controlling the conversion rate, if the amount of one compound added in the polymerization step (P1) is short as compared with the total amount to be essentially added, the shortage is added in the polymerization step (P2). Since the conversion rate at the completion of the polymerization step is preferably

95% or more as described above, the amount of bound aromatic vinyl monomer unit $X_{all}$ in the conjugated diene-based polymer is naturally substantially equal to the ratio between (the aromatic vinyl compound) and (the conjugated diene-based polymer + the aromatic vinyl compound). This value is substantially equal to the amount of bound aromatic vinyl monomer unit $X_1$ of the first polymer segment synthesized in the polymerization step (P1).

For example, when a general copolymerization reaction is to be performed by using normal hexane as a solvent, and using 1,3-butadiene and styrene respectively as the conjugated diene compound and the aromatic vinyl compound that are polymerization monomers, the polymerization reaction rate of the conjugated diene compound is higher than that of the aromatic vinyl compound. Accordingly, the conversion rate of the conjugated diene compound tends to be higher than the conversion rate of the aromatic vinyl compound.

Here, in order to reduce the difference in the conversion rate between these compounds, assuming that the conversion rates of the conjugated diene compound and the aromatic vinyl compound estimated when the polymerization is completed singly through the step P1 are respectively A and B, the difference in the conversion rate between the conjugated diene compound and the aromatic vinyl compound can be reduced by adding the conjugated diene compound in a ratio obtained by dividing B by A in the step P1, and the rest is additionally added in the step P2.

The amount of the conjugated diene compound to be additionally added in the polymerization step (P2) is preferably 15% by mass or more, more preferably 20% by mass or more, and further preferably 25% by mass or more of the total amount of the conjugated diene compound to be added. When the amount to be added in the polymerization step (P2) is 15% by mass or more of the total amount of the conjugated diene compound to be added, it tends to easily satisfy the conditions that the absolute value of the difference ($X_1$ - $X_2$) between the amount of bound aromatic vinyl monomer unit $X_1$ (% by mass) in the first polymer segment and the amount of bound aromatic vinyl monomer unit $X_2$ (% by mass) in the second polymer segment is 5% by mass or less, and that the ratio ($R = r_1/r_2$) of the first polymer segment mass ratio ($r_1$) to the second polymer segment mass ratio ($r_2$) is in the numerical range of 0.25 to 4.00.

In the conjugated diene-based polymer of the present embodiment, the ratio ($R = r_1/r_2$) between the first polymer segment mass ratio ($r_1$) and the second polymer segment mass ratio ($r_2$) can be controlled in accordance with the ratio between the conjugated diene compound and the aromatic vinyl compound to be added in the polymerization step (P2).

When the ratio between the conjugated diene compound and the aromatic vinyl compound to be added in the polymerization step (P2) is reduced, the conversion rates of the respective components in the polymerization step (P1) increase, and hence the R increases. At this point, the difference between the conversion rate of the conjugated diene compound and the conversion rate of the aromatic vinyl compound is preferably controlled to be small.

From the viewpoint of reaction controllability, the conversion rate is preferably high in each polymerization step, and the R may be controlled by supplying, to the next step, a part of the conjugated diene compound and/or the aromatic vinyl compound unreacted in the previous polymerization step.

The production of a conjugated diene-based polymer of the present embodiment may include prescribed steps respectively before and after the first polymerization step (P1) and before and after the second polymerization step (P2). For example, a polymerization step of synthesizing a polymer different from the first polymer segment and the second polymer segment may be included.

The polymerization temperature employed in the polymerization step for the conjugated diene-based polymer of the present embodiment is preferably a temperature at which living anion polymerization proceeds, and from the viewpoint of productivity, is more preferably 0°C or more, and further preferably 120°C or less. When the temperature is within this range, there is a tendency that a sufficient amount of modifier can be reacted on the active end after completing the polymerization. The temperature is further more preferably 50°C or more and 100°C or less.

In the production of the conjugated diene-based polymer of the present embodiment, for obtaining a high molecular weight distribution, the height (L)/the diameter (D) of a tank reactor may be reduced. When the L/D is reduced, a residence time distribution within the reactor is increased, and thus, variation in the reaction time among molecules of the polymerization initiator is increased, resulting in increasing the molecular weight distribution.

(Coupling Step)

In the method for producing a conjugated diene-based polymer of the present embodiment, a step of performing coupling on an active end of the conjugated diene-based polymer obtained through the above-described polymer segment polymerization steps with a coupling agent, such as a tri- or higher functional reactive compound, and/or a step of modifying the active end with a modifier having a nitrogen atom-containing group (preferably, a coupling agent having a nitrogen atom-containing group) may be performed.

Hereinafter, the step of performing coupling and/or the step of modifying will be referred to as the coupling step.

In the coupling step, one end of the active end of the conjugated diene-based polymer is subjected to modification reaction with a coupling agent or a modifier having a nitrogen atom, and thus, a modified conjugated diene-based polymer is obtained.

<Coupling Agent>

In the method for producing a conjugated diene-based polymer of the present embodiment, the coupling agent used in the coupling step may have any structure as long as it is a tri- or higher functional reactive compound, and is preferably a tri- or higher functional reactive compound having a silicon atom.

Examples of the tri- or higher functional reactive compound having a silicon atom include, but are not limited to, a halogenated silane compound, an epoxidized silane compound, a vinylated silane compound, an alkoxysilane compound, and an alkoxysilane compound containing a nitrogen-containing group.

Examples of the halogenated silane compound used as the coupling agent include, but are not limited to, methyltrichlorosilane, tetrachlorosilane, tris(trimethylsiloxy)chlorosilane, tris(dimethylamino)chlorosilane, hexachlorodisilane, bis(trichlorosilyl)methane, 1,2-bis(trichlorosilyl)ethane, 1,2-bis(methyldichlorosilyl)ethane, 1,4-bis(trichlorosilyl)butane, and 1,4-bis(methyldichlorosilyl)butane.

Examples of the epoxidized silane compound used as the coupling agent include, but are not limited to, 3-glycidoxypropyltrimethoxysilane, 3-glycidoxypropyltriethoxysilane, 3-glycidoxypropylmethyldiethoxysilane, and epoxymodified silicone.

<Modifier Having Nitrogen Atom-containing Group>

Examples of the modifier having a nitrogen atom-containing group include, but are not limited to, an isocyanate compound, an isothiocyanate compound, an isocyanuric acid derivative, a nitrogen atom-containing carbonyl compound, a nitrogen atom-containing vinyl compound, and a nitrogen atom-containing epoxy compound.

The modifier having a nitrogen atom-containing group is preferably an amine compound not having active hydrogen, and examples include a tertiary amine compound, a protected amine compound in which the active hydrogen is substituted with a protecting group, an imine compound represented by a general formula, -N=C, and an alkoxysilane compound bonded to the nitrogen atom-containing group.

Examples of the isocyanate compound used as the modifier having a nitrogen atom-containing group include, but are not limited to, 2,4-tolylene diisocyanate, 2,6-tolylene diisocyanate, diphenylmethane diisocyanate, polymeric diphenylmethane diisocyanate (C-MDI), phenyl isocyanate, isophorone diisocyanate, hexamethylene diisocyanate, butyl isocyanate, and 1,3,5-benzene triisocyanate.

Examples of the isocyanuric acid derivative used as the modifier having a nitrogen atom-containing group include, but are not limited to, 1,3,5-tris(3-trimethoxysilylpropyl)isocyanurate, 1,3,5-tris(3-triethoxysilylpropyl)isocyanurate, 1,3,5-tri(oxiran-2-yl)-1,3,5-triazinane-2,4,6-trione, 1,3,5-tris(isocyanatomethyl)-1,3,5-triazinane-2,4,6-trione, and 1,3,5-trivinyl-1,3,5-triazinane-2,4,6-trione.

Examples of the carbonyl compound used as the modifier having a nitrogen atom-containing group include, but are not limited to, 1,3-dimethyl-2-imidazolidinone, 1-methyl-3-ethyl-2-imidazolidinone, 1-methyl-3-(2-methoxyethyl)-2-imidazolidinone, N-methyl-2-pyrolidone, N-methyl-2-piperidone, N-methyl-2-quinolone, 4,4'-bis(diethylamino)benzophenone, 4,4'-bis(dimethylamino)benzophenone, methyl-2-pyridyl ketone, methyl-4-pyridyl ketone, propyl-2-pyridyl ketone, di-4-pyridyl ketone, 2-benzoylpyridine, N,N,N',N'-tetramethylurea, N,N-dimethyl-N',N'-diphenylurea, methyl N,N-diethylcarbamate, N,N-diethylacetamide, N,N-dimethyl-N',N'-dimethylaminoacetamide, N,N-dimethyl picolinic acid amide, and N,N-dimethyl isonicotinic acid amide.

Examples of the vinyl compound used as the modifier having a nitrogen atom-containing group include, but are not limited to, N,N-dimethylacrylamide, N,N-dimethylmethacrylamide, N-methylmaleimide, N-methylphthalimide, N,N-bistrimethylsilylacrylamide, morpholinoacrylamide, 3-(2-dimethylaminoethyl)styrene, (dimethylamino)dimethyl-4-vinylphenylsilane, 4,4'-vinylidene bis(N,N-dimethylaniline), 4,4'-vinylidene bis(N,N-dimethylaniline), 1,1-bis(4-morpholinophenyl)ethylene, and 1-phenyl-1-(4-N,N-dimethylaminophenyl)ethylene.

An example of the epoxy compound used as the modifier having a nitrogen atom-containing group includes, but is not limited to, an epoxy group-containing hydrocarbon compound bonded to an amino group, which may further have an epoxy group bonded to an ether group.

An example of such an epoxy compound includes, but is not limited to, an epoxy compound represented by the following general formula (a):

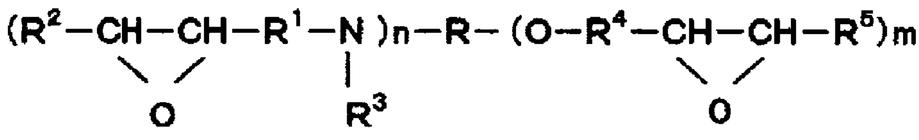

(a)

In the formula (a), R represents a bi- or higher valent hydrocarbon group, or a bi- or higher valent organic group

having at least one polar group selected from a polar group having oxygen such as ether, epoxy or ketone, a polar group having sulfur such as thioether or thioketone, and a polar group having nitrogen such as a tertiary amino group or an imino group.

The bi- or higher valent hydrocarbon group is an optionally saturated or unsaturated linear, branched or cyclic hydrocarbon group, and encompasses an alkylene group, an alkenylene group, a phenylene group, and the like. A hydrocarbon group having 1 to 20 carbon atoms is preferred. Examples thereof include groups such as methylene, ethylene, butylene, cyclohexylene, 1,3-bis(methylene)-cyclohexane, 1,3-bis(ethylene)-cyclohexane, o-, m-, or p-phenylene, m-, or p-xylene, and bis(phenylene)-methane.

In the formula (a), $R^1$ and $R^4$ are a hydrocarbon group having 1 to 10 carbon atoms, and $R^1$ and $R^4$ are optionally the same or different.

In the formula (a), $R^2$ and $R^5$ are hydrogen, or a hydrocarbon group having 1 to 10 carbon atoms, and $R^2$ and $R^5$ are optionally the same or different.

In the formula (a), $R^3$ is a hydrocarbon group having 1 to 10 carbon atoms, or a structure represented by the following formula (a1).

$R^1$, $R^2$, and $R^3$ may be a cyclic structure mutually bonded.

When $R^3$ is a hydrocarbon group, $R^3$ may be a cyclic structure mutually bonded to R. In the cyclic structure, N bonded to $R^3$ may be directly bonded to R.

In the formula (a), n is an integer of 1 or more, and m is 0, or an integer of 1 or more.

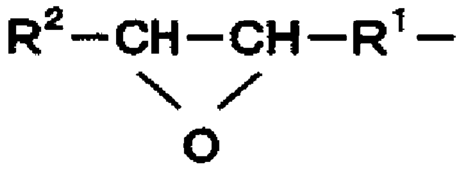

(a1)

In the formula (a1), $R^1$ and $R^2$ are defined in the same manner as $R^1$ and $R^2$ of the formula (a), and $R^1$ and $R^2$ are optionally the same or different.

The epoxy compound used as the modifier having a nitrogen atom-containing group preferably has an epoxy group-containing hydrocarbon group, and more preferably has a glycidyl group-containing hydrocarbon group.

An epoxy group-containing hydrocarbon group bonded to an amino group or an ether group is not especially limited, and examples thereof include a glycidylamino group, a diglycidylamino group or a glycidoxy group. More preferable molecular structures are epoxy group-containing compounds respectively containing a glycidylamino group or a diglycidylamino group, and a glycidoxy group, and an example thereof includes a compound represented by the following general formula (a2):

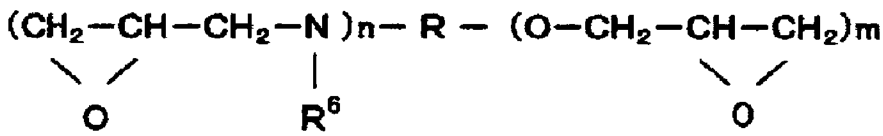

(a2)

In the formula (a2), R is defined in the same manner as R of the formula (a), and $R^6$ is a hydrocarbon group having 1 to 10 carbon atoms, or a structure represented by the following formula (a3).

When $R^6$ is a hydrocarbon group, $R^6$ may be a cyclic structure mutually bonded to R, and in this case, N bonded to $R^6$ may be directly bonded to R.

In the formula (a2), n is an integer of 1 or more, and m is 0, or an integer of 1 or more.

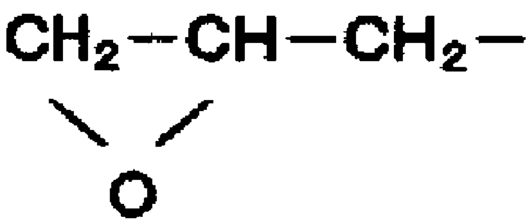

(a3)

The epoxy compound used as the modifier having a nitrogen atom-containing group is particularly preferably a compound having one or more diglycidylamino groups, and one or more glycidoxy groups in a molecule.

Examples of the epoxy compound used as the modifier having a nitrogen atom-containing group include, but are not limited to, N,N-diglycidyl-4-glycidoxyaniline, 1-N,N-diglycidylaminomethyl-4-glycidoxy-cyclohexane, 4-(4-glycidoxyphenyl)-(N,N-diglycidyl)aniline, 4-(4-glycidoxyphenoxy)-(N,N-diglycidyl)aniline, 4-(4-glycidoxybenzyl)-(N,N-diglycidyl) aniline, 4-(N,N'-diglycidyl-2-piperazinyl)-glycidoxybenzene, 1,3-bis(N,N-diglycidylaminomethyl)cyclohexane, N,N,N',N'-tetraglycidyl-m-xylenediamine, 4,4-methylene-bis(N,N-diglycidylaniline), 1,4-bis(N,N-diglycidylamino)cyclohexane, N,N,N',N'-tetraglycidyl-p-phenylenediamine, 4,4'-bis(diglycidylamino)benzophenone, 4-(4-glycidylpiperazinyl)-(N,N-diglycidyl)aniline, 2-[2-(N,N-diglycidylamino)ethyl]-1-glycidylpyrrolidine, N,N-diglycidylaniline, 4,4'-diglycidyl-dibenzylmethylamine, N,N-diglycidylaniline, N,N-diglycidyl ortho-toluidine, and N,N-diglycidylaminomethylcyclohexane. Among these, N,N-diglycidyl-4-glycidoxyaniline, and 1,3-bis(N,N-diglycidylaminomethyl)cyclohexane are particularly preferred.

From the viewpoint that the effects of the present embodiment are effectively and definitely exhibited, the modifier is preferably an alkoxysilane compound having a nitrogen atom-containing group. Examples of such a modifier include, but are not limited to, 3-dimethylaminopropyltrimethoxysilane, 3-dimethylaminopropylmethyldimethoxysilane, 3-diethylaminopropyltriethoxysilane, 3-morpholinopropyltrimethoxysilane, 3-piperidinopropyltriethoxysilane, 3-hexamethyleneiminopropylmethyldiethoxysilane, 3-(4-methyl-1-piperazino)propyltriethoxysilane, 1-[3-(triethoxysilyl)-propyl]-3-methylhexahydropyrimidine, 3-(4-trimethylsilyl-1-piperazino)propyltriethoxysilane, 3-(3-triethylsilyl-1-imidazolidinyl)propylmethyldiethoxysilane, 3-(3-trimethylsilyl-1-hexahydropyrimidinyl)propyltrimethoxysilane, 3-dimethylamino-2-(dimethylaminomethyl)propyltrimethoxysilane, bis(3-dimethoxymethylsilylpropyl)-N-methylamine, bis(3-trimethoxysilylpropyl)-N-methylamine, bis(3-triethoxysilylpropyl)methylamine, tris(trimethoxysilyl)amine, tris(3-trimethoxysilylpropyl) amine, N,N,N',N'-tetra(3-trimethoxysilylpropyl)ethylenediamine, 3-isocyanatopropyltrimethoxysilane, 3-cyanopropyltrimethoxysilane, 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2-2-dimethoxy-1-(4-triemthoxysilylbutyl)-1-aza-2-silacylcohexane, 2,2-dimethoxy-1-(3-dimethoxymethylsilylpropyl)-1-aza-2-silacyclopentane, 2,2-dimethoxy-1-phenyl-1-aza-2-silacyclopentane, 2,2-diethoxy-1-butyl-1-aza-2-silacyclopentane, 2,2-dimethoxy-1-methyl-1-aza-2-silacyclopentane, 2,2-dimethoxy-8-(4-methylpiperazinyl)methyl-1,6-dioxa-2-silacyclooctane, and 2,2-dimethoxy-8-(N,N-diethylamino)methyl-1,6-dioxa-2-silacyclooctane.

Particularly preferable examples of the alkoxysilane compound having a nitrogen atom-containing group include the following:

Specific examples include tris(3-trimethoxysilylpropyl)amine, tris(3-triethoxysilylpropyl)amine, tris(3-tripropoxysilylpropyl)amine, bis(3-trimethoxysilylpropyl)-[3-(2,2-dimethoxy-1-aza-2-silacyclopentane)propyl]amine, tetrakis(3-trimethoxysilylpropyl)-1,3-propanediamine (also designated as "N,N,N',N'-tetrakis(3-trimethoxysilylpropyl)-1,3-propanediamine"), tris(3-trimethoxysilylpropyl)-[3-(1-methoxy-2-trimethylsilyl-1-sila-2-azacyclopentane)propyl]-1,3-propanediamine, tris(3-trimethoxysilylpropyl)-[3-(1-methoxy-2-methyl-1-sila-2-azacyclopentane)propyl]-1,3-propanediamine, bis(3-triethoxysilylpropyl)-[3-(2,2-diethoxy-1-aza-2-silacyclopentane)propyl]-[3-(1-ethoxy-2-trimethylsilyl-1-sila-2-azacyclopentane)propyl]-1,3-propanediamine, tetrakis(3-trimethoxysilylpropyl)-1,3-bisaminomethylcyclohexane, tris(3-trimethoxysilylpropyl)-[3-(2,2-dimethoxy-1-aza-2-silacyclopentane)propyl]-1,3-bisaminomethylcyclohexane, tetrakis(3-trimethoxysilylpropyl)-1,6-hexamethylenediamine, pentakis(3-trimethoxysilylpropyl)-diethylenetriamine, tris(3-trimethoxysilylpropyl)-methyl-1,3-propanediamine, tetrakis[3-(2,2-dimethoxy-1-aza-2-silacyclopentane)propyl]silane, bis(3-trimethoxysilylpropyl)-bis[3-(2,2-dimethoxy-1-aza-2-silacyclopentane)propyl]silane, tris[3-(2,2-dimethoxy-1-aza-2-silacyclopentane)propyl]-(3-trimethoxysilylpropyl)silane, tris[3-(2,2-dimethoxy-1-aza-2-silacyclopentane)propyl]-[3-(1-methoxy-1-trimethylsilyl-1-sila-2-azacyclopentane)propyl]silane, 3-tris[2-(2,2-dimethoxy-1-aza-2-silacyclopentane)ethoxy]silyl-1-trimethoxysilylpropane, 1-[3-(1-methoxy-2-trimethylsilyl-1-sila-2-azacyclopentane)propyl]-3,4,5-tris(3-trimethoxysilylpropyl)-cyclohexane, 1-[3-(2,2-dimethoxy-1-aza-2-silacyclopentane)propyl]-3,4,5-tris(3-trimethoxysilylpropyl)-cyclohexane, 3,4,5-tris(3-trimethoxysilylpropyl)-cyclohexyl-[3-(2,2-dimethoxy-1-aza-2-silacyclopentane) propyl] ether, and (3-trimethoxysilylpropyl) phosphate.

Other examples include bis(3-trimethoxysilylpropyl)-[3-(2,2-dimethoxy-1-aza-2-silacyclopentane)propyl]phosphate, bis[3-(2,2-dimethoxy-1-aza-2-silacyclopentane)propyl]-(3-trimethoxysilylpropyl)phosphate, tris[3-(2,2-dimethoxy-1-aza-2-silacyclopentane)propyl]phosphate, N-(1,3-dimethylbutylidene)-3-(triethoxysilyl)-1-propanamine, N-(1,3-dimethylbutylidene)-3-(trimethoxysilyl)-1-propanamine, N-benzylidene-3-(triethoxysilyl)propan-1-amine, N-benzylidene-3-(trimethoxysilyl)propan-1-amine, 1,1-(1,4-phenylene)bis(N-(3-(triethoxysilyl)propyl)methanamine), 1,1-(1,4-phenylene)bis(N-(3(trimethoxysilyl)propyl)methanamine), 2-methoxy-2-methyl-1-(benzylideneaminoethyl)-1-aza-2-silacyclopentane, and 2-methoxy-2-methyl-1-(4-methoxybenzylideneaminoethyl)-1-aza-2-silacyclopentane.

Still other examples include 1-methyl-4-[3-(trimethoxysilyl)propyl]piperazine, 1-methyl-4-[3-(triethoxysilyl)propyl]piperazine, 1-methyl-4-[3-(methyldimethoxysilyl)propyl]piperazine, 3,3'-(1,1,3,3-tetramethoxydisiloxane-1,3-diyl) bis(N,N-dimethylpropan-1-amine), 3,3'-(1,1,3,3-tetraethoxydisiloxane-1,3-diyl) bis(N,N-dimethylpropan-1-amine), 3,3'-(1,1,3,3-tetrapropoxydisiloxane-1,3-diyl) bis(N,N-dimethylpropan-1-amine), 3,3'-(1,1,3,3-tetramethoxydisiloxane-1,3-diyl) bis(N,N-diethylpropan-1-amine), 3,3'-(1,1,3,3-tetramethoxydisiloxane-1,3-diyl) bis(N,N-dipropylpropan-1-amine), 3,3'-(1,1,3,3-tetraethoxydisiloxane-1,3-diyl) bis(N,N-diethylpropan-1-amine), 3,3'-(1,1,3,3-tetrapropoxydisiloxane-1,3-diyl) bis(N,N-diethylpropan-1-amine), and 3,3'-(1,1,3,3-tetraethoxydisiloxane-1,3-diyl) bis(N,N-dipropylpropan-1-amine).

Still other examples include 3,3'-(1,1,3,3-tetrapropoxydisiloxane-1,3-diyl) bis(N,N-dipropylpropan-1-amine), 3,3'-(1,1,3,3-tetramethoxydisiloxane-1,3-diyl) bis(N,N-diethylmethan-1-amine), 3,3'-(1,1,3,3-tetraethoxydisiloxane-1,3-diyl) bis(N,N-diethylmethan-1-amine), 3,3'-(1,1,3,3-tetrapropoxydisiloxane-1,3-diyl) bis(N,N-diethylmethan-1-amine), 3,3'-(1,1,3,3-tetramethoxydisiloxane-1,3-diyl) bis(N,N-dimethylmethan-1-amine), 3,3'-(1,1,3,3-tetramethoxydisiloxane-1,3-diyl) bis(N,N-dipropylmethan-1-amine), 3,3'-(1,1,3,3-tetrapropoxydisiloxane-1,3-diyl) bis(N,N-dimethylmethan-1-amine), 3,3'-(1,1,3,3-tetrapropoxydisiloxane-1,3-diyl) bis(N,N-dipropylmethan-1-amine), 3,3'-(1,1,3,3-tetraethoxydisiloxane-1,3-diyl) bis(N,N-dimethylmethan-1-amine), 3,3'-(1,1,3,3-tetraethoxydisiloxane-1,3-diyl) bis(N,N-dipropylmethan-1-amine), 1,3-bis(3-(1H-imidazol-1-yl)propyl) 1,1,3,3-tetramethoxydisiloxane, 1,3-bis(3-(1H-imidazol-1-yl)propyl)- 1,1,3,3-tetraethoxydisiloxane, and 1,3-bis(3-(1H-imidazol-1-yl)propyl) 1,1,3,3-tetrapropoxydisiloxane.

In coupling modifiers having a nitrogen atom-containing group, an example of a protected amine compound in which active hydrogen is substituted with a protecting group includes a compound having alkoxysilane and protected amine in a molecule.

Examples of such a compound include, but are not limited to, N,N-bis(trimethylsilyl)aminopropyltrimethoxysilane, N,N-bis(trimethylsilyl)aminopropylmethyldimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)aminoethylmethyldiethoxysilane, N,N-bis(triethylsilyl)aminopropylmethyldiethoxysilane, 3-(4-trimethylsilyl-1-piperazino)propyltriethoxysilane, 3-(3-triethylsilyl-1-imidazolidinyl)propylmethyldiethoxysilane, 3-(3-trimethylsilyl-1-hexahydropyrimidinyl)propyltrimethoxysilane, 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2,2-dimethoxy-1-(4-trimethoxysilylbutyl)-1-aza-2-silacyclohexane, 2,2-dimethoxy-1-(3-dimethoxymethylsilylpropyl)-1-aza-2-silacyclopentane, 2,2-dimethoxy-1-phenyl-1-aza-2-silacyclopentane, 2,2-diethoxy-1-butyl-1-aza-2-silacyclopentane, and 2,2-dimethoxy-1-methyl-1-aza-2-silacyclopentane.

Other examples include N-(1,3-dimethylbutylidene)-3-methyl(dimethoxysilyl)-1-propanamine, N-(1,3-dimethylbutylidene)-3-methyl(diethoxysilyl)-1-propanamine, N-(1-methylethylidene)-3-(triethoxysilyl)-1-propanamine, N-(1-methylethylidene)-3-(trimethoxysilyl)-1-propanamine, N-(1-methylethylidene)-3-methyl(dimethoxysilyl)-1-propanamine, N-(1-methylethylidene)-3-methyl(diethoxysilyl)-1-propanamine, N-ethylidene-3-(triethoxysilyl)-1-propanamine, N-ethylidene-3-(trimethoxysilyl)-1-propanamine, N-ethylidene-3-methyl(dimethoxysilyl)-1-propanamine, N-ethylidene-3-methyl(diethoxysilyl)-1-propanamine, N-(1-methylpropylidene)-3-(triethoxysilyl)-1-propanamine, N-(1-methylpropylidene)-3-(trimethoxysilyl)-1-propanamine, N-(1-methylpropylidene)-3-methyl(dimethoxysilyl)-1-propanamine, N-(1-methylpropylidene)-3-methyl(diethoxysilyl)-1-propanamine, N-benzylidene-3-methyl(dimethoxysilyl)propan-1-amine, N-benzylidene-3-methyl(diethoxysilyl)propan-1-amine, N-4-methylbenzylidene-3-(triethoxysilyl)propan-1-amine, N-4-methylbenzylidene-3-(trimethoxysilyl)propan-1-amine, N-4-methylbenzylidene-3-methyl(dimethoxysilyl)propan-1-amine, N-4-methylbenzylidene-3-methyl(diethoxysilyl)propan-1-amine, N-naphtylidene-3-(triethoxysilyl)propan-1-amine, N-naphtylidene-3-(trimethoxysilyl)propan-1-amine, N-naphtylidene-3-methyl(dimethoxysilyl)propan-1-amine, 1,1-(1,4-phenylene)bis(N-(3methyl(dimethoxysilyl)propyl)methanamine), 1,1-(1,4-phenylene)bis(N-(3methyl(diethoxysilyl)propyl)methanamine), 2-ethoxy-2-methyl-1-(benzylideneaminoethyl)-1-aza-2-silacyclopentane, 2-methoxy-2-methyl-1-(methylisobutylideneaminoethyl)-1-aza-2-silacyclopentane, 1-trimethylsilyl-4-[3-(trimethoxysilyl)propyl]piperazine, and 1-trimethylsilyl-4-[3-(triethoxysilyl)propyl]piperazine.

In the step for producing a conjugated diene-based polymer of the present embodiment, when the coupling step is performed, it is further preferable that a modifier having a nitrogen atom-containing group represented by any one of the following formulas (A) to (D) is used in the coupling step. One of these may be singly used, or two or more of these may be used in combination.

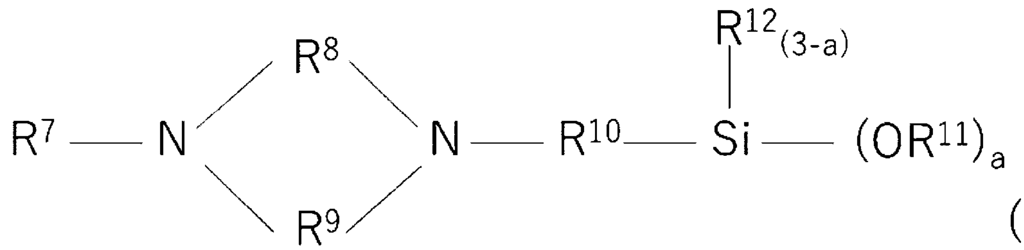

(A)

Here, $R^{10}$ and $R^{11}$ are a hydrocarbon group having 1 to 12 carbon atoms, optionally have an unsaturated bond therein, and are optionally the same or different. $R^{12}$ is a hydrocarbon group having 1 to 20 carbon atoms.

$R^8$ and $R^9$ are an aliphatic hydrocarbon group having 1 to 6 carbon atoms, optionally have an unsaturated bond therein, and are optionally the same or different.

$R^7$ is a hydrocarbon group having 1 to 20 carbon atoms optionally substituted with an organic group containing Si,

O, or N, and having no active hydrogen, and optionally has an unsaturated bond therein.

a is an integer of 1 to 3.

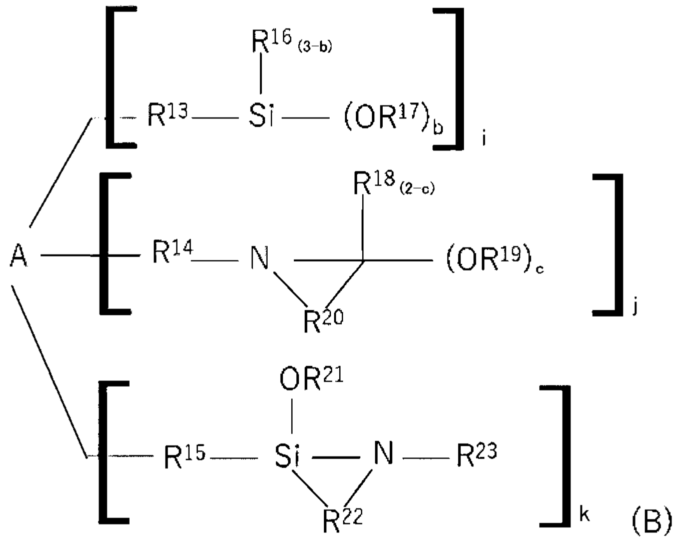

(B)

In the formula (B), A represents a hydrocarbon group having 1 to 20 carbon atoms, or an organic group that has at least one atom selected from the group consisting of an oxygen atom, a nitrogen atom, a silicon atom, a sulfur atom, and a phosphorus atom, and has no active hydrogen.

$R^{13}$, $R^{14}$, and $R^{15}$ each independently represent a single bond, or an alkylene group having 1 to 20 carbon atoms.

$R^{16}$, $R^{17}$, $R^{18}$, $R^{19}$, and $R^{21}$ each independently represent an alkyl group having 1 to 20 carbon atoms.

$R^{20}$ and $R^{22}$ each independently represent an alkylene group having 1 to 20 carbon atoms.

$R^{23}$ each independently represents an alkyl group having 1 to 20 carbon atoms, or a trialkylsilyl group.

b each independently represents an integer of 1 to 3, c each independently represents 1 or 2, i represents an integer of 0 to 6, j represents an integer of 0 to 6, k represents an integer of 0 to 6, and a sum of i, j, and k is an integer of 4 to 10.

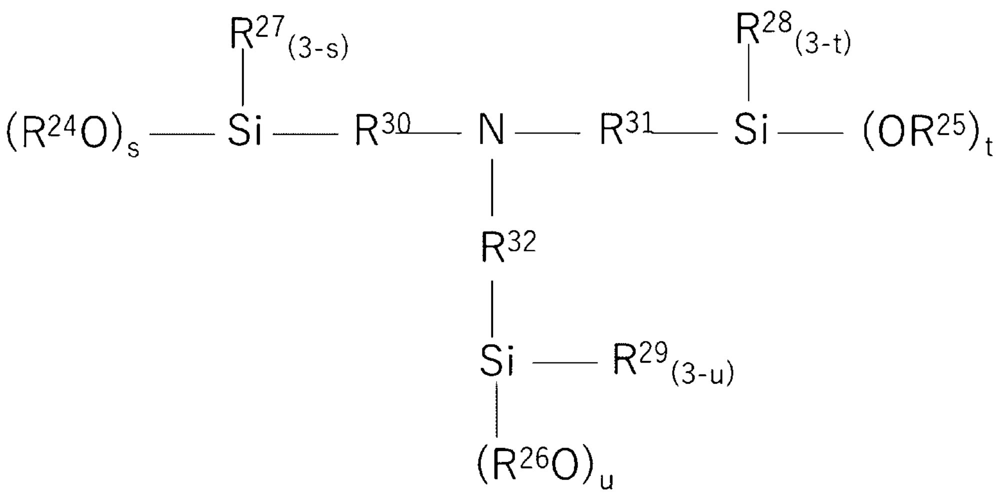

(C)

In the formula (C), $R^{24}$, $R^{25}$, $R^{26}$, $R^{27}$, $R^{28}$, and $R^{29}$ each independently represent an alkyl group having 1 to 20 carbon atoms, or an aryl group having 6 to 20 carbon atoms.

$R^{30}$, $R^{31}$, and $R^{32}$ each independently represent an alkylene group having 1 to 20 carbon atoms.

s, t, and u each independently represent an integer of 1 to 3, and a sum of s, t, and u is an integer of 4 or more.

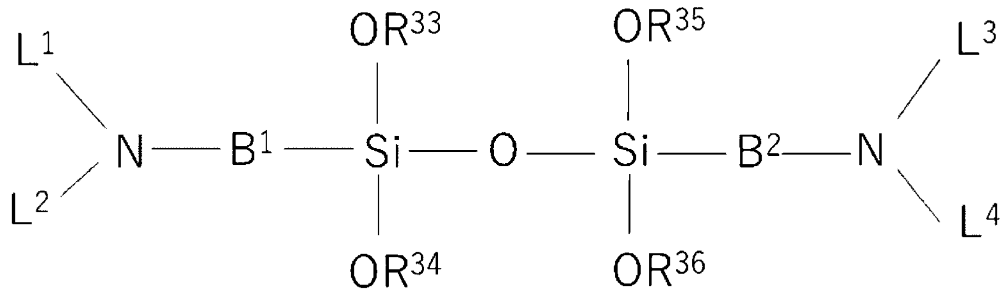

(D)

In the formula (D), $B^1$ and $B^2$ each independently represent a bivalent hydrocarbon group having 1 to 20 carbon atoms containing or not containing an oxygen atom.

$R^{33}$ to $R^{36}$ each independently represent a monovalent hydrocarbon group having 1 to 20 carbon atoms. $L^1$ to $L^4$ each independently represent a bivalent, trivalent, or tetravalent alkylsilyl group substituted with an alkyl group having 1 to 10 carbon atoms, or a monovalent hydrocarbon group having 1 to 20 carbon atoms, or $L^1$ and $L^2$, and $L^3$ and $L^4$ are optionally mutually bonded to form a ring having 1 to 5 carbon atoms, and when $L^1$ and $L^2$, and $L^3$ and $L^4$ are mutually bonded to form a ring, the ring thus formed optionally contains 1 to 3 hetero atoms of one or more selected from the group consisting of N, O, and S.

Specifically, in the formula (D), $B^1$ and $B^2$ are each independently an alkylene group having 1 to 10 carbon atoms, $R^{33}$ to $R^{36}$ are each independently an alkyl group having 1 to 10 carbon atoms, $L^1$ to $L^4$ are each independently a tetravalent alkylsilyl group substituted with an alkyl group having 1 to 5 carbon atoms, or an alkyl group having 1 to 10 carbon atoms, or $L^1$ and $L^2$, and $L^3$ and $L^4$ are optionally mutually bonded to form a ring having 1 to 3 carbon atoms, and when $L^1$ and $L^2$, and $L^3$ and $L^4$ are mutually bonded to form a ring, the ring thus formed optionally contains 1 to 3 hetero atoms of one or more selected from the group consisting of N, O, and S.

Examples of the coupling modifier represented by the formula (A) include, but are not limited to, 1-methyl-4-[3-(trimethoxysilyl)propyl]piperazine, 1-methyl-4-[3-(triethoxysilyl)propyl]piperazine, 1-propyl-4-[3-(trimethoxysilyl)propyl]piperazine, 1-propyl-4-[3-(triethoxysilyl)propyl]piperazine, 1-trimethylsilyl-4-[3-(trimethoxysilyl)propyl]piperazine, and 1-trimethylsilyl-4-[3-(triethoxysilyl)propyl]piperazine.

Among these, one represented by the formula (A) wherein a is 3 is preferred from the viewpoint of increasing reactivity and interaction between the conjugated diene-based polymer of the present embodiment and an inorganic filler such as silica, and from the viewpoint of increasing processability.

A reaction temperature and a reaction time in the coupling step using the coupling modifier represented by the formula (A) are not especially limited, and the reaction is performed at preferably 0°C or more and 120°C or less, and for preferably 30 seconds or more.

The amount of the coupling modifier represented by the formula (A) to be added corresponds to a total mole number of an alkoxy group bonded to a silyl group of the compound represented by the formula (A) of preferably 0.2 or more times and 2.0 or less times, more preferably 0.3 or more times and 1.5 or less times, and further preferably 0.4 or more times and 1.0 or less times of a mole number of the polymerization initiator to be added. From the viewpoint that the thus obtained modified conjugated diene-based polymer has a molecular weight falling in a more preferable range, the amount is preferably 0.2 or more times, and from the viewpoint of storage stability in long-term storage, the amount is preferably 2.0 or less times.

More specifically, the amounts of the polymerization initiator and the coupling modifier represented by the formula (A) to be added may be adjusted so that the mole number of the coupling modifier represented by the formula (A) can be preferably 0.1 or more times and 1.0 or less times of the mole number of the polymerization initiator.

In the formula (B), A is represented preferably by any one of the following formulas (I) to (IV).

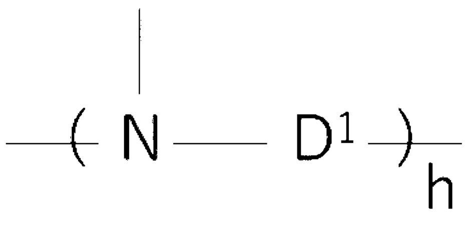

(Formula I)

In the formula (I), $D^1$ represents a single bond, or a bivalent hydrocarbon group having 1 to 20 carbon atoms. h

represents an integer of 1 to 10. $D^1$, if present in a plural number, is respectively independent.

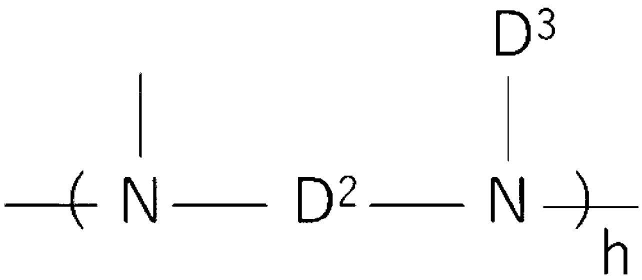

(Formula II)

In the formula (II), $D^2$ represents a single bond, or a bivalent hydrocarbon group having 1 to 20 carbon atoms. $D^3$ represents an alkyl group having 1 to 20 carbon atoms, and h represents an integer of 1 to 10. Each of $D^2$ and $D^3$, if present in a plural number, is respectively independent.

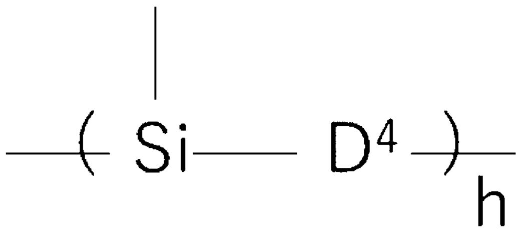

(Formula III)

In the formula (III), $D^4$ represents a single bond, or a bivalent hydrocarbon group having 1 to 20 carbon atoms. h represents an integer of 1 to 10. $D^4$, if present in a plural number, is respectively independent.

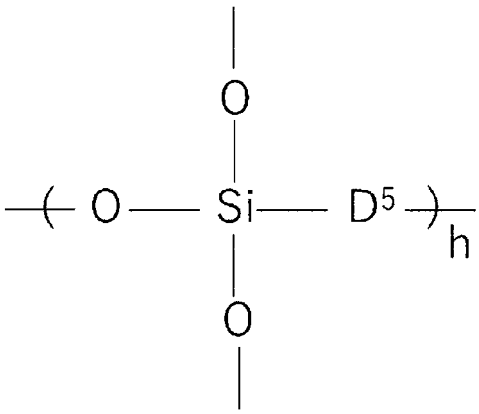

(Formula IV)

In the formula (IV), $D^5$ represents a single bond, or a bivalent hydrocarbon group having 1 to 20 carbon atoms. h represents an integer of 1 to 10. $D^5$, if present in a plural number, is respectively independent.

In the formula (B), examples of the coupling modifier in which A is represented by the formula (I) include, but are not limited to, tris(3-trimethoxysilylpropyl)amine, bis(3-trimethoxysilylpropyl)-[3-(2,2-dimethoxy-1-aza-2-silacyclopentane)propyl]amine, bis[3-(2,2-dimethoxy-1-aza-2-silacyclopentane)propyl]-(3-trimethoxysilylpropyl)amine, tris[3-(2,2-dimethoxy-1-aza-2-silacyclopentane)propyl]amine, tris(3-ethoxysilylpropyl)amine, bis(3-triethoxysilylpropyl)-[3-(2,2-diethoxy-1-aza-2-silacylopentane)propyl]amine, bis[3-(2,2-diethoxy-1-aza-2-silacyclopentane)propyl]-(3-triethoxysilylpropyl)amine, tris[3-(2,2-diethoxy-1-aza-2-silacyclopentane)propyl]amine, tetrakis(3-trimethoxysilylpropyl)-1,3-propanediamine, tris(3-trimethoxysilylpropyl)-[3-(2,2-dimethoxy-1-aza-2-silacyclopentane)propyl]-1,3-propanediamine, bis(3-trimethoxysilylpropyl)-bis[3-(2,2-dimethoxy-1-aza-2-silacyclopentane)propyl]-1,3-propanedimane, and tris [3-(2,2-dimethoxy-1-aza-2-silacyclopentane)propyl]-(3-trimethoxysilylpropyl)1,3-propanediamine.

Other examples include tetrakis[3-(2,2-dimethoxy-1-aza-2-silacyclopentane)propyl]-1,3-propanediamine, tris(3-trimethoxysilylpropyl)-[3-(1-methoxy-2-trimethylsilyl-1-sila-azacyclopentane)propyl]-1,3-propanediamine, bis(3-trimethoxysilylpropyl)-[3-(2,2-dimethoxy-1-aza-2-silacyclopentane)propyl]-[3-(1-methoxy-2-trimethylsilyl-1-sila-2-azacyclopentane)propyl]-1,3-propanediamine, bis[3-(2,2-dimethoxy-1-aza-2-silacyclopentane)propyl]-(3-trimethoxysilylpropyl)-[3-(1-methoxy-2-trimethylsilyl-1-sila-2-azacyclopentane)propyl]-1,3-propanediamine, tris[3-(2,2-dimethoxy-1-aza-2-silacyclopentane)propyl]-[3-(1-methoxy-2-trimethylsilyl-1-sila-2-azacyclopentane)propyl]-1,3-propanediamine, tetrakis(3-triethoxysilylpropyl)-1,3-propanediamine, and tris(3-triethoxysilylpropyl)-[3-(2,2-diethoxy-1-aza-2-silacyclopentane)propyl]-1,3-propanediamine.

Still other examples include bis(3-triethoxysilylpropyl)-bis[3-(2,2-diethoxy-1-aza-2-silacyclopentane)propyl]-1,3-propanediamine, tris[3-(2,2-diethoxy-1-aza-2-silacyclopentane)propyl]-(3-triethoxysilylpropyl)-1,3-propanediamine, tetrakis[3-(2,2-diethoxy-1-aza-2-silacyclopentane)propyl]-1,3-propanediamine, tris(3-triethoxysilylpropyl)-[3-(1-ethoxy-2-trimethylsilyl-1-sila-2-azacyclopentane)propyl]-1,3-propanediamine, bis(3-triethoxysilylpropyl)-[3-(2,2-diethoxy-1-aza-2-silacyclopentane)propyl]-[3-(1-ethoxy-2-trimethylsilyl-1-sila-2-azacyclopentane)propyl]-1,3-propanediamine, bis[3-(2,2-diethoxy-1-aza-2-silacyclopentane)propyl]-(3-triethoxysilylpropyl)-[3-(1-ethoxy-2-trimethylsilyl-1-sila-2-azacyclopentane)propyl]-1,3-propanediamine, tris[3-(2,2-diethoxy-1-aza-2-silacyclopentane)propyl]-[3-(1-ethoxy-2-trimethylsilyl-1-sila-2-azacyclopentane)propyl]-1,3-propanediamine, and tetrakis(3-trimethoxysilylpropyl)-1,3-bisaminomethylcyclohexane.

Still other examples include tris(3-trimethoxysilylpropyl)-[3-(2,2-dimethoxy-1-aza-2-silacyclopentane) proypl]-1,3-bisaminomethycyclohexane, bis(3-trimethoxysilylpropyl)-bis[3-(2,2-dimethoxy-1-aza-2-silacyclopentane) propyl]-1,3-bisaminomethylcyclohexane, tris[3-(2,2-dimethoxy-1-aza-2-silacyclopentane)propyl]-(3-trimethoxysilylpropyl)-1,3-bisaminomethylcyclohexane, tetrakis[3-(2,2-dimethoxy-1-aza-2-silacyclopentane)propyl]-1,3-propanediamine, tris(3-trimethoxysilylpropyl)-[3-(1-methoxy-2-trimethylsilyl-1-sila-2-azacyclopentane)propyl]-1,3-bisaminomethylcyclohexane, bis(3-trimethoxysilylpropyl)-[3-(2,2-dimethoxy-1-aza-2-silacyclopentane)propyl]-[3-(1-methoxy-2-trimethylsilyl-1-sila-2-azacyclopentane)propyl]-1,3-bisaminomethylcyclohexane, and bis[3-(2,2-dimethoxy-1-aza-2-silacyclopentane)propyl]-(3-trimethoxysilylpropyl)-[3-(1-methoxy-2-trimethylsilyl-1-sila-2-azacyclopentane)propyl]-1,3-bisaminomethylcyclohexane.

Still other examples include tris[3-(2,2-dimethoxy-1-aza-2-cyclopentane)propyl]-[3-(1-methoxy-2-trimethylsilyl-1-sila-2-azacyclopentane)propyl]-1,3-bisaminomethylcyclohexane, tetrakis(3-triethoxysilylpropyl)-1,3-propanediamine, tris(3-triethoxysilylpropyl)-[3-(2,2-diethoxy-1-aza-2-silacyclopentane)propyl]-1,3-bisaminomethylcyclohexane, bis(3-trimethoxysilylpropyl)-bis[3-(2,2-diethoxy-1-aza-2-silacyclopentane)propyl]-1,3-bisaminomethylcyclohexane, tris [3-(2,2-diethoxy-1-aza-2-silacyclopentane)propyl]-(3-triethoxysilylpropyl)-1,3-propanediamine, tetrakis[3-(2,2-diethoxy-1-aza-2-silacyclopentane)propyl]-1,3-propanediamine, tris(3-triethoxysilylpropyl)-[3-(1-ethoxy-2-trimethylsilyl-1-sila-2-azacyclopentane)propyl]-1,3-bisaminomethylcyclohexane, bis(3-triethoxysilylpropyl)-[3-(2,2-diethoxy-1-aza-2-silacyclopentane)propyl]-[3-(1-ethoxy-2-trimethylsilyl-1-sila-2-azacyclopentane)propyl]-1,3-bisaminomethylcyclohexane, bis[3-(2,2-diethoxy-1-aza-2-silacyclopentane)propyl]-(3-triethoxysilylpropyl)-[3-(1-ethoxy-2-trimethylsilyl-1-sila-2-azacyclopentane)propyl]-1,3-bisaminomethylcyclohexane, tris[3-(2,2-diethoxy-1-aza-2-silacyclopentane)propyl]-[3-(1-ethoxy-2-trimethylsilyl-1-sila-2-azacyclopentane)propyl]-1,3-bisaminomethylcyclohexane, tetrakis(3-trimethoxysilylpropyl)-1,6-hexamethylenediamine, and pentakis(3-trimethoxysilylpropyl)-diethylenetriamine.

In the formula (B), examples of a coupling modifier in which A is represented by the formula (II) include, but are not limited to, tris(3-trimethoxysilylpropyl)-methyl-1,3-propanediamine, bis(2-trimethoxysilylpropyl)-[3-(2,2-dimethoxy-1-aza-2-silacyclopentane)propyl]-methyl-1,3-propanediamine, bis[3-(2,2-dimethoxy-1-aza-2-silacyclopentane)propyl]-(3-trimethoxysilylpropyl)-methyl-1,3-propanediamine, tris(3-triethoxysilylpropyl)-methyl-1,3-propanediamine, bis(2-triethoxysilylpropyl)-[3-(2,2-diethoxy-1-aza-2-silacyclopentane)propyl]-methyl-1,3-propanediamine, bis[3-(2,2-diethoxy-1-aza-2-silacyclopentane)propyl]-(3-triethoxysilylpropyl)-methyl-1,3-propanediamine, $N^1,N^{1'}$-(propane-1,3-diyl)bis($N^1$-methyl-$N^3$,$N^3$-bis(3-(trimethoxysilyl)propyl)-1,3-propanediamine), and $N^1$-(3-(bis(3-(trimethoxysilyl)propyl) amino)propyl)-$N^1$-methyl-$N^3$-(3-(methyl(3-(trimethoxysilyl)propyl)amino)propyl)-$N^3$-(3-(trimethoxysilyl)propyl)-1,3-propanediamine.

In the formula (B), examples of a coupling modifier in which A is represented by the formula (III) include, but are not limited to, tetrakis[3-(2,2-dimethoxy-1-aza-2-silacyclopentane)propyl]silane, tris[3-(2,2-dimethoxy-1-aza-2-silacyclopentane)propyl]-(3-trimethoxysilylpropyl)silane, tris[3-(2,2-dimethoxy-1-aza-2-silacyclopentane)propyl]-[3-(1-methoxy-2-trimethylsilyl-1-sila-2-azacyclopentane)propyl]silane, bis(3-trimethoxysilylpropyl)-bis[3-(2,2-dimethoxy-1-aza-2-silacyclopentane)propyl]silane, (3-trimethoxysilyl)-[3-(1-methoxy-2-trimethylsilyl-1-sila-2-azacyclopentane)-bis[3-(2,2-dimethoxy-1-aza-2-silacyclopentane)propyl]silane, bis[3-(1-methoxy-2-trimethylsilyl-1-sila-2-azacyclopentane)-bis [3-(2,2-dimethoxy-1-aza-2-silacyclopentane)propyl]silane, tris(3-trimethoxysilylpropyl)-[3-(2,2-dimethoxy-1-aza-2-silacyclopentane)propyl]silane, bis(3-trimethoxysilylpropyl)-[3-(1-methoxy-2-trimethylsilyl-1-sila-2-azacyclopentane)propyl]-[3-(2,2-dimethoxy-1-aza-2-silacyclopentane)propyl]silane, bis[3-(1-methoxy-2-trimethylsilyl-1-sila-2-azacyclopentane)propyl]-bis(3-trimethoxysilylpropyl)silane, and bis(3-trimethoxysilylpropyl)-bis[3-(1-methoxy-2-methyl-1-sila-2-azacyclopentane)propyl]silane.

In the formula (B), examples of the coupling modifier in which A is represented by formula (IV) include, but are not limited to, 3-tris[2-(2,2-dimethoxy-1-aza-2-silacyclopentane)ethoxy]silyl-1-(2,2-dimethoxy-1-aza-2-silacyclopentane) propane, and 3-tris[2-(2,2-dimethoxy-1-aza-2-silacyclopentane)ethoxy]silyl-1-trimethoxysilylpropane.

The amount of the modifier represented by the formula (B) to be added is preferably determined based on a ratio between a mole number of the polymerization initiator to be added and a mole number of the modifier represented by the

formula (B) to be added. Thus, the conjugated diene-based polymer and the modifier can be adjusted to react with each other in a desired stoichiometric ratio.

More specifically, the amounts of the polymerization initiator and the coupling modifier represented by the formula (B) to be added may be adjusted so that the mole number of the coupling modifier represented by the formula (B) can be preferably 0.012 or more times and 1.0 or less times, and more preferably 0.02 or more times and 0.5 or less times of the mole number of the polymerization initiator. In this case, the number of functional groups of the modifier in the formula (B) (for example, when i and j are 2 or more, each of w and x is present in a plural number, and plural fs and gs are respectively equal, $f \times i + (g + 1) \times j + k$) is preferably an integer of 5 to 10, and more preferably an integer of 6 to 10. From the viewpoint of setting the molecular weight of a modified conjugated diene-based polymer to be obtained to a preferable range, the mole number of the modifier is preferably 0.012 or more times. Besides, from the viewpoint of storage stability in a long-term storage, the mole number is preferably 0.2 or less times.

Among these, from the viewpoint of increasing the reactivity and interaction between the modified conjugated diene-based polymer and an inorganic filler such as silica, and from the viewpoint of increasing processability, i, j, and k in the formula (B) are preferably all 3.

Examples of the coupling modifier represented by the formula (C) include, but are not limited to, tris(3-trimethoxysilylpropyl)amine, tris(3-methyldimethoxysilylpropyl)amine, tris(3-triethoxysilylpropyl)amine, tris(3-methyldiethoxysilylpropyl)amine, tris(trimethoxysilylmethyl)amine, tris(2-trimethoxysilylethyl)amine, and tris(4-trimethoxysilylbutyl)amine.

A reaction temperature and a reaction time in the coupling step using the coupling modifier represented by the formula (C), although not limited to the following, for example, the reaction is performed preferably at 0°C or more and 120°C or less preferably for 30 seconds or more.

The amount of the coupling modifier represented by the formula (C) to be added corresponds to a total mole number of alkoxy groups bonded to silyl groups of the compound represented by the formula (C) of preferably 0.1 or more times and 2.0 or less times, more preferably 0.2 or more times and 1.0 or less times, and further preferably 0.3 or more times and 0.5 or less times of the mole number of the polymerization initiator to be added. From the viewpoint of the molecular weight of a modified conjugated diene-based polymer to be obtained, the mole number is preferably 0.1 or more times. From the viewpoint of the storage stability in long-term storage, the mole number is preferably 2.0 or less times.

Examples of the coupling modifier represented by the formula (D) include 3,3'-(1,1,3,3-tetramethoxydisiloxane-1,3-diyl) bis(N,N-dimethylpropan-1-amine), 3,3'-(1,1,3,3-tetraethoxydisiloxane-1,3-diyl) bis(N,N-dimethylpropan-1-amine), 3,3'-(1,1,3,3-tetrapropoxydisiloxane-1,3-diyl) bis(N,N-dimethylpropan-1-amine), 3,3'-(1,1,3,3-tetramethoxydisiloxane-1,3-diyl) bis(N,N-diethylpropan-1-amine), 3,3'-(1,1,3,3-tetramethoxydisiloxane-1,3-diyl) bis(N,N-dipropylpropan-1-amine), and 3,3'-(1,1,3,3-tetraethoxydisiloxane-1,3-diyl) bis(N,N-diethylpropan-1-amine).

The reaction temperature and the reaction time in the coupling step using the coupling modifier represented by the formula (D) are not especially limited, and the reaction is performed at preferably 0°C or more and 120°C or less, and for preferably 30 seconds or more.

The amount of the coupling modifier represented by the formula (D) to be added corresponds to a total mole number of alkoxy groups bonded to silyl groups of the compound represented by the formula (D) of preferably 0.25 or more times and 2.0 or less times, more preferably 0.3 or more times and 1 or less times, and further preferably 0.35 or more times and 0.5 or less times of the mole number of the polymerization initiator to be added. From the viewpoint of the molecular weight of a modified conjugated diene-based polymer to be obtained, and from the viewpoint of the storage stability in long-term storage, the mole number is preferably 2.0 or less times.

The method for producing a conjugated diene-based polymer of the present embodiment may include, after the coupling step, and/or before the coupling step, a condensation reaction step of causing a condensation reaction by adding a condensation accelerator.

In the method for producing a conjugated diene-based polymer of the present embodiment, after the coupling step, a deactivator and/or a neutralizer or the like may be added if necessary to the resultant polymer solution.

Examples of the deactivator include, but are not limited to, water, and alcohols such as methanol, ethanol and isopropanol.

Examples of the neutralizer include, but are not limited to, carboxylic acids such as stearic acid, oleic acid, and versatic acid (a mixture of highly branched carboxylic acids having 9 to 11 carbon atoms, and containing, as a principal component, one having 10 carbon atoms), an aqueous solution of an inorganic acid, and a carbon dioxide gas.

From the viewpoint of preventing gel formation after polymerization, and from the viewpoint of improving stability in processing, a rubber stabilizer is preferably added to the conjugated diene-based polymer of the present embodiment.

Although the rubber stabilizer is not limited to the following, any of known ones can be used, and preferred examples include antioxidants such as 2,6-di-tert-butyl-4-hydroxytoluene (BHT), n-octadecyl-3-(4'-hydroxy-3',5'-di-tert-butylphenol)propionate, and 2-methyl-4,6-bis[(octylthio)methyl]phenol.

(Step of Obtaining from Polymer Solution)

The method for producing a conjugated diene-based polymer of the present embodiment may include a step of obtaining the resultant conjugated diene-based polymer from the polymer solution. As a method for obtaining the conjugated diene-based polymer from the polymer solution, any of known methods can be employed, and for example, the following methods may be employed. Examples of the method include a method in which the conjugated diene-based polymer is filtered after separating a solvent by steam stripping or the like, and the resultant is dehydrated and dried to obtain the conjugated diene-based polymer, a method in which the solution is concentrated in a flushing tank, and the resultant is devolatilized by using a bent extruder or the like to obtain the conjugated diene-based polymer, and a method in which the solution is directly devolatilized by using a drum dryer or the like to obtain the conjugated diene-based polymer.

(Step of Obtaining Extended Conjugated Diene-based Polymer)

In the method for producing a conjugated diene-based polymer of the present embodiment, at least any one selected from the group consisting of an extender oil, a liquid rubber, and a resin may be added to the produced conjugated diene-based polymer to obtain an extended conjugated diene-based polymer.

It is noted that the extended conjugated diene-based polymer encompasses not only an oil extended conjugated diene-based polymer containing an oil but also a polymer containing a liquid polybutadiene or any of various resins except for an oil.

Thus, the processability of the conjugated diene-based polymer can be further improved.

As a method for adding an extender oil to the conjugated diene-based polymer, although not limited to the following, a method in which an extender oil is added to the conjugated diene-based polymer solution to be mixed, and the thus obtained extended polymer solution is desolvated is preferred.

Examples of the extender oil include an aroma oil, a naphthenic oil, a paraffin oil, and a vegetable oil. The vegetable oil can be prepared from an oil selected from the group consisting of linseed oil, safflower oil, soybean oil, corn oil, cottonseed oil, castor oil, tung oil, pine oil, sunflower oil, palm oil, olive oil, coconut oil, peanut oil, and grape seed oil. Among these, from the viewpoint of environmental safety, and from the viewpoint of oil bleed prevention and the wet grip property, an aroma-alternative oil containing 3% by mass or less of a polycyclic aromatic (PCA) component according to the IP 346 is preferred.

Examples of the aroma-alternative oil include TDAE (Treated Distillate Aromatic Extracts), and MES (Mild Extraction Solvate) mentioned in Kautschuk Gummi Kunststoffe 52 (12) 799 (1999), and RAE (Residual Aromatic Extracts).

Examples of the liquid rubber include, but are not limited to, liquid polybutadiene and liquid styrene-butadiene rubber.

Examples of the resin include, but are not limited to, an aromatic petroleum resin, a coumarone-indene resin, a terpene-based resin, a rosin derivative (including a wood oil resin), tall oil, a derivative of tall oil, a rosin ester resin, a natural or synthetic terpene resin, an aliphatic hydrocarbon resin, an aromatic hydrocarbon resin, a mixed aliphatic/aromatic hydrocarbon resin, a coumarin-indene resin, a phenol resin, a p-tert-butylphenol-acetylene resin, a phenol-formaldehyde resin, a xylene-formaldehyde resin, a monoolefin oligomer, a diolefin oligomer, a hydrogenated aromatic hydrocarbon resin, a cyclic aliphatic hydrocarbon resin, a hydrogenated hydrocarbon resin, a hydrogenated wood oil resin, a hydrogenated oil resin, and an ester of a hydrogenated oil resin and a monofunctional or polyfunctional alcohol.

One of these resins may be singly used, or two or more of these may be used together.

When such a resin is hydrogenated, all unsaturated groups may be hydrogenated, or some may be left not hydrogenated.

The amount to be added of the at least one selected from the group consisting of an extender oil, a liquid rubber, and a resin is not especially limited, and is preferably 1 to 60 parts by mass, more preferably 10 to 60 parts by mass, and further preferably 15 to 37.5 parts by mass based on 100 parts by mass of the conjugated diene-based polymer of the present embodiment.

[Rubber Composition]

The conjugated diene-based polymer of the present embodiment can be formed into a rubber composition (hereinafter sometimes referred to as the rubber composition of the present embodiment) by adding a filler thereto.

The rubber composition of the present embodiment contains a rubber component containing the conjugated diene-based polymer of the present embodiment, and 5.0 parts by mass or more and 150 parts by mass or less of a filler based on 100 parts by mass of the rubber component, and the rubber component preferably contains 10 parts by mass or more of the conjugated diene-based polymer of the present embodiment based on 100 parts by mass of the total amount of the rubber component. When the filler is dispersed in the rubber component containing the conjugated diene-based

polymer of the present embodiment, a rubber composition further excellent in processability in vulcanization, and further excellent in a low hysteresis loss property, fracture performance, and abrasion resistance of a vulcanizate obtained therefrom can be obtained. When the rubber component contains the conjugated diene-based polymer of the present embodiment in a prescribed ratio, the processability and the abrasion resistance are further improved.

Examples of the filler include, but are not limited to, a silica-based inorganic filler, carbon black, a metal oxide, and a metal hydroxide. Among these, a silica-based inorganic filler is preferred. In particular, when the rubber composition is used in vehicle components such as a tire, and an anti-vibration rubber, or in application to a vulcanized rubber for shoes or the like, it is particularly preferable that a silica-based inorganic filler is contained. One of these fillers may be singly used, or two or more of these may be used together.

The silica-based inorganic filler is not especially limited, any of known fillers can be used, a solid particle containing $SiO_2$ or $Si_3Al$ as a constituent unit is preferred, and a solid particle containing $SiO_2$ or $Si_3Al$ as a principal component of a constituent unit is more preferred. Here, the principal component refers to a component contained in the silica-based inorganic filler in an amount of over 50% by mass, preferably 70% by mass or more, and more preferably 80% by mass or more.

Examples of the silica-based inorganic filler include, but are not limited to, silica, clay, talc, mica, diatomite, wollastonite, montmorillonite, zeolite and inorganic fibrous substances such as glass fiber. Alternatively, a silica-based inorganic filler having a hydrophobized surface, and a mixture of a silica-based inorganic filler and an inorganic filler except for silica may be used. Among these, from the viewpoint of further improving strength and abrasion resistance of the rubber composition of the present embodiment, silica or glass fiber is preferred, and silica is more preferred. The silica is not especially limited, and examples include dry silica, wet silica and synthetic silicate silica. Among these silica, wet silica is preferred from the viewpoint of further improving fracture strength of the resultant rubber composition.

From the viewpoint of more definitely obtaining a rubber composition having practically good abrasion resistance and fracture strength, a nitrogen adsorption specific surface area, obtained by the BET adsorption method, of the silica-based inorganic filler is preferably 100 $m^2/g$ or more and 300 $m^2/g$ or less, and more preferably 170 $m^2/g$ or more and 250 $m^2/g$ or less. Besides, a silica-based inorganic filler having a comparatively small specific surface area (for example, a specific surface area of less than 200 $m^2/g$) and a silica-based inorganic filler having a comparatively large specific surface area (for example, 200 $m^2/g$ or more) may be used in combination if necessary. Particularly when a silica-based inorganic filler having a comparatively large specific surface area (for example, 200 $m^2/g$ or more) is used, the rubber composition of the present embodiment is further improved in dispersibility of silica. As a result, a rubber composition having further excellent abrasion resistance, fracture strength, and low hysteresis loss property tends to be obtained.

Examples of the carbon black include, but are not limited to, carbon blacks of SRF, FEF, HAF, ISAF and SAF classes. Among these, a carbon black having a nitrogen adsorption specific surface area of 50 $m^2/g$ or more and dibutyl phthalate (DBP) oil absorption of 80 mL/100 g or less is preferred.

The metal oxide is not especially limited as long as it is a solid particle containing a principal component of a constituent unit represented by chemical formula $M_xO_y$ (wherein M represents a metal atom, and x and y each independently represent an integer of 1 to 6), and examples include alumina, titanium oxide, magnesium oxide, and zinc oxide.

The metal hydroxide is not especially limited, and examples include aluminum hydroxide, magnesium hydroxide, and zirconium hydroxide.

The content of the filler in the rubber composition of the present embodiment is preferably 5.0 parts by mass or more and 150 parts by mass or less, more preferably 20 parts by mass or more and 100 parts by mass or less, and further preferably 30 parts by mass or more and 90 parts by mass or less based on 100 parts by mass of the rubber component. When the content of the filler satisfies this range, the rubber composition tends to be further excellent in processability in vulcanization, and further excellent in the low hysteresis loss property, the fracture performance, and the abrasion resistance of a vulcanizate thereof.

From the viewpoint of definitely imparting performances required in use as a tire or the like such as dry grip performance and conductivity, the rubber composition of the present embodiment preferably contains 0.5 parts by mass or more and 100 parts by mass or less of carbon black based on 100 parts by mass of the rubber component containing the conjugated diene-based polymer of the present embodiment. From a similar viewpoint, the rubber composition contains carbon black in an amount of more preferably 3.0 parts by mass or more and 100 parts by mass or less, and further preferably 5.0 parts by mass or more and 50 parts by mass or less based on 100 parts by mass of the rubber component containing the conjugated diene-based polymer of the present embodiment.

The rubber composition of the present embodiment may further contain a silane coupling agent. When the rubber composition contains a silane coupling agent, interaction between the rubber component and the filler can be further improved.

Examples of the silane coupling agent are, but are not limited to, preferably a compound containing, in one molecule, a sulfur bond portion and an alkoxysilyl group or silanol group portion. Examples of such a compound include, but are not limited to, bis-[3-(triethoxysilyl)-propyl]-tetrasulfide, bis-[3-(triethoxysilyl)-propyl]-disulfide and bis-[2-(triethoxysilyl)-ethyl]-tetrasulfide.

In the rubber composition of the present embodiment, a content of the silane coupling agent is preferably 0.1 parts by mass or more and 30 parts by mass or less, more preferably 0.5 parts by mass or more and 20 parts by mass or less, and further preferably 1.0 part by mass or more and 15 parts by mass or less based on 100 parts by mass of the filler. When the content of the silane coupling agent falls in the above-described range, there is a tendency that the interaction between the rubber component and the filler can be further improved.

The rubber composition of the present embodiment may contain, as the rubber component, a rubber-like polymer different from the conjugated diene-based polymer of the present embodiment (hereinafter simply referred to as the "rubber-like polymer").

Examples of the rubber-like polymer include, but are not limited to, a conjugated diene-based polymer and a hydrogenated product thereof, a random copolymer of a conjugated diene-based compound and a vinyl aromatic compound, and a hydrogenated product thereof, a block copolymer of a conjugated diene-based compound and a vinyl aromatic compound, and a hydrogenated product thereof, a non-diene-based polymer and a natural rubber.

Examples of the rubber-like polymer include, but are not limited to, a butadiene rubber and a hydrogenated product thereof, an isoprene rubber and a hydrogenated product thereof, styrene-based elastomers such as a styrene-butadiene rubber and a hydrogenated product thereof, a styrene-butadiene block copolymer and a hydrogenated product thereof, and a styrene-isoprene block copolymer and a hydrogenated product thereof, and an acrylonitrile-butadiene rubber and a hydrogenated product thereof.

Examples of the non-diene-based polymer include, but are not limited to, olefin-based elastomers such as an ethylene-propylene rubber, an ethylene-propylene-diene rubber, an ethylene-butene-diene rubber, an ethylene-butene rubber, an ethylene-hexene rubber and an ethylene-octene rubber, a butyl rubber, a brominated butyl rubber, an acrylic rubber, a fluorine rubber, a silicone rubber, a chlorinated polyethylene rubber, an epichlorohydrin rubber, an $\alpha,\beta$-unsaturated nitrile-acrylic acid ester-conjugated diene copolymer rubber, a urethane rubber and a polysulfide rubber.

Examples of the natural rubber include, but are not limited to, smoked sheets of RSS Nos. 3 to 5, SMR and epoxidized natural rubber.

The rubber-like polymer may be in the form of a modified rubber imparted with a functional group having polarity such as a hydroxyl group or an amino group. When the rubber composition of the present invention is used in a tire, the rubber-like polymer is preferably one or more selected from the group consisting of a butadiene rubber, an isoprene rubber, a styrene-butadiene rubber, a natural rubber and a butyl rubber.

The mass average molecular weight of the rubber-like polymer is preferably 2,000 or more and 2,000,000 or less, and more preferably 5,000 or more and 1,500,000 or less from the viewpoints of abrasion resistance and fracture strength, and balance between the low hysteresis loss property and the processability of the rubber composition. As the rubber-like polymer, a low molecular weight rubber-like polymer, that is, what is called a liquid rubber, can be used. One of these rubber-like polymers may be singly used, or two or more of these may be used together.

When the rubber composition of the present embodiment contains the rubber-like polymer in addition to the conjugated diene-based polymer of the present embodiment, a content ratio (in a mass ratio) of the conjugated diene-based polymer to the rubber-like polymer is, in terms of (the conjugated diene-based polymer/the rubber-like polymer), preferably 10/90 or more and 100/0 or less, more preferably 20/80 or more and 90/10 or less, and further preferably 30/70 or more and 80/20 or less. In other words, the rubber component contains, based on 100 parts by mass of the total amount of the rubber component, preferably 10 parts by mass or more and 100 parts by mass or less, more preferably 20 parts by mass or more and 90 parts by mass or less, and further preferably 30 parts by mass or more and 80 parts by mass or less of the conjugated diene-based polymer of the present embodiment. When the ratio of the conjugated diene-based polymer of the present embodiment contained in the rubber component falls in the above-described range, a vulcanizate of the rubber composition tends to be further excellent in abrasion resistance and a low hysteresis loss property.

To the rubber composition of the present embodiment, a rubber softener may be added in addition to the rubber component from the viewpoint of further improving the processability.

As the rubber softener, the same ones as those described as examples to be contained in the above-described conjugated diene-based polymer can be used, and a mineral oil, or a liquid or low molecular weight synthetic softener is suitable.

A mineral oil-based rubber softener, which is used for softening, expanding and improving processability of a rubber component and is designated as a process oil or an extender oil, is a mixture of an aromatic ring, a naphthene ring and a paraffin chain. In particular, one in which the number of carbon atoms of the paraffin chain is 50% or more is designated as a paraffin-based softener, one in which the number of carbon atoms of the naphthene ring is 30% or more and 45% or less is designated as a naphthene-based softener, and one in which the number of carbon atoms belonging to aromatic carbons exceeds 30% of the number of all carbon atoms is designated as an aromatic-based softener. The rubber composition of the present embodiment preferably contains, as a rubber softener, one having an appropriate aromatic content. When such a rubber softener is contained, compatibility with the conjugated diene-based polymer is further improved.

The content of the rubber softener in the rubber composition of the present embodiment is expressed as a sum of the amount of the rubber softener precedently added to the conjugated diene-based polymer or the rubber-like polymer, and the amount of the rubber softener added in forming the rubber composition.

In the rubber composition of the present embodiment, the content of the rubber softener is preferably 0 part by mass or more and 100 parts by mass or less, more preferably 10 parts by mass or more and 90 parts by mass or less, and further preferably 30 parts by mass or more and 90 parts by mass or less based on 100 parts by mass of the rubber component. When the content of the rubber softener is 100 parts by mass or less based on 100 parts by mass of rubber component, bleeding out can be suppressed, and the stickiness of the surface of the rubber composition can be further suppressed.

The rubber composition can be produced by mixing the conjugated diene-based polymer, the rubber-like polymer, the filler, the silane coupling agent, the rubber softener and the like. The mixing method is not especially limited, and examples include a melt-kneading method using a general mixer such as an open roll, a Banbury mixer, a kneader, a single shaft screw extruder, a twin shaft screw extruder or a multi-shaft screw extruder, and a method in which the respective components are melted and mixed followed by removal of a solvent by heating. Among these methods, the melt-kneading method using a roll, a Banbury mixer, a kneader or an extruder is preferred from the viewpoint of productivity and high kneadability. Besides, the rubber component, the filler, the silane coupling agent, and the additive may be kneaded all together, or may be mixed dividedly in plural times.

The rubber composition of the present embodiment may be in the form of a vulcanizate obtained by vulcanization with a vulcanizing agent. The vulcanizing agent is not especially limited, and examples include radical generators such as organic peroxides and azo compounds, oxime compounds, nitroso compounds, polyamine compounds, sulfur and sulfur compounds. The sulfur compounds encompass sulfur monochloride, sulfur dichloride, disulfide compounds, high molecular weight polysulfide compounds and the like.

In the rubber composition of the present embodiment, the content of the vulcanizing agent is preferably 0.01 parts by mass or more and 20 parts by mass or less, and more preferably 0.1 parts by mass or more and 15 parts by mass or less based on 100 parts by mass of the rubber component. As a vulcanization method, any of conventionally known methods can be employed. A vulcanization temperature is preferably 120°C or more and 200°C or less, and more preferably 140°C or more and 180°C or less.

For the vulcanization of the rubber composition, a vulcanization accelerator and/or a vulcanization aid may be used if necessary. As the vulcanization accelerator, any of conventionally known materials can be used, and examples include, but are not limited to, sulphenamide-based, guanidine-based, thiurambased, aldehyde-amine-based, aldehyde-ammonia-based, thiazole-based, thioureabased and dithiocarbamate-based vulcanization accelerators.

Besides, examples of the vulcanization aid include, but are not limited to, zinc oxide and stearic acid.

The contents of the vulcanization accelerator and the vulcanization aid are respectively preferably 0.01 parts by mass or more and 20 parts by mass or less, and more preferably 0.1 parts by mass or more and 15 parts by mass or less based on 100 parts by mass of the rubber component.

In the rubber composition of the present embodiment, as long as the effects of the present embodiment are not impaired, various additives such as another softener and filler excluding those described above, a heat resistance stabilizer, an antistatic agent, a weathering stabilizer, an anti-aging agent, a colorant and a lubricant may be used. As the softener, any of known softeners can be used. Examples of the filler excluding those described above include, but are not limited to, calcium carbonate, magnesium carbonate, aluminum sulfate, and barium sulfate. As the heat resistance stabilizer, the antistatic agent, the weathering stabilizer, the anti-aging agent, the colorant and the lubricant, any of known materials can be respectively used.

The rubber composition of the present embodiment is suitably used as a rubber composition for a tire. The rubber composition of the present embodiment can be suitably used in, but not especially limited to, various tires such as a fuelefficient tire, an all-season tire, a high-performance tire and a studless tire; and various tire portions such as a tread, a carcass, a sidewall and a bead.

It is noted that each numerical range described above as a preferable range or the like may be a numerical range obtained by arbitrarily combining any one of values described as the upper limits and any one of values described as the lower limits even when not particularly stated.

## Examples

The present embodiment will now be described in more detail with reference to specific examples and comparative examples, and it is noted that the present invention is not limited to the following examples and comparative examples at all.

Various physical properties of the examples and comparative examples were measured by the following methods.

((Physical Property 1) Polymer Segment Ratio)

<Solid Content>

A solid content in a conjugated diene-based polymer solution was obtained based on the amount of a non-volatile component in the conjugated diene-based polymer solution flowing through a measurement point in a unit time. The whole amount of the conjugated diene-based polymer solution flowing through the measurement point was collected for 3 minutes, and immediately after that, a polymerization terminator was added. Thereafter, the collected solution was transferred to a heat resistant dish, and a mass (M) of a solid remaining after drying the resultant in an oven at 140°C for 30 minutes or more was measured.

Here, the solid content (m) was obtained in accordance with the following expression (I):

$$\text{Solid content m [g/min]} = \text{mass M of solid [g/3 min]} \div 3 \quad \cdots (I)$$

Besides, the measurement point was changed to a discharge part of a polymerization step (P1) of synthesizing a first polymer segment, and to a discharge part of a polymerization step (P2) of forming a second polymer segment, and solid contents obtained in these parts were respectively defined as $m_1$ and $m_2$.

<Mass Ratios $r_1$ and $r_2$ of First Polymer Segment and Second Polymer Segment>

Mass ratios r of the first polymer segment and the second polymer segment were obtained in accordance with the following expressions (II) and (III) as ratios of the solid contents $m_1$ and $m_2$ obtained in the discharge parts of the polymerization step (P1) of synthesizing the first polymer segment and of the polymerization step (P2) of forming the second polymer segment to a sum of the mass (U) of the conjugated diene compound and the mass (V) of the aromatic vinyl compound added per unit time in the entire polymerization step.

In this example, U refers to a total amount of 1,3-butadiene added to a first reactor and 1,3-butadiene added to a second reactor per unit time, and V refers to a total amount of styrene added to the first reactor and styrene added to the second reactor per unit time.

$$\text{First polymer segment ratio } r_1 \ [\%] = \frac{m_1}{U+V} \times 100 \quad (II)$$

$$\text{Second polymer segment ratio } r_2 \ [\%] = \frac{m_2-m_1}{U+V} \times 100 \quad (III)$$

<Ratio of Polymer Segment Ratios: R>

A ratio R (= $r_1/r_2$) of the mass ratio of the first polymer segment to the mass ratio of the second polymer segment was obtained in accordance with the following expression (IV):

$$\text{Ratio R between mass ratios of polymer segments} = r_1 / r_2 \quad (IV)$$

((Physical Property 2) Amount of Bound Aromatic Vinyl Monomer Unit (Amount of Bound Styrene))

<Amount of Bound Styrene $X_{all}$ of Conjugated Diene-based Polymer>

A conjugated diene-based polymer not containing a rubber softener, and collected in the discharge part of the polymerization step (P2) of forming the second polymer segment was used as a sample, and 100 mg of the sample was diluted to 100 mL with chloroform and dissolved to obtain a measurement sample.

The amount of bound styrene (% by mass) in 100% by mass of a coupling conjugated diene-based polymer used as the sample was measured by measuring the amount of absorption at an ultraviolet absorption wavelength (in the vicinity of 254 nm) by a phenyl group of styrene (measurement apparatus: Spectrophotometer "UV-2450" manufactured by Shimadzu Corporation).

<Amount of Bound Styrene $X_1$ in First Polymer Segment>

The sample was changed from the conjugated diene-based polymer to a solid content of the polymer solution obtained in the discharge part of the polymerization step (P1) of synthesizing the first polymer segment. Except for this, the same conditions as those employed in the method for the amount of bound styrene in a segment of the conjugated diene-based polymer were employed to calculate the amount of bound styrene.

<Amount of Bound Styrene $X_2$ in Second Polymer Segment>

Based on the solid contents $m_1$ and $m_2$ respectively of the polymerization step (P1) of synthesizing the first polymer segment and the polymerization step (P2) of forming the second polymer segment, and the amounts of bound styrene $X_1$ and $X_{all}$, the amount of bound styrene ($X_2$) in the second polymer segment was calculated in accordance with the following expression (VIII):

$$X_2 = \frac{100X_{all} - r_1 X_1}{r_2} \quad \text{(VIII)}$$

<Difference $|\Delta X|$ in Amount of Bound Styrene between First Polymer Segment and Second Polymer Segment>

A difference $|\Delta X|$ in the amount of bound styrene between the first polymer segment and the second polymer segment was obtained in accordance with the following expression (IX):

$$|\Delta X| = |X_2 - X_1| \quad \text{(IX)}$$

((Physical Property 3) Amount of Vinyl Bond in Bound Conjugated Diene (Amount of 1,2-vinyl Bond in Bound Butadiene))

<Amount of Vinyl Bond $Y_{all}$ in Conjugated Diene-based Polymer>

A conjugated diene-based polymer not containing a rubber softener, and collected in the discharge part of the polymerization step (P2) of forming the second polymer segment was used as a sample, and 50 mg of the sample was dissolved in 10 mL of carbon disulfide to obtain a measurement sample.

An infrared spectrum of each sample was measured in a range of 600 to 1,000 $cm^{-1}$ with Fourier transform infrared spectrophotometer (trade name "FT-IR230" manufactured by JASCO Corporation).

In accordance with the Hampton method (method described by R. R. Hampton, Analytical Chemistry 21, 923 (1949)), an amount of 1,2-vinyl bond (mol%) in bound butadiene was obtained based on absorbance at a prescribed wavelength.

<Amount of Vinyl Bond $Y_1$ in First Polymer Segment>

The sample was changed from the conjugated diene-based polymer to the solid content of the polymer solution obtained in the discharge part of the polymerization step (P1) of synthesizing the first polymer segment. Except for this, the same conditions as those employed in the method for the amount of vinyl bond in the conjugated diene-based polymer were employed to calculate the amount of vinyl bond.

<Amount of Vinyl Bond $Y_2$ in Second Polymer Segment>

Based on the solid contents $m_1$ and $m_2$ respectively of the polymerization step (P1) of synthesizing the first polymer segment and the polymerization step (P2) of forming the second polymer segment, and the amounts of vinyl bond $Y_1$ and $Y_{all}$ in bound conjugated diene, the amount of vinyl bond in the second polymer segment was calculated in

accordance with the following expression (X):

$$Y_2 = \frac{100(100 - X_{all})Y_{all} - r_1(100 - X_1)Y_1}{(100 - X_2)r_2} \qquad (X)$$

<Difference ΔY in Amount of Vinyl Bond between First Polymer Segment and Second Polymer Segment>

A difference ΔY in the amount of vinyl bond in bound conjugated diene between the first polymer segment and the second polymer segment was obtained in accordance with the following expression (XI):

$$\Delta Y = Y_2 - Y_1 \qquad (XI)$$

((Physical Property 4) Conversion Rate, and Difference in Polymerization Conversion Rate)

A conversion rate $c_{bd}$ of the conjugated diene compound and a conversion rate $c_{st}$ of the aromatic vinyl compound in the polymerization step (P1) of synthesizing the first polymer segment were obtained respectively in accordance with the following expressions (V) and (VI):

$$\text{Conversion rate of conjugated diene compound in P1 } c_{bd}[\%] = \frac{m_1 \times (1 - 0.01X_1)}{U} \times 100 \quad \cdots (V)$$

$$\text{Conversion rate of aromatic vinyl compound in P1 } c_{st}[\%] = \frac{m_1 \times 0.01X_1}{V} \times 100 \quad \cdots (VI)$$

Besides, a difference between the conversion rate of the conjugated diene compound and the conversion rate of the aromatic vinyl compound, that is, a difference $c_{dif}$ in the polymerization conversion rate, was obtained in accordance with the following expression (VII):

$$c_{dif}[\%] = |c_{bd}[\%] - c_{st}[\%]| \qquad (VII)$$

((Physical Property 5) Estimated Glass Transition Temperature)

The estimated glass transition temperature of a conjugated diene-based polymer was obtained by using the expression (iii).

((Physical Property 6) Molecular Weight)

A conjugated diene-based polymer of each of Examples and Comparative Examples was used as a sample for measuring a chromatogram by using a GPC measurement apparatus (trade name "HLC-8320GPC" manufactured by Tosoh Corporation) including a series of three columns using a polystyrene-based gel as a filler, and an RI detector (trade name "HLC8020" manufactured by Tosoh Corporation). On the basis of a calibration curve obtained using standard polystyrene, a weight average molecular weight (Mw), a number average molecular weight (Mn), and a molecular weight distribution (Mw/Mn) were obtained.

As an eluent, 5 mmol/L triethylamine-containing THF (tetrahydrofuran) was used. As the columns, trade name "TSKguardcolumn Super MP(HZ)-H" manufactured by Tosoh Corporation connected, as a guard column at a previous stage, to a series of three columns of trade name "TSKgel Super Multipore HZ-H" manufactured by Tosoh Corporation were used.

Ten (10) mg of a sample for the measurement was dissolved in 10 mL of THF to obtain a measurement solution, and 10 μL of the measurement solution was injected into the GPC measurement apparatus for performing the measurement under conditions of an oven temperature of 40°C and a THF flow rate of 0.35 mL/min.

((Physical Property 7) Polymer Mooney Viscosity)

A conjugated diene-based polymer of each of Examples and Comparative Examples was used as a sample to measure a Mooney viscosity by using a Mooney viscometer (trade name "VR1132" manufactured by Ueshima Seisakusho Co., Ltd.) in accordance with ISO 289 with an L-type rotor used, and with a measurement temperature set to 100°C.
After the sample was preheated at the test temperature for 1 minute, the rotor was rotated at 2 rpm, and a torque was measured 4 minutes after to measure a Mooney viscosity ($ML_{(1+4)}$).

((Physical Property 8) Glass Transition Temperature (Tg))

When a conjugated diene-based polymer of each of Examples and Comparative Examples was an oil extended product, the conjugated diene-based polymer after extracting the extender oil was used as a sample, and in accordance with ISO 22768: 2006, a DSC curve was recorded with a differential scanning calorimeter "DSC 3200S" manufactured by Mac Science with the temperature increased from -120°C to 40°C at 10°C/min under a flow of 50 mL/min of helium, and then, an inflection point of DSC curve observed in a section between -100°C and 20°C was determined as the glass transition temperature.
An extrapolated onset temperature was determined as a temperature on an intersection point between a straight line drawn by extending, toward the high temperature side, the baseline on the low temperature side and a tangent line drawn at a point corresponding to the maximum gradient of a curve of a stepwise change portion of glass transition.
An extrapolated end temperature was determined as a temperature on an intersection point between a straight line drawn by extending, toward the low temperature side, the baseline on the high temperature side and the tangent line drawn at the point corresponding to the maximum gradient of the curve of the stepwise change portion of glass transition.

((Physical Property 9) Modification Ratio)

A modification ratio of a conjugated diene-based polymer of each of Examples and Comparative Examples was measured by column adsorption GPC as follows.
A conjugated diene-based polymer was used as a sample for performing measurement by utilizing a characteristic that a modified basic polymer component adsorbs onto a GPC column using a silica-based gel as a filler.
Based on a difference between a chromatogram obtained by the measurement with a polystyrene-based column and a chromatogram obtained by the measurement with a silica-based column, which were obtained from a sample solution containing the sample and low molecular weight internal standard polystyrene, the amount of absorption onto the silica-based column was measured to obtain a modification ratio.

<Preparation of Sample Solution>:

10 mg of the sample and 5 mg of standard polystyrene were dissolved in 20 mL of THF( tetrahydrofuran) to obtain the sample solution.

<GPC Measurement Conditions Using Polystyrene-based Column>:

With an apparatus of trade name "HLC-8320GPC" manufactured by Tosoh Corporation used, and with 5 mmol/L triethylamine-containing THF used as an eluent, 10 μL of the sample solution was injected into the apparatus to obtain a chromatogram with an RI detector under conditions of a column oven temperature of 40°C, and a THF flow rate of 0.35 mL/min.
As the columns, a series of three columns of trade name "TSKgel Super Multipore HZ-H" manufactured by Tosoh Corporation were connected with a column of trade name "TSKguardcolumn SuperMP(HZ)-H" manufactured by Tosoh Corporation connected as a guard column at a previous stage to be used.

<GPC measurement conditions using silica-based column>

The GPC measurement was performed using an apparatus of trade name "HLC-8320GPC" manufactured by Tosoh Corporation and an RI detector (trade name "HLC8020" manufactured by Tosoh Corporation).
THF was used as an eluent, and 50 μL of a sample solution was injected into the GPC apparatus to obtain a

chromatogram under conditions of a column oven temperature of 40°C and a THF flow rate of 0.5 mL/min.

A series of columns of trade names "Zorbax PSM-1000S", "PSM-300S" and "PSM-60S" manufactured by Agilent Technologies Japan Ltd., and a guard column of trade name "DIOL 4.6 x 12.5 mm 5 micron" connected at a previous stage were used.

<Calculation Method for Modification Ratio>:

In the chromatogram obtained by using the polystyrene-based column, it was assumed that the whole peak area was 100, that a peak area of the sample was p1, that a peak area of the standard polystyrene was p2, and in the chromatogram obtained by using the silica-based column, it was assumed that the whole peak area was 100, that a peak area of the sample was p3, and that a peak area of the standard polystyrene was p4, and thus, a modification ratio (%) was obtained based on the following expression:

$$\text{Modification ratio (\%)} = [1 - (p2 \times p3)/(p1 \times p4)] \times 100$$

wherein

$$p1 + p2 = p3 + p4 = 100.$$

[Production of Conjugated Diene-based Polymer]

(Example 1)

Two tank pressure vessels, each of which was a tank reactor equipped with a stirrer having an internal volume of 10 L and a ratio (L/D) of the internal height (L) and the diameter (D) of 4.0, having an inlet at a bottom and an outlet at a top, and was equipped with a stirrer and a temperature controlling jacket, were connected to each other as a polymerization reactor.

A first polymerization reactor was used to perform the polymerization step (P1) of synthesizing the first polymer segment. 1,3-Butadiene, styrene, and normal hexane, from which a water content had been precedently removed, were mixed under conditions of 20.3 g/min, 4.31 g/min, and 173 g/min, respectively. **N-**butyllithium for residual impurity inactivation was further added at 0.104 mmol/min in a static mixer provided in the middle of a pipe for supplying this mixed solution to the inlet of the reactor, and the resultant was mixed and then continuously supplied to the bottom of the reactor. Besides, 2,2-bis(2-oxolanyl)propane used as a polar material and n-butyllithium used as a polymerization initiator were supplied respectively at rates of 0.0235 mmol/min and 0.239 mmol/min to the bottom of the first reactor in which these substances were vigorously stirred with the stirrer, and the internal temperature of the reactor was kept at 78°C. Thereafter, when the polymerization reaction was stabilized, the whole amount of a conjugated diene-based polymer was taken out from the top of the reactor, and an antioxidant (BHT) was added thereto to obtain an amount of 0.2 g per 100 g of the conjugated diene-based polymer, and then the solvent was removed. Thereafter, the amount of bound aromatic vinyl monomer unit ($X_1$), the amount of vinyl bond ($Y_1$) in bound conjugated diene, and the solid content concentration ($m_1$) in the first polymer segment were measured.

Next, a second polymerization reactor was used to perform the step (P2) of forming the second polymer segment.

The conjugated diene-based polymer solution was continuously supplied from the top of the first reactor to the bottom of the second reactor, and to the second reactor, 1,3-butadiene, normal hexane, and 2,2-bis(2-oxolanyl)propane used as the polar material were stirred respectively at rates of 8.71 g/min, 32.1 g/min, and 0.450 mmol/min, and the reaction was continued at 78°C.

Next, to the conjugated diene-based polymer solution flowing out from the top of the second reactor, tetrakis(3-trimethoxysilylpropyl)-1,3-propanediamine (shown as "Coupling Agent A" in Tables) and 1-methyl-4-[3-(trimethoxysilyl) propyl]piperazine (shown as "Coupling Agent B" in Tables) were continuously added as the coupling agent respectively at rates of 0.0103 mmol/min and 0.0965 mmol/min, and the resultant was mixed with the static mixer for causing a coupling reaction. Here, a time until the addition of the coupling agent to the polymer solution flowing out of the outlet of the reactor was 4.8 min, and the temperature was 68°C.

The whole amount of the conjugated diene-based polymer solution after the coupling reaction was taken out, an antioxidant (BHT) was added thereto to obtain an amount of 0.2 g per 100 g of the polymer, and then, the solvent was removed, and the various molecular weights, the amount of bound aromatic vinyl ($X_{all}$), the amount of vinyl bond ($Y_{all}$) in bound conjugated diene, the solid content concentration ($m_2$), and the glass transition temperature were measured.

Next, to the conjugated diene-based polymer solution after the coupling reaction, an antioxidant (BHT) was continuously added at 0.055 g/min (in the form of an n-hexane solution) to obtain an amount of 0.2 g per 100 g of the

polymer, and thus, the coupling reaction was completed.

Simultaneously with the antioxidant, an SRAE oil (JOMO Process NC 140, manufactured by JX Nippon Oil & Energy Corporation) was continuously added as the rubber softener to obtain an amount of 5.0 g per 100 g of the polymer, and the resultant was mixed with the static mixer. The solvent was removed by steam stripping, and thus, a modified conjugated diene-based polymer of Example 1 was obtained.

(Example 2)

A modified conjugated diene-based polymer of Example 2 was obtained in the same manner as in Example 1 except that the rates of 1,3-butadiene and styrene supplied to the first reactor were changed respectively to 18.7 g/min and 6.67 g/min, and that the rate of 1,3-butadiene added to the second reactor was changed to 8.00 g/min.

(Example 3)

A modified conjugated diene-based polymer of Example 3 was obtained in the same manner as in Example 1 except that the rates of 1,3-butadiene and styrene supplied to the first reactor were changed respectively to 17.3 g/min and 8.67 g/min, and that the rate of 1,3-butadiene added to the second reactor was changed to 7.40 g/min.

(Example 4)

A modified conjugated diene-based polymer of Example 4 was obtained in the same manner as in Example 1 except that the rates of 1,3-butadiene and styrene supplied to the first reactor were changed respectively to 21.0 g/min and 3.33 g/min, and that the rate of 1,3-butadiene added to the second reactor was changed to 9.00 g/min.

(Example 5)

A modified conjugated diene-based polymer of Example 5 was obtained in the same manner as in Example 1 except that the rates of 1,3-butadiene and styrene supplied to the first reactor were changed respectively to 21.9 g/min and 2.00 g/min, and that the rate of 1,3-butadiene added to the second reactor was changed to 9.40 g/min.

(Example 6)

A modified conjugated diene-based polymer of Example 6 was obtained in the same manner as in Example 1 except that the L/D of the first reactor was changed to 6.0, that the rates of styrene, 2,2-bis(2-oxolanyl)propane used as the polar material, and n-butyllithium used as the polymerization initiator supplied to the first reactor were changed respectively to 3.88 g/min, 0.0208 mmol/min, and 0.208 mmol/min, that the rate of 2,2-bis(2-oxolanyl)propane supplied to the second reactor was changed to 0.396 mmol/min, that the rates of the coupling agent A and the coupling agent B added in the modifying step were respectively changed to 0.00917 mmol/min and 0.0856 mmol/min, and that styrene was newly added to the second reactor at 0.43 g/min.

(Example 7)

A modified conjugated diene-based polymer of Example 7 was obtained in the same manner as in Example 1 except that the rates of 1,3-butadiene and styrene supplied to the first reactor were changed respectively to 24.9 g/min and 4.35 g/min, and that the rate of 1,3-butadiene added to the second reactor was changed to 4.35 g/min.

(Example 8)

A modified conjugated diene-based polymer of Example 8 was obtained in the same manner as in Example 1 except that the rates of 1,3-butadiene and styrene supplied to the first reactor were changed respectively to 4.64 g/min and 0.46 g/min, that the internal temperature of the first reactor was changed to 80°C, that the rate of 1,3-butadiene added to the second reactor was changed to 26.3 g/min, that the temperature of the second polymerization reactor was changed to 82°C, and that styrene was newly added to the second reactor at 1.98 g/min.

(Example 9)

A modified conjugated diene-based polymer of Example 9 was obtained in the same manner as in Example 1 except that the rates of 1,3-butadiene and styrene supplied to the first reactor were changed respectively to 19.5 g/min and

2.66 g/min, that the rates of 1,3-butadiene and 2,2-bis(2-oxolanyl)propane used as the polar material added to the second reactor were changed respectively to 10.5 g/min and 0.0177 mmol/min, and that styrene was newly added to the second reactor at 0.67 g/min.

(Example 10)

A modified conjugated diene-based polymer of Example 10 was obtained in the same manner as in Example 1 except that the rates of 2,2-bis(2-oxolanyl)propane, and n-butyllithium used as the polymerization initiator supplied to the first reactor were changed respectively to 0.0408 mmol/min, and 0.442 mmol/min, that the rate of 2,2-bis(2-oxolanyl) propane added to the second reactor was changed to 0.776 mmol/min, and that the rates of the coupling agent A and the coupling agent B added in the modifying step were respectively changed to 0.018 mmol/min and 0.168 mmol/min.

(Example 11)

A modified conjugated diene-based polymer of Example 11 was obtained in the same manner as in Example 1 except that the rates of 2,2-bis(2-oxolanyl)propane, and n-butyllithium used as the polymerization initiator supplied to the first reactor were changed respectively to 0.0271 mmol/min, and 0.297 mmol/min, that the rate of 2,2-bis(2-oxolanyl) propane added to the second reactor was changed to 0.461 mmol/min, and that the rates of the coupling agent A and the coupling agent B added in the modifying step were respectively changed to 0.0125 mmol/min and 0.117 mmol/min.

(Example 12)

A modified conjugated diene-based polymer of Example 12 was obtained in the same manner as in Example 1 except that the rates of 2,2-bis(2-oxolanyl)propane, and n-butyllithium used as the polymerization initiator supplied to the first reactor were changed respectively to 0.0190 mmol/min, and 0.187 mmol/min, that the rate of 2,2-bis(2-oxolanyl) propane added to the second reactor was changed to 0.362 mmol/min, and that the rates of the coupling agent A and the coupling agent B added in the modifying step were respectively changed to 0.0084 mmol/min and 0.0783 mmol/min.

(Example 13)

A modified conjugated diene-based polymer of Example 13 was obtained in the same manner as in Example 1 except that the rates of 2,2-bis(2-oxolanyl)propane, and n-butyllithium used as the polymerization initiator supplied to the first reactor were changed respectively to 0.0084 mmol/min, and 0.065 mmol/min, that the rate of 2,2-bis(2-oxolanyl) propane added to the second reactor was changed to 0.168 mmol/min, that the rate of the coupling agent A added in the modifying step was changed to 0.0130 mmol/min, that the coupling agent B was not added, and that the amount of the SRAE oil added was changed to 25 g per 100 g of the polymer.

(Example 14)

A modified conjugated diene-based polymer of Example 14 was obtained in the same manner as in Example 1 except that the rates of the coupling agent A and the coupling agent B added in the modifying step were changed respectively to 0.0067 mmol/min and 0.0627 mmol/min.

(Example 15)

A modified conjugated diene-based polymer of Example 15 was obtained in the same manner as in Example 1 except that the coupling agent added in the modifying step was changed, from the coupling agents A and B, to 1,3-bis(N,N-diglycidylaminomethyl)cyclohexane (Coupling agent C) added at 0.0895 mmol/min.

(Example 16)

A conjugated diene-based polymer of Example 16 was obtained in the same manner as in Example 1 except that the rates of 2,2-bis(2-oxolanyl)propane, and n-butyllithium used as the polymerization initiator supplied to the first reactor were changed respectively to 0.0200 mmol/min, and 0.198 mmol/min, that the rate of 2,2-bis(2-oxolanyl)propane added to the second reactor was changed to 0.379 mmol/min, and that the rates of the coupling agent A and the coupling agent B added in the modifying step were both changed to 0.

(Example 17)

A modified conjugated diene-based polymer of Example 17 was obtained in the same manner as in Example 1 except that the rates of 2,2-bis(2-oxolanyl)propane, and n-butyllithium used as the polymerization initiator supplied to the first reactor were change respectively to 0.013 mmol/min, and 0.12 mmol/min, that the rate of 2,2-bis(2-oxolanyl)propane added to the second reactor was changed to 0.253 mmol/min, and that the rates of the coupling agent A and the coupling agent B added in the modifying step were respectively changed to 0.0059 mmol/min and 0.0546 mmol/min.

(Example 18)

A modified conjugated diene-based polymer of Example 18 was obtained in the same manner as in Example 1 except that the rates of 2,2-bis(2-oxolanyl)propane, and n-butyllithium used as the polymerization initiator supplied to the first reactor were changed respectively to 0.012 mmol/min, and 0.213 mmol/min, that the rate of 2,2-bis(2-oxolanyl)propane added to the second reactor was changed to 0.405 mmol/min, and that the rate of the coupling agent A added in the modifying step was changed to 0.0312 mmol/min, that the coupling agent B was not added, and that the amount of the SRAE oil added was changed to 25 g per 100 g of the polymer.

(Example 19)

A modified conjugated diene-based polymer of Example 19 was obtained in the same manner as in Example 1 except that the rates of 2,2-bis(2-oxolanyl)propane, n-butyllithium used as the polymerization initiator, n-butyllithium for residual impurity inactivation, 1,3-butadiene, styrene, and normal hexane supplied to the first reactor were changed respectively to 0.0209 mmol/min, 0.208 mmol/min, 0.114 mmol/min, 21.6 g/min, 4.57 g/min, and 153 g/min, that the rates of 2,2-bis(2-oxolanyl)propane, normal hexane, and 1,3-butadiene added to the second reactor were changed respectively to 0.396 mmol/min, 35.5 g/min, and 7.16 g/min, and that the rates of the coupling agent A and the coupling agent B added in the modifying step were respectively changed to 0.00917 mmol/min and 0.0856 mmol/min.

(Reference Example 1)

A modified conjugated diene-based polymer of Reference Example 1 was obtained in the same manner as in Example 1 except that the rate of 2,2-bis(2-oxolanyl)propane supplied to the first reactor was changed to 0.136 mmol/min, that 2,2-bis(2-oxolanyl)propane was not added to the second reactor, and in addition, that the temperatures of the first and second reactors were changed respectively to 68°C and 73°C.

(Comparative Example 1)

A modified conjugated diene-based polymer of Comparative Example 1 was obtained in the same manner as in Example 1 except that the rates of 1,3-butadiene and styrene supplied to the first reactor, and 1,3-butadiene added to the second reactor were changed respectively to 16.8 g/min, 9.33 g/min, and 7.20 g/min.

(Comparative Example 2)

A modified conjugated diene-based polymer of Comparative Example 2 was obtained in the same manner as in Example 1 except that the rates of 1,3-butadiene and styrene supplied to the first reactor, and 1,3-butadiene added to the second reactor were changed respectively to 23.3 g/min, 1.00 g/min, and 9.70 g/min.

(Comparative Example 3)

A modified conjugated diene-based polymer of Comparative Example 3 was obtained in the same manner as in Example 1 except that the rates of 2,2-bis(2-oxolanyl)propane, and n-butyllithium used as the polymerization initiator supplied to the first reactor were changed respectively to 0.168 mmol/min, and 0.297 mmol/min, that 2,2-bis(2-oxolanyl)propane was not added to the second reactor, and that the rates of the coupling agent A and the coupling agent B added in the modifying step were changed respectively to 0.0125 mmol/min and 0.117 mmol/min.

(Comparative Example 4)

A modified conjugated diene-based polymer of Comparative Example 4 was obtained in the same manner as in Example 1 except that the rates of 2,2-bis(2-oxolanyl)propane, and n-butyllithium used as the polymerization initiator

supplied to the first reactor were changed respectively to 0.106 mmol/min, and 0.187 mmol/min, that 2,2-bis(2-oxolanyl) propane was not added to the second reactor, and that the rates of the coupling agent A and the coupling agent B added in the modifying step were changed respectively to 0.0084 mmol/min and 0.0783 mmol/min.

(Comparative Example 5)

A conjugated diene-based polymer of Comparative Example 5 was obtained in the same manner as in Example 1 except that the rates of 2,2-bis(2-oxolanyl)propane, and n-butyllithium used as the polymerization initiator supplied to the first reactor were changed respectively to 0.115 mmol/min, and 0.198 mmol/min, that 2,2-bis(2-oxolanyl)propane was not added to the second reactor, and in addition, that the temperatures of the first and second reactors were changed respectively to 68°C and 73°C, and that the rates of the coupling agent A and the coupling agent B added in the modifying step were both changed to 0.

(Comparative Example 6)

A modified conjugated diene-based polymer of Comparative Example 6 was obtained in the same manner as in Example 1 except that the rates of 2,2-bis(2-oxolanyl)propane, n-butyllithium used as the polymerization initiator, 1,3-butadiene, styrene, and hexane supplied to the first reactor were changed respectively to 0.145 mmol/min, 0.239 mmol/min, 21.0 g/min, 2.01 g/min, and 172 g/min, that the rates of 1,3-butaeiene, styrene, and normal hexane added to the second reactor were changed respectively to 8.99 g/min, 2.01 g/min, and 32.9 g/min, and that 2,2-bis(2-oxolanyl) propane was not added to the second reactor.

(Comparative Example 7)

Four tank pressure vessels, each of which was a tank reactor equipped with a stirrer having an internal volume of 10 L and a ratio (L/D) of the internal height (L) and the diameter (D) of 4.0, having an inlet at a bottom and an outlet at a top, and was equipped with a stirrer and a temperature controlling jacket, were connected to one another as a polymerization reactor.

The first to third polymerization reactors were used to perform the polymerization step (P1) of synthesizing the first polymer segment. 1,3-Butadiene, styrene, and normal hexane, from which a water content had been precedently removed, were mixed under conditions of 21.3 g/min, 6.70 g/min, and 205 g/min, respectively. N-butyllithium for residual impurity inactivation was added thereto at 0.104 mmol/min in a static mixer provided in the middle of a pipe for supplying this mixed solution to the inlet of the reactor, and the resultant was mixed and then continuously supplied to the bottom of the reactor. Besides, 2,2-bis(2-oxolanyl)propane used as the polar material and n-butyllithium used as the polymerization initiator were supplied respectively at rates of 0.120 mmol/min and 0.205 mmol/min to the bottom of the first reactor in which these substances were vigorously stirred with the stirrer, and the internal temperature of the three reactors was kept at 45 to 55°C. Thereafter, when the polymerization reaction was stabilized, the whole amount of a conjugated diene-based polymer was taken out from the top of the reactor, and an antioxidant (BHT) was added thereto to obtain an amount of 0.2 g per 100 g of the conjugated diene-based polymer, and then the solvent was removed. Thereafter, the amount of bound aromatic vinyl monomer unit ($X_1$), and the amount of vinyl bond ($Y_1$) in bound conjugated diene, and the solid content concentration ($m_1$) of the first polymer segment were measured.

Next, the fourth polymerization reactor was used to perform the step (P2) of forming the second polymer segment.

The conjugated diene-based polymer solution was continuously supplied from the top of the first reactor to the bottom of the second reactor, and 1,3-butadiene, normal hexane, and 2,2-bis(2-oxolanyl)propane used as the polar material were added to the second reactor respectively at rates of 5.30 g/min, 36.0 g/min, and 2.230 mmol/min with stirring, and the reaction was continued at 60°C.

After the modifying step, the process was performed in the same manner as in Example 1 except that the "coupling agent B" was added at a rate of 0.1200 mmol/min, and thus, a conjugated diene-based polymer of Comparative Example 7 was obtained.

[Table 1]

| | | | Example 1 | Example 2 | Example 3 | Example 4 | Example 5 | Example 6 | Example 7 | Example 8 | Example 9 |
|---|---|---|---|---|---|---|---|---|---|---|---|
| | | | Sample 1 | Sample 2 | Sample 3 | Sample 4 | Sample 5 | Sample 6 | Sample 7 | Sample 8 | Sample 9 |
| Polymerization Conditions | n-Butyllithium for Treatment | (mmol/min) | 0.104 | 0.104 | 0.104 | 0.104 | 0.104 | 0.104 | 0.104 | 0.104 | 0.104 |
| | Polymerization Initiator n-butyllithium | (mmol/min) | 0.239 | 0.239 | 0.239 | 0.239 | 0.239 | 0.208 | 0.239 | 0.239 | 0.239 |
| | Butadiene added in P1 | (g/min) | 20.3 | 18.7 | 17.3 | 21 | 21.9 | 20.3 | 24.9 | 4.64 | 19.5 |
| | Styrene added in P1 | (g/min) | 4.31 | 6.67 | 8.67 | 3.33 | 2.00 | 3.88 | 4.35 | 0.46 | 2.66 |
| | Normal hexane added in P1 | (g/min) | 173 | 173 | 173 | 173 | 173 | 173 | 173 | 173 | 173 |
| | Polar Material added in P1 | (mmol/min) | 0.0235 | 0.0235 | 0.0235 | 0.0235 | 0.0235 | 0.0208 | 0.0271 | 0.0235 | 0.0398 |
| | Polymerization Temperature in P1 Reactor | (°C) | 78 | 78 | 78 | 78 | 78 | 78 | 80 | 78 | 78 |
| | Butadiene added in P2 | (g/min) | 8.71 | 8.00 | 7.40 | 9.00 | 9.40 | 8.71 | 4.35 | 26.3 | 10.5 |
| | Styrene added in P2 | (g/min) | 0 | 0 | 0 | 0 | 0 | 0.43 | 0 | 1.98 | 0.67 |
| | Normal Hexane added in P2 | (g/min) | 32.1 | 32.1 | 32.1 | 32.1 | 32.1 | 32.1 | 32.1 | 32.1 | 32.1 |
| | Polar Material added in P2 | (mmol/min) | 0.450 | 0.450 | 0.450 | 0.450 | 0.450 | 0.396 | 0.450 | 0.450 | 0.177 |
| | Polymerization Temperature in P2 Reactor | (°C) | 78 | 78 | 78 | 78 | 78 | 78 | 78 | 82 | 78 |
| | Coupling Agent A | (mmol/min) | 0.0103 | 0.0103 | 0.0103 | 0.0103 | 0.0103 | 0.00917 | 0.0103 | 0.0103 | 0.0103 |
| | Coupling Agent B | (mmol/min) | 0.0965 | 0.0965 | 0.0965 | 0.0965 | 0.0965 | 0.0856 | 0.0965 | 0.0965 | 0.0965 |
| | Coupling Agent C | (mmol/min) | 0 | 0 | 0 | 0 | 0 | 0 | 0 | 0 | 0 |
| First Polymer Segment | (Physical Property 1) Polymer Segment Mass Ratio r1 | | 62 | 62 | 62 | 62 | 62 | 62 | 85 | 15 | 60 |
| | (Physical Property 2) Amount of Bound Styrene X1 | (mass%) | 12 | 19 | 25 | 9 | 7 | 12 | 12 | 8 | 10 |
| | (Physical Property 3) Amount of Vinyl Bond Y1 | (mol%) | 20 | 20 | 20 | 20 | 20 | 20 | 20 | 20 | 25 |
| Second Polymer Segment | (Physical Property 1) Polymer Segment Mass Ratio r2 | | 38 | 38 | 38 | 38 | 38 | 38 | 15 | 85 | 40 |

(continued)

| | | | Example 1 | Example 2 | Example 3 | Example 4 | Example 5 | Example 6 | Example 7 | Example 8 | Example 9 |
|---|---|---|---|---|---|---|---|---|---|---|---|
| | | | Sample 1 | Sample 2 | Sample 3 | Sample 4 | Sample 5 | Sample 6 | Sample 7 | Sample 8 | Sample 9 |
| | (Physical Property 2) Amount of Bound Styrene X2 | (mass%) | 14 | 22 | 27 | 10 | 6 | 14 | 14 | 7 | 10 |
| | (Physical Property 3) Amount of Vinyl Bond Y2 | (mol%) | 58 | 58 | 58 | 58 | 58 | 58 | 58 | 58 | 45 |
| Conjugated Diene-based Polymer | (Physical Property 1) Polymer Segment Mass Ratio R=r1/r2 | | 1.63 | 1.63 | 1.63 | 1.63 | 1.63 | 1.63 | 5.67 | 0.18 | 1.50 |
| | (Phvsical Property 2) Amount of Bound Styrene Xall | (mass%) | 13 | 20 | 26 | 10 | 6 | 13 | 13 | 7 | 10 |
| | (Physical Property 3) Amount of Vinyl Bond Yall | (mol%) | 34 | 32 | 31 | 34 | 34 | 34 | 29 | 52 | 37 |
| | (Physical Property 2) Difference in Amount of Bound Styrene $\|\Delta X\|$ | (mass%) | 2 | 3 | 2 | 1 | 1 | 2 | 2 | 1 | 0 |
| | (Phvsical Property 3) Difference in Amount of Vinyl Bond $\Delta Y$ | (mol%) | 38 | 38 | 38 | 38 | 38 | 38 | 38 | 38 | 20 |
| | (Physical Property 4) Difference in Polymerization Conversion Rate | (%) | 4.2 | 4.4 | 4.2 | 3.8 | 4.0 | 3.0 | 7.3 | 2.7 | 2.7 |
| | (Physical Property 5) Estimated Glass Transition Temperature | (°C) | -60 | -52 | -44 | -63 | -68 | -60 | -63 | -52 | -61 |
| | (Physical Property 6) Weight Average Molecular Weight Mw | ($10^4$ g/mol) | 51 | 51 | 51 | 51 | 51 | 51 | 51 | 51 | 51 |
| | (Physical Property 6) Number Average Molecular Weight Mn | ($10^4$ g/mol) | 27 | 27 | 27 | 27 | 27 | 31 | 27 | 27 | 27 |
| | (Physical Property 6) Molecular Weight Distribution Mw/Mn | | 1.89 | 1.89 | 1.89 | 1.89 | 1.89 | 1.65 | 1.89 | 1.89 | 1.89 |
| | (Physical Property 7) Polymer Mooney Viscosity | | 63.0 | 63.0 | 63.0 | 63.0 | 63.0 | 63.0 | 63.0 | 63.0 | 63.0 |
| | (Physical Property 8) Extrapolated Glass Transition Onset Temperature | (°C) | -67.9 | -59.3 | -50.0 | -71.4 | -76.5 | -68.0 | -70.0 | -59.5 | -66.5 |

(continued)

| | | | Example 1 | Example 2 | Example 3 | Example 4 | Example 5 | Example 6 | Example 7 | Example 8 | Example 9 |
|---|---|---|---|---|---|---|---|---|---|---|---|
| | | | Sample 1 | Sample 2 | Sample 3 | Sample 4 | Sample 5 | Sample 6 | Sample 7 | Sample 8 | Sample 9 |
| | (Physical Property 8) Glass Transition Temperature | (°C) | -60.8 | -52.0 | -43.0 | -63.0 | -68.0 | -60.8 | -64.0 | -52.8 | -61.0 |
| | (Physical Property 8) Extrapolated Glass Transition End Temperature | (°C) | -54.4 | -46.9 | -37.8 | -57.6 | -62.2 | -54.3 | -58.7 | -48.7 | -56.5 |
| | (Physical Property 8) Extrapolated Glass Transition End Temperature-Onset Temperature | (°C) | 13.5 | 12.4 | 12.2 | 13.8 | 14.3 | 13.7 | 11.3 | 10.8 | 10.0 |
| | (Physical Property 9) Modification Ratio | (%) | 77 | 75 | 74 | 83 | 85 | 77 | 78 | 77 | 79 |

[Table 2]

| | | | Example 10 | Example 11 | Example 12 | Example 13 | Example 14 | Example 15 | Example 16 | Example 17 | Example 18 | Example 19 |
|---|---|---|---|---|---|---|---|---|---|---|---|---|
| | | | Sample 10 | Sample 11 | Sample 12 | Sample 13 | Sample 14 | Sample 15 | Sample 16 | Sample 17 | Sample 18 | Sample 19 |
| Polymerization Conditions | n-Butyllithium for Treatment | (mmol/min) | 0.104 | 0.104 | 0.104 | 0.104 | 0.104 | 0.104 | 0.104 | 0.104 | 0.104 | 0.114 |
| | Polymerization Initiator n-butyllithium | (mmol/min) | 0.442 | 0.297 | 0.187 | 0.065 | 0.239 | 0.239 | 0.198 | 0.12 | 0.213 | 0.208 |
| | Butadiene added in P1 | (g/min) | 20.3 | 20.3 | 20.3 | 20.3 | 20.3 | 20.3 | 20.3 | 20.3 | 20.3 | 21.6 |
| | Styrene added in P1 | (g/min) | 4.31 | 4.31 | 4.31 | 4.31 | 4.31 | 4.31 | 4.31 | 4.31 | 4.31 | 4.57 |
| | Normal Hexane added in P1 | (g/min) | 173 | 173 | 173 | 173 | 173 | 173 | 173 | 173 | 173 | 153 |
| | Polar Material added in P1 | (mmol/min) | 0.0408 | 0.0271 | 0.019 | 0.0084 | 0.0235 | 0.0235 | 0.02 | 0.013 | 0.012 | 0.0209 |
| | Polymerization Temperature in P1 reactor | (°C) | 78 | 78 | 78 | 78 | 78 | 78 | 78 | 78 | 78 | 78 |
| | Butadiene added in P2 | (g/min) | 8.71 | 8.71 | 8.71 | 8.71 | 8.71 | 8.71 | 8.71 | 8.71 | 8.71 | 7.16 |
| | Styrene added in P2 | (g/min) | 0 | 0 | 0 | 0 | 0 | 0 | 0 | 0 | 0 | 0 |
| | Normal Hexane added in P2 | (g/min) | 32.1 | 32.1 | 32.1 | 32.1 | 32.1 | 32.1 | 32.1 | 32.1 | 32.1 | 35.5 |
| | Polar Material added in P2 | (mmol/min) | 0.776 | 0.461 | 0.362 | 0.168 | 0.45 | 0.45 | 0.379 | 0.253 | 0.405 | 0.396 |
| | Polymerization Temperature in P2 Reactor | (°C) | 78 | 78 | 78 | 78 | 78 | 78 | 78 | 78 | 78 | 78 |
| | Coupling Agent A | (mmol/min) | 0.018 | 0.0125 | 0.0084 | 0.013 | 0.0067 | 0 | 0 | 0.0059 | 0.0312 | 0.00917 |
| | Coupling Agent B | (mmol/min) | 0.168 | 0.117 | 0.0783 | 0 | 0.0627 | 0 | 0 | 0.0546 | 0 | 0.0856 |
| | Coupling Agent C | (mmol/min) | 0 | 0 | 0 | 0 | 0 | 0.0895 | 0 | 0 | 0 | 0 |

(continued)

| | | | Example 10 | Example 11 | Example 12 | Example 13 | Example 14 | Example 15 | Example 16 | Example 17 | Example 18 | Example 19 |
|---|---|---|---|---|---|---|---|---|---|---|---|---|
| | | | Sample 10 | Sample 11 | Sample 12 | Sample 13 | Sample 14 | Sample 15 | Sample 16 | Sample 17 | Sample 18 | Sample 19 |
| First Polymer Segment | (Physical Propertv 1) Polymer Segment Mass Ratio r1 | | 62 | 62 | 62 | 62 | 62 | 62 | 62 | 62 | 62 | 66 |
| | (Physical Property 2) Amount of Bound Styrene X1 | (mass%) | 12 | 12 | 12 | 12 | 12 | 12 | 12 | 12 | 12 | 12 |
| | (Physical Property 3) Amount of Vinyl Bond Y1 | (mol%) | 19 | 19 | 19 | 19 | 19 | 19 | 19 | 19 | 19 | 21 |
| Second Polymer Segment | (Physical Property 1) Polymer Segment Mass Ratio r2 | | 38 | 38 | 38 | 38 | 38 | 38 | 38 | 38 | 38 | 34 |
| | (Physical Property 2) Amount of Bound Styrene X2 | (mass%) | 14 | 14 | 14 | 14 | 14 | 14 | 14 | 14 | 14 | 17 |
| | (Physical Property 3) Amount of Vinyl Bond Y2 | (mol%) | 58 | 58 | 58 | 58 | 58 | 58 | 58 | 58 | 58 | 58 |
| Conjugated Diene-based Polymer | (Physical Property 1) Polymer Segment Mass Ratio R=r1/r2 | | 1.63 | 1.63 | 1.63 | 1.63 | 1.63 | 1.63 | 1.63 | 1.63 | 1.63 | 1.94 |
| | (Physical Property 2) Amount of Bound Styrene Xall | (mass%) | 13 | 13 | 13 | 13 | 13 | 13 | 13 | 13 | 13 | 14 |
| | (Physical Property 3) Amount of Vinyl Bond Yall | (mol%) | 34 | 34 | 34 | 34 | 34 | 34 | 34 | 34 | 34 | 29 |
| | (Phvsical Property 2) Difference in Amount of Bound Styrene $\|\Delta X\|$ | (mass%) | 2 | 2 | 2 | 2 | 2 | 2 | 2 | 2 | 2 | 5 |

(continued)

| | | | Example 10 | Example 11 | Example 12 | Example 13 | Example 14 | Example 15 | Example 16 | Example 17 | Example 18 | Example 19 |
|---|---|---|---|---|---|---|---|---|---|---|---|---|
| | | | Sample 10 | Sample 11 | Sample 12 | Sample 13 | Sample 14 | Sample 15 | Sample 16 | Sample 17 | Sample 18 | Sample 19 |
| | (Phvsical Property 3) Difference in Amount of Vinyl Bond ΔY | (mol%) | 39 | 39 | 39 | 39 | 39 | 39 | 39 | 39 | 39 | 37 |
| | (Physical Property 4) Difference in Polymerization Conversion Rate | (%) | 4.4 | 4.4 | 4.4 | 4.4 | 4.2 | 4.2 | 4.4 | 4.4 | 4.4 | 9.3 |
| | (Physical Property 5) Estimated Glass Transition Temperature | (°C) | -60 | -60 | -60 | -60 | -60 | -60 | -60 | -60 | -60 | -62 |
| | (Physical Property 6) Weight Average Molecular Weight Mw | ($10^4$ g/mol) | 34 | 45 | 62 | 138 | 48 | 54 | 51 | 72 | 85 | 63 |
| | (Physical Property 6) Number Average Molecular Weight Mn | ($10^4$ g/mol) | 18.5 | 24 | 33 | 76 | 25 | 26 | 29.5 | 38 | 47 | 35 |
| | (Physical Property 6) Molecular Weight Distribution Mw/Mn | | 1.84 | 1.88 | 1.88 | 1.81 | 1.92 | 2.08 | 1.73 | 1.89 | 1.81 | 1.81 |
| | (Physical Property 7) Polymer Mooney Viscosity | | 30.0 | 52.0 | 89.0 | 110.0 | 57.0 | 68.0 | 63.0 | 120.0 | 80.0 | 110.0 |
| | (Physical Property 8) Extrapolated Glass Transition Onset Temperature | (°C) | -68.0 | -68.0 | -68.0 | -68.0 | -67.9 | -67.9 | -68.0 | -68.0 | -68.0 | -68.2 |
| | (Physical Property 8) Glass Transition Temperature | (°C) | -60.8 | -60.8 | -60.8 | -60.8 | -60.8 | -60.8 | -60.8 | -60.8 | -60.8 | -60.9 |

(continued)

| | | | Example 10 | Example 11 | Example 12 | Example 13 | Example 14 | Example 15 | Example 16 | Example 17 | Example 18 | Example 19 |
|---|---|---|---|---|---|---|---|---|---|---|---|---|
| | | | Sample 10 | Sample 11 | Sample 12 | Sample 13 | Sample 14 | Sample 15 | Sample 16 | Sample 17 | Sample 18 | Sample 19 |
| | (Physical Property 8) Extrapolated Glass Transition End Temperature | (°C) | -54.3 | -54.3 | -54.3 | -54.3 | -54.4 | -54.4 | -54.3 | -54.3 | -54.3 | -53.9 |
| | (Physical Property 8) Extrapolated Glass Transition End Temperature-Onset Temperature | (°C) | 13.7 | 13.7 | 13.7 | 13.7 | 13.5 | 13.5 | 13.7 | 13.7 | 13.7 | 14.3 |
| | (Physical Property 9) Modification Ratio | (%) | 79 | 79 | 74 | 72 | 59 | 55 | 0 | 74 | 74 | 83 |

[Table 3]

| | | | Ref. Ex. 1 | Com. Ex. 1 | Com. Ex. 2 | Com. Ex. 3 | Com. Ex. 4 | Com. Ex. 5 | Com. Ex. 6 | Com. Ex. 7 |
|---|---|---|---|---|---|---|---|---|---|---|
| | | | Sample 20 | Sample 21 | Sample 22 | Sample 23 | Sample 24 | Sample 25 | Sample 26 | Sample 27 |
| Polymerization Conditions | n-Butyllithium for Treatment | (mmol/min) | 0.104 | 0.104 | 0.104 | 0.104 | 0.104 | 0.104 | 0.104 | 0.104 |
| | Polymerization Initiator n-butyllithium | (mmol/min) | 0.239 | 0.239 | 0.239 | 0.239 | 0.187 | 0.198 | 0.239 | 0.203 |
| | Butadiene added in P1 | (g/min) | 20.3 | 16.8 | 23.3 | 20.3 | 20.3 | 20.3 | 21 | 21.3 |
| | Styrene added in P1 | (g/min) | 4.31 | 9.33 | 1.00 | 4.31 | 4.31 | 4.31 | 1.34 | 6.7 |
| | Normal Hexane added in P1 | (g/min) | 173 | 173 | 173 | 173 | 173 | 173 | 172 | 205 |
| | Polar Material added in P1 | (mmol/min) | 0.136 | 0.0235 | 0.0235 | 0.168 | 0.106 | 0.115 | 0.145 | 0.12 |
| | Polymerization Temperature in P1 reactor | (°C) | 68 | 78 | 78 | 78 | 78 | 68 | 78 | 55 |
| | Butadiene added in P2 | (g/min) | 8.71 | 7.20 | 9.70 | 8.71 | 8.71 | 8.71 | 8.99 | 5.3 |
| | Styrene added in P2 | (g/min) | 0 | 0 | 0 | 0 | 0 | 0 | 2.01 | 0 |
| | Normal Hexane added in P2 | (g/min) | 32.1 | 32.1 | 32.1 | 32.1 | 32.1 | 32.1 | 32.9 | 36 |
| | Polar Material added in P2 | (mmol/min) | 0 | 0.45 | 0.45 | 0 | 0 | 0 | 0 | 2.23 |
| | Polymerization Temperature in P2 Reactor | (°C) | 73 | 78 | 78 | 78 | 78 | 73 | 78 | 60 |
| | Coupling Agent A | (mmol/min) | 0.0103 | 0.0103 | 0.0103 | 0.0125 | 0.00839 | 0 | 0.0103 | 0 |
| | Coupling Agent B | (mmol/min) | 0.0965 | 0.0965 | 0.0965 | 0.117 | 0.0783 | 0 | 0.0965 | 0.12 |
| | Coupling Agent C | (mmol/min) | 0 | 0 | 0 | 0 | 0 | 0 | 0 | 0 |
| First Polymer Segment | (Physical Property 1) Polymer Segment Mass Ratio r1 | | 75 | 62 | 70 | 62 | 62 | 75 | 62 | 80 |
| | (Physical Property 2) Amount of Bound Styrene X1 | (mass%) | 10 | 28 | 3 | 10 | 10 | 10 | 5 | 19.5 |
| | (Physical Property 3) Amount of Vinyl Bond Y1 | (mol%) | 38 | 20 | 20 | 38 | 38 | 37 | 30 | 42 |
| Second Polymer Segment | (Physical Property 1) Polymer Segment Mass Ratio r2 | | 25 | 38 | 30 | 38 | 38 | 25 | 38 | 20 |
| | (Physical Property 2) Amount of Bound Styrene X2 | (mass%) | 10 | 28 | 3 | 10 | 10 | 10 | 20 | 23 |
| | (Physical Property 3) Amount of Vinyl Bond Y2 | (mol%) | 37 | 58 | 58 | 37 | 37 | 37 | 50 | 76 |

(continued)

| | | | Ref. Ex. 1 | Com. Ex. 1 | Com. Ex. 2 | Com. Ex. 3 | Com. Ex. 4 | Com. Ex. 5 | Com. Ex. 6 | Com. Ex. 7 |
|---|---|---|---|---|---|---|---|---|---|---|
| | | | Sample 20 | Sample 21 | Sample 22 | Sample 23 | Sample 24 | Sample 25 | Sample 26 | Sample 27 |
| Conjugated Diene-based Polymer | (Physical Property 1) Polymer Segment Mass Ratio R=r1/r2 | | 3.00 | 1.63 | 2.33 | 1.63 | 1.63 | 3.00 | 1.63 | 4.00 |
| | (Physical Property 2) Amount of Bound Styrene Xall | (mass%) | 10 | 28 | 3 | 10 | 10 | 10 | 10 | 20 |
| | (Physical Property 3) Amount of Vinyl Bond Yall | (mol%) | 37 | 33 | 31 | 37 | 37 | 37 | 32 | 49 |
| | (Phvsical Property 2) Difference in Amount of Bound Stvrene \|ΔX\| | (mass%) | 0 | 0 | 0 | 0 | 0 | 0 | 15 | 4 |
| | (Phvsical Property 3) Difference in Amount of Vinyl Bond ΔY | (mol%) | 1 | 38 | 38 | 1 | 1 | 0 | 20 | 34 |
| | (Physical Property 4) Difference in Polymerization Conversion Rate | (%) | 2.2 | 4.2 | 4.2 | 2.2 | 2.2 | 2.7 | 37 | 2.5 |
| | (Physical Property 5) Estimated Glass Transition Temperature | (°C) | -61 | -39 | -75 | -61 | -61 | -61 | -65 | -38 |
| | (Physical Property 6) Weight Average Molecular Weight Mw | ($10^4$ g/mol) | 51 | 51 | 51 | 45 | 62 | 51 | 51 | 48 |
| | (Physical Property 6) Number Average Molecular Weight Mn | ($10^4$ almol) | 27 | 27 | 27 | 24 | 33 | 30 | 27 | 31 |
| | (Physical Property 6) Molecular Weight Distribution Mw/Mn | | 1.89 | 1.89 | 1.89 | 1.88 | 1.88 | 1.73 | 1.89 | 1.56 |
| | (Physical Property 7) Polymer Mooney Viscosity | | 63.0 | 63.0 | 63.0 | 52.0 | 89.0 | 63.0 | 63.0 | 60.0 |
| | (Physical Property 8) Extrapolated Glass Transition Onset Temperature | (°C) | -65.0 | -47.0 | -82.0 | -68.0 | -68.0 | -65.0 | -67.9 | -46.5 |
| | (Physical Property 8) Glass Transition Temperature | (°C) | -61.4 | -39.0 | -75.5 | -60.8 | -60.8 | -61.8 | -60.8 | -38.5 |
| | (Physical Property 8) Extrapolated Glass Transition End Temperature | (°C) | -57.9 | -34.8 | -68.1 | -54.3 | -54.3 | -57.9 | -54.4 | -34.4 |
| | (Physical Property 8) Extrapolated Glass Transition End Temperature-Onset Temperature | (°C) | 7.1 | 12.2 | 13.9 | 13.7 | 13.7 | 7.1 | 13.5 | 12.1 |
| | (Physical Property 9) Modification Ratio | (%) | 83 | 73 | 79 | 85 | 77 | 0 | 77 | 77 |

[Examples 20 to 38], [Reference Example 2], and [Comparative Examples 8 to 14]

The samples 1 to 27 shown in Tables 1 to 3 were respectively used as raw material rubbers to obtain rubber compositions containing the respective raw material rubbers in accordance with the following composition:

Conjugated diene-based polymer (any one of samples 1 to 27): 100 parts by mass (excluding oil)

Silica (trade name "Ultrasil 7000GR", manufactured by Evonik Degussa, nitrogen adsorption specific surface area: 170 $m^2/g$): 85.0 parts by mass

Carbon black (trade name "Seast 7HM (N234)", manufactured by Tokai Carbon Co., Ltd.): 2.0 parts by mass

Silane coupling agent: (trade name "Si69", manufactured by Evonik Degussa, bis(triethoxysilylpropyl)tetrasulfide): 6.8 parts by mass

SRAE oil (trade name "Process NC140", manufactured by JX Nippon Oil & Energy Corporation): 40 parts by mass

Zinc oxide: 2.4 parts by mass

Stearic acid: 1.25 parts by mass

Anti-aging agent (N-(1,3-dimethylbutyl)-N'-phenyl-p-phenylenediamine): 3.5 parts by mass

Sulfur: 1.0 part by mass

Vulcanization accelerator 1: tetrabenzylthiuram disulfide: 0.5 parts by mass

Vulcanization accelerator 2: N-(tert-butyl)-2-benzothiazolesulfenamide: 2.5 parts by mass

Total: 246.95 parts by mass

The above-described materials were kneaded by the following method to obtain a rubber composition.
A closed kneader (having an internal volume of 0.3 L) equipped with a temperature controller was used to knead, as a first stage of kneading, the raw material rubber (any one of samples 1 to 26), the fillers (silica and carbon black), the silane coupling agent, the process oil, zinc oxide, and stearic acid under conditions of a filling ratio of 65% and a rotor rotation speed of 30 to 50 rpm. Here, the temperature of the closed kneader was controlled to obtain each rubber composition (compound) at a discharging temperature of 145 to 150°C.
Next, after cooling the compound obtained as described above to room temperature, as a second stage of the kneading, the anti-aging agent was added thereto, and the resultant was kneaded again for improving dispersibility of the silica. Also in this case, the discharging temperature for the compound was adjusted to 120°C by the temperature control of the kneader.
After cooling, as a third stage of the kneading, with sulfur and the vulcanization accelerators 1 and 2 added thereto, the resultant was kneaded with an open roll set to 70°C.
Thereafter, the resultant was molded and vulcanized at 160°C for 20 minutes with a vulcanizing press.
The rubber compositions before the vulcanization, and the rubber compositions after the vulcanization were evaluated.
Specifically, the evaluations were performed as described below.

[Evaluations 1 and 2 : Viscoelastisity Parameter]

A viscoelasticity testing machine "ARES" manufactured by Rheometric Scientific, Inc. was used to measure a viscoelasticity parameter in a torsion mode.
Each measurement value was shown as an index obtained assuming that a result obtained in the rubber composition of Reference Example 2 was 100.

(Evaluation 1)

A tan δ measured at 0°C at a frequency of 10 Hz and strain of 1% was used as an index of the wet grip property A

larger index indicates a better wet grip property.

It was determined that the composition had a sufficient wet grip property in the form a vulcanizate when the index value was 80 or more.

(Evaluation 2)

A storage modulus G' measured at -20°C at a frequency of 10 Hz and strain of 1% was used as an index of the low temperature property.

A larger index indicates a better winter property.

It was determined that the composition had a sufficient winter performance in the form of a vulcanizate when the index value was 50 or more.

[Evaluation 3: Abrasion Resistance]

An Acron abrasion tester (manufactured by Yasuda Seiki Seisakusho, Ltd.) was used to measure an abrasion amount through 1,000 rotations at a load of 44.4 N in accordance with JIS K6264-2, and each measured value was shown as an index obtained assuming that a result of Reference Example 2 was 100.

A larger index indicates better abrasion resistance.

[Evaluation 4: Processability]

Regarding each of the modified conjugated diene-based polymers or conjugated diene-based polymers before vulcanization produced respectively by the methods described in Examples, Reference Examples, and Comparative Examples, a clump (shape) obtained immediately after being discharged from a pressurizing kneader (immediately after being discharged after completing the kneading with the pressurizing kneader in the first stage of the kneading) was visually observed to perform evaluation based on the following criteria by panelists each on a scale of 1 to 5.

A clumping property is an index of the processability of a vulcanizate.

A larger index indicates better processability.

<Evaluation Criteria>

1: A sheet end portion was smooth by 50% or less, and processability was very poor.

2: A sheet end portion was smooth by more than 50% and 60% or less, and processability was poor.

3: A sheet end portion was smooth by more than 60% and 80% or less, and processability was good.

4: A sheet end portion was smooth by more than 80% and 90% or less, and processability was excellent.

5: A sheet end portion was smooth over 90%, and processability was very excellent.

[Evaluation 5: Tensile Properties]

In accordance with the tensile test method of JIS K6251, tensile strength and tensile elongation were measured, and a product of these values is shown as an index obtained assuming that a result of Reference Example 2 was 100.

A larger index indicates better tensile strength and tensile elongation (fracture strength).

It was determined that the composition had sufficient tensile properties in the form of a vulcanizate when the index value was 80 or more.

[Table 4]

| | Example 20 | Example 21 | Example 22 | Example 23 | Example 24 | Example 25 | Example 26 | Example 27 | Example 28 |
|---|---|---|---|---|---|---|---|---|---|
| Conjugated Diene-based Polymer | Sample 1 | Sample 2 | Sample 3 | Sample 4 | Sample 5 | Sample 6 | Sample 7 | Sample 8 | Sample 9 |
| (Evaluation 1)0°C tanδ (strain 1%) | 112 | 134 | 145 | 107 | 92 | 112 | 104 | 126 | 106 |
| (Evaluation 2)-20°C G' | 98 | 75 | 60 | 106 | 125 | 99 | 108 | 77 | 99 |
| (Evaluation 3)Abrasion Resistance | 103 | 80 | 70 | 106 | 111 | 110 | 107 | 80 | 100 |
| (Evaluation 4)Processability | 4 | 4 | 4 | 4 | 4 | 3 | 4 | 4 | 4 |
| (Evaluation 5)Tensile Strenath | 110 | 115 | 118 | 104 | 100 | 110 | 108 | 102 | 107 |
| Average of Evaluation 1+2 | 105 | 105 | 103 | 107 | 109 | 106 | 106 | 102 | 103 |

[Table 5]

| | Example 29 | Example 30 | Example 31 | Example 32 | Example 33 | Example 34 | Example 35 | Example 36 | Example 37 | Example 38 |
|---|---|---|---|---|---|---|---|---|---|---|
| Conjugated Diene-based Polymer | Sample 10 | Sample 11 | Sample 12 | Sample 13 | Sample 14 | Sample 15 | Sample 16 | Sample 17 | Sample 18 | Sample 19 |
| (Evaluation 1)0°C tanδ (strain 1%) | 112 | 112 | 112 | 112 | 112 | 114 | 112 | 112 | 112 | 120 |
| (Evaluation 2)-20°C G' | 108 | 105 | 87 | 60 | 92 | 69 | 55 | 77 | 71 | 93 |
| (Evaluation 3)Abrasion Resistance | 80 | 96 | 112 | 120 | 98 | 97 | 90 | 115 | 120 | 112 |
| (Evaluation 4)Processability | 5 | 5 | 4 | 2 | 4 | 4 | 4 | 4 | 4 | 4 |
| (Evaluation 5)Tensile Strenath | 92 | 105 | 113 | 116 | 107 | 110 | 85 | 116 | 118 | 118 |
| Average of Evaluation 1 + 2 | 110 | 109 | 100 | 86 | 102 | 92 | 84 | 95 | 92 | 107 |

[Table 6]

| | Ref. Ex. 2 | Com. Ex. 8 | Com. Ex. 9 | Com. Ex. 10 | Com. Ex. 11 | Com. Ex. 12 | Com. Ex. 13 | Com. Ex. 14 |
|---|---|---|---|---|---|---|---|---|
| Conjugated Diene-based Polymer | Sample 20 | Sample 21 | Sample 22 | Sample 23 | Sample 24 | Sample 25 | Sample 26 | Sample 27 |
| (Evaluation 1) 0°C tanδ (strain 1%) | 100 | 151 | 75 | 100 | 100 | 100 | 112 | 151 |
| (Evaluation 2)-20°C G' | 100 | 45 | 145 | 107 | 89 | 51 | 98 | 45 |
| (Evaluation 3) Abrasion Resistance | 100 | 65 | 118 | 93 | 109 | 87 | 103 | 65 |
| (Evaluation 4) Processability | 4 | 4 | 4 | 5 | 4 | 4 | 4 | 3 |
| (Evaluation 5) Tensile Strenath | 100 | 111 | 90 | 95 | 103 | 85 | 75 | 105 |
| Average of Evaluation 1+2 | 100 | 98 | 110 | 104 | 95 | 76 | 105 | 98 |

As shown in Tables 4 to 6, it was confirmed, through comparison of the rubber compositions of Examples 20 to 38 using the samples 1 to 19 having the difference in the amount of bound styrene, the difference in the amount of vinyl bond, and the value of the estimated glass transition temperature all falling in the preferable ranges with the rubber compositions of Reference Example 2, and Comparative Examples 8 to 14 using the samples 20 to 27, that the rubber composition of Examples are excellent in the balance between the wet grip performance and the winter performance obtained in the form of a vulcanizate, and have sufficient abrasion resistance and tensile properties.

It was confirmed, through comparison between Example 30 and Comparative Example 10, and between Example 31 and Comparative Example 11 respectively using the modified conjugated diene-based polymers having equivalent molecular weight and estimated glass transition temperature, that the rubber compositions of Examples are excellent in the balance between the wet grip performance and the winter performance, and have sufficient abrasion resistance and tensile properties.

Besides, it was confirmed, through comparison between Example 35 and Comparative Example 12, that the rubber composition of Example is excellent in the balance between the wet grip performance and the winter performance, the abrasion resistance, and the tensile properties also when a non-modified conjugated diene-based polymer is used.

This application is based upon Japanese Patent Application filed with the Japanese Patent Office on April 27, 2023 (Japanese Patent Application No. 2023-072878), the entire contents of which are incorporated herein by reference.

**Industrial Applicability**

A conjugated diene-based polymer of the present invention is industrially applicable as materials in various fields such as a tire tread, interior and exterior of a vehicle, an anti-vibration rubber, a belt, shoes, a foam body, and various industrial products.

## Claims

**1.** A conjugated diene-based polymer comprising two or more polymer segments,

wherein an absolute value of a difference ($|X_1 - X_2|$) between an amount of bound aromatic vinyl monomer unit $X_1$ (% by mass) in a first polymer segment and an amount of bound aromatic vinyl monomer unit $X_2$ (% by mass) in a second polymer segment is 5% by mass or less,
a difference ($Y_2 - Y_1$) between an amount of vinyl bond $Y_1$ (mol%) in bound conjugated diene of the first polymer segment and an amount of vinyl bond $Y_2$ (mol%) in bound conjugated diene of the second polymer segment is 15

mol% or more and 50 mol% or less, and
an estimated glass transition temperature (estimated Tg) of the conjugated diene-based polymer is -72°C or more and -40°C or less.

**2.** The conjugated diene-based polymer according to claim 1, wherein a ratio Mw/Mn between a weight average molecular weight Mw and a number average molecular weight Mn is 1.7 or more.

**3.** The conjugated diene-based polymer according to claim 1, wherein a ratio ($R = r_1/r_2$) of a mass ratio ($r_1$) of the first polymer segment to a mass ratio ($r_2$) of the second polymer segment is 0.25 to 4.

**4.** The conjugated diene-based polymer according to claim 1, having a weight average molecular weight Mw of 350,000 or more and 1,350,000 or less.

**5.** The conjugated diene-based polymer according to claim 1, having a modifying group containing nitrogen, and having a modification ratio of 60% or more.

**6.** A method for producing the conjugated diene-based polymer according to claim 1, comprising:

a polymerization step (P1) of forming the first polymer segment with two or more continuous reactors; and
a polymerization step (P2) of forming the second polymer segment at an end of the first polymer segment obtained in the step (P1),
wherein a polar material is additionally added in the polymerization step (P2).

**7.** The method for producing the conjugated diene-based polymer according to claim 6, wherein a conjugated diene compound is additionally added in the polymerization step (P2).

**8.** The method for producing the conjugated diene-based polymer according to claim 6, comprising, after the polymerization step (P2), a coupling step of reacting the conjugated diene-based polymer with a coupling agent having a nitrogen atom-containing group.

**9.** The method for producing the conjugated diene-based polymer according to claim 7, wherein an amount of the conjugated diene compound additionally added in the polymerization step (P2) is 15% by mass or more with respect to a total amount of the conjugated diene compound added.

**INTERNATIONAL SEARCH REPORT**

International application No.
**PCT/JP2024/016507**

**A. CLASSIFICATION OF SUBJECT MATTER**

***C08F 236/10***(2006.01)i
FI: C08F236/10

According to International Patent Classification (IPC) or to both national classification and IPC

**B. FIELDS SEARCHED**

Minimum documentation searched (classification system followed by classification symbols)

C08F236/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | KR 10-2021-0109897 A (LG CHEMICAL LTD.) 07 September 2021 (2021-09-07) claims 1, 3-7, paragraphs [0003], [0011], examples | 1-9 |
| A | JP 2023-517122 A (LG CHEMICAL LTD.) 21 April 2023 (2023-04-21) | 1-9 |
| A | JP 2023-503137 A (LG CHEMICAL LTD.) 26 January 2023 (2023-01-26) | 1-9 |
| A | JP 2020-512469 A (LG CHEMICAL LTD.) 23 April 2020 (2020-04-23) | 1-9 |
| A | WO 2021/201289 A1 (ASAHI KASEI KABUSHIKI KAISHA) 07 October 2021 (2021-10-07) | 1-9 |
| A | WO 2021/024811 A1 (ASAHI KASEI KABUSHIKI KAISHA) 11 February 2021 (2021-02-11) | 1-9 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 July 2024** | **23 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/016507**

| Patent document cited in search report | Publication date (day/month/year) | Patent family member(s) | Publication date (day/month/year) |
|---|---|---|---|
| KR 10-2021-0109897 A | 07 September 2021 | (Family: none) | |
| JP 2023-517122 A | 21 April 2023 | US 2023/0038987 A1<br>WO 2022/103042 A1<br>EP 4086293 A1<br>CN 115087678 A | |
| JP 2023-503137 A | 26 January 2023 | US 2023/0051287 A1<br>WO 2022/030794 A1<br>EP 4043505 A1<br>CN 114729087 A | |
| JP 2020-512469 A | 23 April 2020 | US 2020/0115485 A1<br>WO 2019/112260 A1<br>EP 3536720 A1<br>CN 110121514 A | |
| WO 2021/201289 A1 | 07 October 2021 | US 2023/0159687 A1<br>EP 4130050 A1<br>CN 113493542 A<br>KR 10-2021-0124053 A | |
| WO 2021/024811 A1 | 11 February 2021 | US 2022/0275130 A1<br>EP 4011642 A1<br>KR 10-2022-0013407 A<br>CN 114174350 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005290355 A
- JP 11189616 A
- JP 2003171418 A
- JP 6512240 B
- JP 2021143324 A
- JP 59140211 A
- JP 2023072878 A


### Non-patent literature cited in the description


- **R. R. HAMPTON**. *Analytical Chemistry*, 1949, vol. 21, 923
- **I. M. KOLTHOFF et al.** *J. Polym. Sci.*, 1946, vol. 1, 429
- **GORDON, M.** ; **TAYLOR, J. S. J.** *Appl. Chem.*, 1952, vol. 2, 493
- **J. BRANDRUP et al.** Polymer Handbook. John Wiley & Sons, Inc., 1966
- *Kautschuk Gummi Kunststoffe*, 1999, vol. 52 (12), 799